# EUROPÄISCHE PATENTSCHRIFT

(11) **EP 2 227 479 B1**
(45) Veröffentlichungstag und Bekanntmachung des Hinweises auf die Patenterteilung: **02.05.2012**
(21) Anmeldenummer: 08853711.3
(22) Anmeldetag: 25.11.2008
(51) Int. Cl.: C07F 17/00, C07F 9/6581, C08F 4/00

(54) **CYCLOPENTADIENYLPHOSPHAZEN-KOMPLEXE (CpPN-KOMPLEXE) VON METALLEN DER 3. UND 4. GRUPPE UND DER LANTHANOIDE**
CYCLOPENTADIENYLPHOSPHAZENE COMPLEXES (CpPN COMPLEXES) OF METALS OF THE THIRD AND FOURTH GROUP AND OF THE LANTHANOIDS
COMPLEXES CYCLOPENTADIÉNYLPHOSPHAZÈNE (COMPLEXES CPPN) DE MÉTAUX DU GROUPE 3 ET 4 DU TABLEAU PÉRIODIQUE ET DES LANTHANOÏDES

(30) Priorität: 28.11.2007 DE 102007057854
(43) Veröffentlichungstag der Anmeldung: 15.09.2010
(73) Patentinhaber: Philipps-Universität Marburg, 35037 Marburg (DE)
(72) Erfinder: SUNDERMEYER, Jörg, 35041 Marburg (DE); RUFANOV, Konstantin, 109439 Moskau (RU); PETROV, Alexander, 38108 Braunschweig (DE); ELFFERDING, Michael, 35039 Marburg (DE); WINKENSTETTE, Manuel, 81667 München (DE)
(74) Vertreter: Buchhold, Jürgen
(86) Internationale Anmeldenummer: PCT/DE2008/001942
(87) Internationale Veröffentlichungsnummer: WO 2009/068000

(56) Entgegenhaltungen:
- EP-A- 0 420 436
- VASILY V. KOTOV, EVGENI V. AVTOMONOV, JÖRG SUNDERMEYER, KLAUS HARMS, DMITRY A. LEMENOVSKII: "Alkyl(amino)- and Alkyl(chloro)phosphanyl-Substituted Cyclopentadienyl Complexes of Titanium and Zirconium" EUROPEAN JOURNAL OF INORGANIC CHEMISTRY, Bd. 2002, Nr. 3, 2002, Seiten 678-691, XP002525013
- RUFANOV KONSTANTIN A. ; PETROV ALEX R. ; KOTOV VASILI V. ; LAQUAI FRÉDÉRIC ; SUNDERMEYER JÖ: "A lutetium cyclopentadienyl-phosphazene constrained geometry complex (CGC) : First isolobal analogues of group 4 cyclopentadienyl-silylamido CGC systems" EUROPEAN JOURNAL OF INORGANIC CHEMISTRY, Nr. 19, 2005, Seiten 3805-3807, XP002525014 in der Anmeldung erwähnt
- VASILY V. KOTOV, EVGENI V. AVTOMONOV, JÖRG SUNDERMEYER, ERKKI AITOLA, TIMO REPO AND DMITRY A. LEMENOVSKII: "Alkylaminophosphanyl substituted half-sandwich complexes of vanadium(III) and chromium(III): preparation and reactivity in ethylene polymerisation" JOURNAL OF ORGANOMETALLIC CHEMISTRY, Bd. 640, Nr. 1-2, 2001, Seiten 21-28, XP002525015

## Beschreibung

Die vorliegende Erfindung betrifft Cyclopentadienylphosphazen-Komplexe (CpPN-Komplexe) der Metalle der III. und IV. Gruppe und der Lanthanoide mit Ausnahme des Lutetiums. In diesen Komplexen ist die Cyclopentadienyleinheit (CpPN) als anionischer Ligand an das Metallatom gebunden, und das Metallatom ist außerdem an weitere Liganden gebunden, welche nicht zur CpPN-Einheit gehören. Des Weiteren betrifft die vorliegende Erfindung Verfahren zur Herstellung der CpPN-Komplexe. Die erfindungsgemäßen Komplexe können als Katalysatoren für die Hydroaminierung und Polymerisation von Olefinen verwendet werden.

### Beschreibung und Einleitung des allgemeinen Gebietes der Erfindung

Die vorliegende Erfindung betrifft die Gebiete metallorganische Chemie, Komplexchemie, Seltenerdchemie, Chemie der III. und IV. Gruppe des Periodensystems, Katalyse und Polymerchemie.

### Stand der Technik

Die Addition von Aminen RR'NH an Olefine (Hydroaminierung) läuft nur über geeignete Katalysatoren ab. Eine der ganz großen Herausforderungen ist die Steigerung der Katalysatoreffizienz insbesondere in der intermolekularen Variante. Auch die Copolymerisation von sterisch anspruchsvollen Olefinen erfordert geeignete Katalysatoren.

Bisher bekannte Metallocen-Katalysatoren liefern bei der Hydroaminierung und auch bei der Copolymerisation von Olefinen unbefriedigende Ergebnisse,da Aktivität, Selektivität und Anwendungsbreite der Metallocene nicht sehr hoch sind. Derartige Katalysatoren sind beispielsweise in der EP 0 416 815 A2, in PJ Shapiro, Organometallics 1990, 867-871 und J Okuda, Chem Ber 1990, 1649-871 beschrieben.

Cyclopentadienylsilylamido-Komplexe der frühen Übergangsmetalle - die so genannten "Constrained Geometry-Katalysatoren" haben sich zu einer der am besten untersuchten Klasse speziell abgestimmter organometallischer Verbindungen entwickelt, da sie industriell als sog. "Single-site Catalysts" für die Olefinpolymerisation Verwendung finden. Single-site Catalysts sind molekulare Einheiten der allgemeinen Struktur LₙMR, worin L ein organischer Ligand ist, M das Metalizentrum des aktiven Katalysators darstellt und R für das Polymer oder die Startgruppe steht.

Cyclopentadienylsilylamid-Constrained Geometry-Katalysatoren des Titans [(CpSiN)TiR₂] werden bereist technisch eingesetzt, insbesondere für die Copolymerisation von sterisch anspruchsvollen Olefinen. Sie weisen die oben aufgeführten Nachteile auf.

Die Struktur der CpSiN-Liganden macht eine Vielzahl einzelner Veränderungen des Liganden denkbar. So kann durch Variation der Substituenten am Cyclopentadienlring, der Brückeneinheit oder am Stickstoff die Natur des Liganden verändert werden. Ebenso können die Liganden am Metall variiert werden. All diese Veränderungen können natürlich auch kombiniert werden.

Weitere Variationsmöglichkeiten ergeben sich auch unter Berücksichtigung der Isolobalbeziehung zwischen CpSiN und anderen Cyclopentadienylverbindungen:
Es ist leicht zu erkennen, dass man das verbrückende Siliciumatom z.B. durch ein Kohlenstoffatom ersetzen kann. Auch die Amidogruppe kann durch andere Donorliganden ersetzt werden. Eine Vielzahl dieser Systeme wurde bereits synthetisiert.

Cyclopentadienylphosphazene werden hergestellt, indem eine metallierte Cyclopentadienylverbindung mit einem Chlorodialkyl- oder Chlorodiarylphosphan reagier, wobei ein Cyclopentadienylphosphan entsteht. Der nächste Syntheseschritt ist eine Staudinger-Reaktion. Gibt man das gewünschte Alkyl-, Aryl- oder elementorganische Azid zu dem Cyclopentadienylphosphan, so bildet sich das sogenannte Staudinger-Addukt, welches bei tiefen Temperaturen stabil ist.

Bisher bekannte CpSiN-Komplexe und dazu isolobale Cyclopentadienylverbindungen sind beispielsweise beschrieben in:
1. S. Feng, Organometallics 1999, 18, 1159-1167,
2. A. J. Ashe, Organometallics 1999, 18, 1363-1365,
3. J. Klosin, Organometallics 2001, 20, 2663-2665,
4. P. J. Sinnema, Organometallics 1997, 16, 4245-4247,
5. P. T. Gomes, J. Organomet. Chem. 1998, 551, 133-138,
6. L. Duda, Eur. J. Inorg. Chem. 1998, 1153-1162,
7. D. van Leusen, Organometallics 2000, 19, 4084-4089,
8. H. Braunschweig, Chem. Commun. 2000, 1049-1050,
9. K. Kunz, J. Am. Chem. Soc. 2001, 123, 6181-6182,
10. K. Kunz, Organometallics 2002, 21, 1031-1041,
11. V. Kotov, Eur. J. Inorg. Chem. 2002, 678-691,
12. F. Amor, Organometallics 1998, 17, 5836-5849,
13. J. Okuda, J. Organomet. Chem. 1999, 591, 127-137,
14. J. T. Park, Organometallics 2000, 19, 1269-1276,
15. J. Jin, Chem. Commun. 2002, 708-709,
16. Y. X. Chen, Organometallics 1997, 16, 5958-5963,
17. K. Kunz, J. Am. Chem. Soc. 2002, 124, 3316-3326,
18. T. Ishiyama, Organometallics 2003, 22, 1096-1105,
19. L. E. Turner, Chem. Commun. 2003, 1034-1035,
20. W. A. Herrmann, Angew. Chem. Int. Ed. Engl. 1994, 33, 1946-1949,
21. J. Cano, Angew. Chem. Int. Ed. 2001, 40, 2495-2497,
22. J. Cano, Eur. J. Inorg. Chem. 2003, 2463-2474

Die chelatbildenden Cyclopentadienylphosphazene (CpPN) und Cyclopentadienylanylidene sind isolobal zu diesen Cyclopentadienylsilylamido-Komplexen. Dies ist beispielsweise in KA Rufanov, Eur J Org Chem 2205, 3805-3807 für einen CpPN-Komplex des Lutetiums beschrieben. Nachteilig hierbei ist jedoch, dass Lutetium sehr selten und teuer ist und die Herstellung des Komplexes über metallorganische Ausgangsverbindungen erfolgt. Organolanthanoidverbindungen sind häufig instabil, und wegen der daraus resultierenden Hindernisse bei der Synthese sind bislang keine entsprechender CpPN-Komplexe anderer Lanthanoide bekannt. Viele der bisher bekannten Komplexe der Lanthanoide enthalten THF als neutralen Liganden, wie beispielsweise in H Schumann,J Organomet Chem 1993, 462, 155-161 und in WJ Evans, Organometallics 1996, 15, 527-531 dargestellt ist. Diese Komplexe sind häufig leicht zersetzlich.

Die vorliegende Erfindung überwindet die Nachteile des Standes der Technik, indem sie erstmalig Cyclopentadienylphosphazen-Komplexe (CpPN-Komplexe) der Metalle der III. und IV. Gruppe und der Lanthanoide mit Ausnahme des Lutetiums bereitstellt, die als Katalysatoren. Die erfindungsgemäßen CpPN-Komplexe können in situ hergestellt werden, wobei es nicht mehr notwendig ist, die teilweise recht instabilen Alkylverbindungen dieser Metalle einzusetzen. Stattdessen wird ein neuartiges, erfindungsgemäßes in situ-Verfahren zu ihrer Herstellung vorgestellt, bei dem die leicht erhältlichen und stabilen Metallhalogenide als Edukte eingesetzt werden können.

Die erfindungsgemäßen Komplexe sind isolobal und isoelektronisch zu [(CpSiN)TiR₂]-Komplexen. Sie sind unter inerter Atmosphäre bei Raumtemperatur für lange Zeit stabil und stellen geeignete Katalysatoren für dieHydroaminierung und Polymerisation von Olefinen dar.

### Aufgabe

Aufgabe der vorliegenden Erfindung ist es daher, Cyclopentadienylphosphazen-Komplexe (CpPN-Komplexe) von Metallen der III. und IV Gruppe sowie der Lanthanoide mit Ausnahme des Lutetiums sowie Verfahren zu deren Herstellung bereitzustellen.

### Lösung der Aufgabe

Diese Aufgabe wird erfindungsgemäß gelöst durch Cyclopentadienylphosphazen-Komplexe (CpPN-Komplexe) der Metalle der III. und IV. Gruppe und der Lanthanoide, worin
- das Metall ausgewählt ist aus der Gruppe Sc, Y, La, Ti, Zr, Hf, Ce, Pr, Nd, Pm, Sm, Eu, Gd, Tb, Dy, Ho, Er, Tm, Yb, worin das Metallatom
   - in der Oxidationsstufe +III vorliegt, falls es ein Metall der III. Gruppe oder ein Lanthanoid ist, oder
   - in der Oxidationsstufe +IV vorliegt, falls es ein Metall der IV. Gruppe ist, und
- genau eine Cyclopentadienylphosphazen-Einheit im Komplex vorliegt, und
- die Cyclopentadienylphosphazen-Einheit als monoanionischer Ligand an das Metallatom gebunden ist und
- das Metallatom außerdem an weitere anionische Liganden gebunden ist, welche nicht zur Cyclopentadienylphosphazen-Einheit gehören.

Überraschend wurde gefunden, dass Metalle der III. und IV. Gruppe sowie der Lanthanoide Komplexe mit Cyclopentadienylphosphazen-Liganden bilden. In diesen Komplexen stellt die Cyclopentadienyleinheit innerhalb des Cyclopentadienylphosphazens einen monoanionischen Liganden des Metallatoms dar. Nachfolgend werden diese erfindungsgemäßen Komplexe als CpPN-Komplexe bezeichnet.

In einer bevorzugten Ausführungsform der vorliegenden Erfindung stellt die Cyclopentadienylphosphazen-Einheit (CpPN) der erfindungsgemäßen Komplexe einen bidentaten Liganden dar. In diesem Fall erfolgt die Bindung der Cyclopentadienylphosphazen-Einheit an das Metallatom sowohl über die monoanionische Cyclopentadienyleinheit des CpPN als auch über das Stickstoffatom. Erfindungsgemäße Cyclopentadienylphosphazen-Komplexe, bei denen die Cyclopentadienylphosphazen-Einheit auf diese Weise als bidentater Ligand fungiert, werden als Cyclopentadienylphosphazen-Constrained Geometry-Komplexe oder - ohne explizite Angabe der Haptizität der Liganden - als Cyclopentadienylphosphazen-Constrained Geometry-Komplexe bezeichnet. Nachfolgend werden diese Komplexe auch als CpPN-CGC bezeichnet.
Gemäß diesen Definitionen sind CpPN-CGC immer auch CpPN-Komplexe.

Der Begriff "Constrained Geometry-Komplex" wurde im Stand der Technik ursprünglich für solche metallorganischen Komplexe verwendet, bei denen ein pi-Ligand (beispielsweise ein Cyclopentadienylrest) derart mit einem der weiteren Liganden an demselben Metallzentrum verbunden ist, dass der Bisswinkel kleiner ist als ein entsprechender Ligand-Metall-Ligand-Winkel in vergleichbaren unverbrückten Komplexen. Der Begriff "Bisswinkel" bezeichnet einen Ligand-Metall-Ligand-Winkel, welcher gebildet wird, wenn ein bidentater oder polydentater Ligand an ein Metallzentrum koordiniert.

Im Besonderen wurde dieser Begriff ursprünglich für ansa-verbrückte Cyclopentadienylsilylamido-Komplexe verwendet. Inzwischen wird der Begriff "Constrained Geometry Complex" (CGC) für eine größere Gruppe von Komplexen verwendet und umfasst chelatbildende, donorfunktionalisierte Cyclopentadienyl-Halbsandwichkomplexe, von denen einige isolobal und/oder isolelektronisch zu den ansa-verbrückten Cyclopentadienylsilylamido-Komplexen sind. Unter diese erweiterte Definition von Constrained Geometry-Komplexen fallen beispielsweise Cyclopentadienylphosphazen-Komplexe und Cyclopentadienylphosphoranyliden-Komplexe, die beide ebenfalls chelatbildend sind. Gemäß dieser inzwischen gebräuchlichen, erweiterten Definition gehören auch diejenigen erfindungsgemäßen Cyclopentadienylphosphazen-Komplexe zu den Constrained Geometry-Komplexen, bei denen sowohl die monoanionische Cyclopentadienylgruppe als auch das Stickstoffatom des Cyclopentadienylphosphazens als Liganden für das Metallatom fungieren.

Der Begriff "isolobal" bezeichnet die Ähnlichkeit der Grenzorbitale zweier Molekülfragmente. Zwei Molekülfragmente sind dann "isolobal", wenn Anzahl, Symmetrieeigenschaften, Energie und Gestalt ihrer Grenzorbitale ähnlich sind.

Als "isoelektronisch" werden dagegen zwei Atome, Ionen oder Moleküle bezeichnet, wenn sie dieselbe Elektronenzahl besitzen, obwohl sie aus unterschiedlichen Elementen bestehen.

Cyclopentadienylphosphazene im Sinne der vorliegenden Erfindung sind Strukturen der allgemeinen Formel (la) 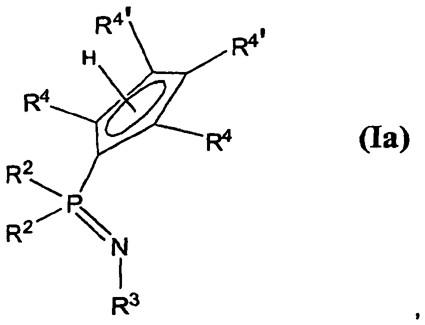 worin
R² = für eine verzweigte oder unverzweigte Alkylgruppe mit 1 bis 10 Kohlenstoffatomen oder eine Arylgruppe,
R³ = für eine verzweigte oder unverzweigte Alkylgruppe mit 1 bis 10 Kohlenstoffatomen, 1-Adamantyl (Ad) oder eine Arylgruppe steht sowie
R⁴ und R^{4'} = H oder Methyl (Me) bedeuten oder
R⁴, R^{4'} und der Cyclopentadienylring gemeinsam eine 4,4,6,6-Tetramethyl-5,6-dihydropentalen-2(4H)-yliden-Einheit bilden.

Optional können drei der Reste R⁴ und R^{4'} für Wasserstoff stehen, und an das vierte Kohlenstoffatom des Cyclopentadienylrings ist ein Substituent R^{4"} gebunden gemäß Formel (Ib): 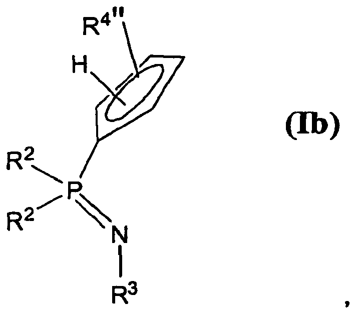 worin R² und R³ die oben angegebenen Bedeutungen haben und R4" ausgewählt ist aus tert-Butyl oder-SiMe₃.

Handelt es sich bei R² und/oder R³ um verzweigte oder unverzweigte Alkylgruppen mit 1 bis 10 C-Atomen, so werden diese bevorzugt ausgewählt aus Methyl, Ethyl, n-Propyl, 2-Propyl, n-Butyl, 2-Butyl, tert-Butyl.

In einer bevorzugten Ausführungsform wird
R² aus Methyl (Me) und Phenyl (Ph) sowie
R³ aus 1-Adamantyl, 2,6-Diisopropylphenyl, Phenyl, tert-Butyl und 2,4,6-Trimethylphenyl (Mesityl) gewählt.

Formal wird die monoanionische Form des Cyclopentadienylphosphazens (CpPN) durch Abstraktion eines Protons gebildet. Damit hat der monoanionische CpPN-Ligand der erfindungsgemäßen Komplexe die allgemeine Form (Ic) 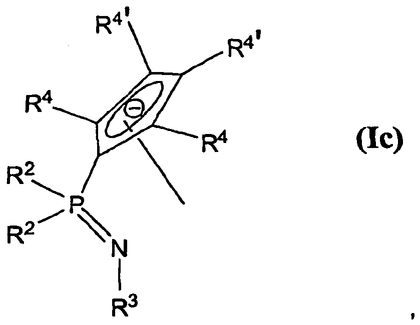 worin R², R³, R⁴ und R^{4'} die oben angegebenen Bedeutungen haben. In analoger Weise lassen sich Strukturen gemäß Formel (Ib) deprotonieren.

Bevorzugt sind solche monoanionischen Cyclopentadienylphosphazene, bei denen
R² = für Methyl (Me) oder Phenyl (Ph),
R³ = für 1-Adamantyl (Ad) oder 2,6-Diisopropylphenyl (Dip) steht sowie
R⁴ und R^{4'} = H oder Methyl (Me) bedeuten oder
R⁴, R^{4'} und der Cyclopentadienylring gemeinsam eine 4,4,6,6-Tetramethyl-5,6-dihydropentalen-2(4H)-yliden-Einheit bilden.

Die Strukturen dieser bevorzugten monoanionischen Cyclopentadienylphosphazene sind nachfolgend dargestellt: 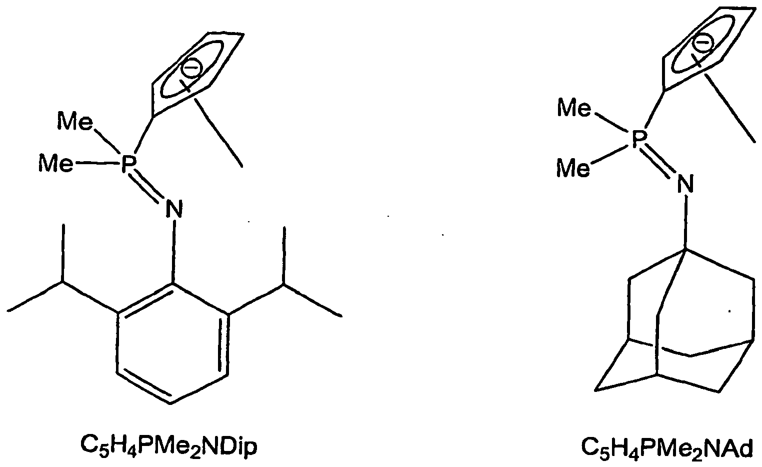 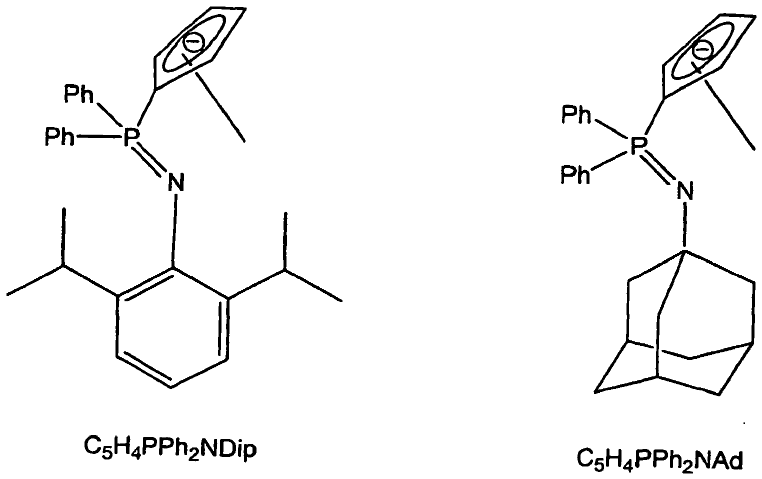 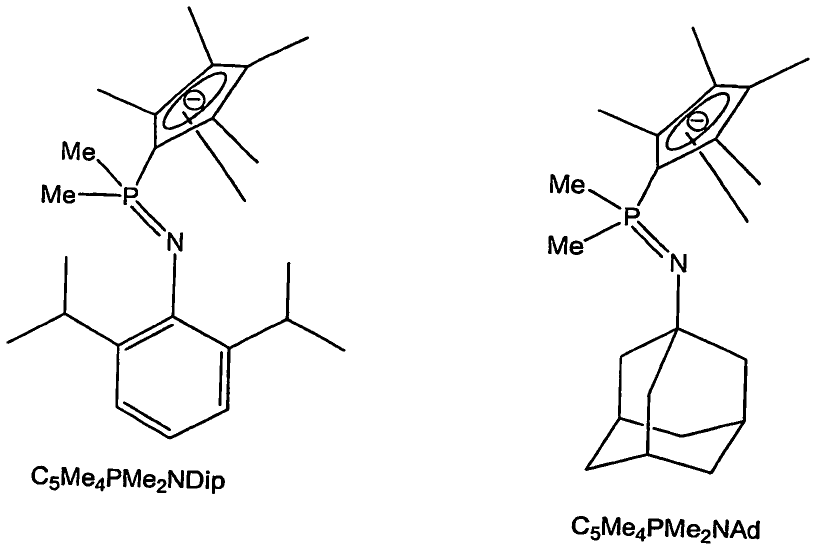 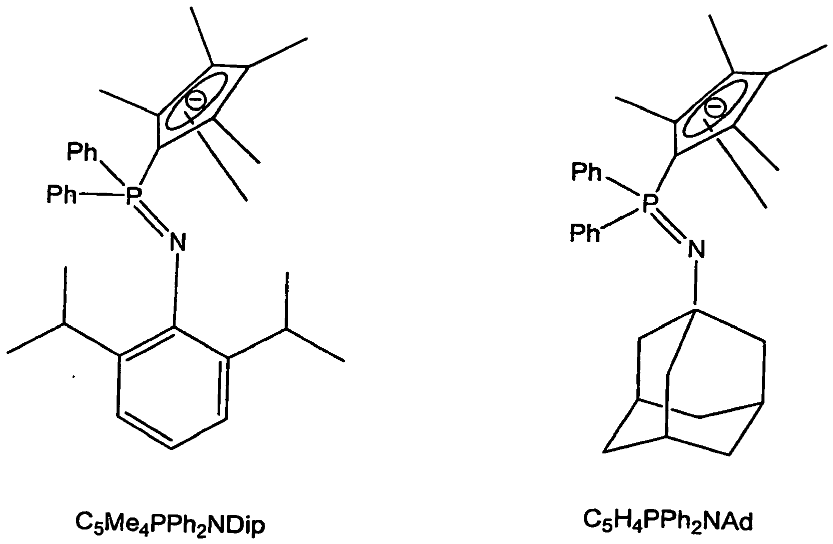 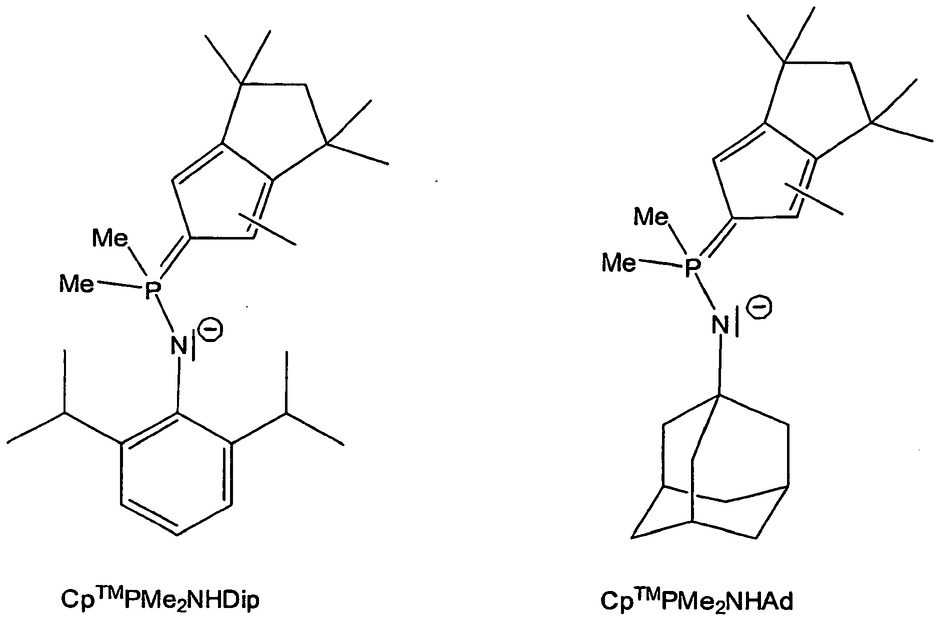 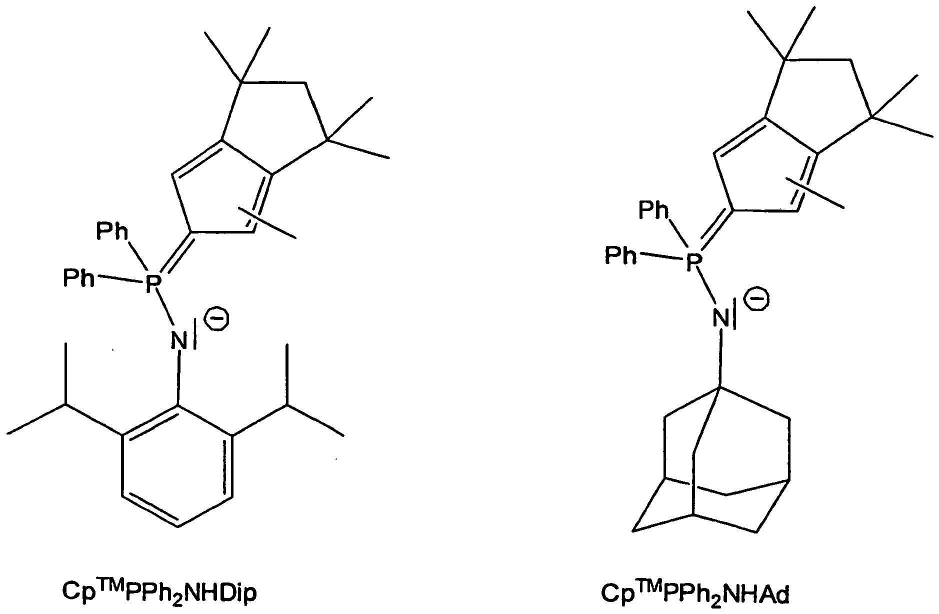 in diesen Formeln stehen
Me für eine Methylgruppe, Ph für eine Phenylgruppe,
Ad für eine 1-Adamantylgruppe, Dip für eine 2,6-Diisopropylphenylgruppe und Cp^{™} für eine 4,4,6,6-Tetramethyl-5,6-dihydropentalen-2(4H)-yliden-Gruppe.

In unkomplexierten Cyclopentadienylphosphazenen liegt die *P*-Aminocyclopentadienyliden-phosphoran-Form gemäß Formel (Ia) im tautomeren Gleichgewicht mit der korrespondierenden *P*-Cyclopentadienyl-iminophosphoran-Struktur vor. Dies ist in (II) dargestellt:

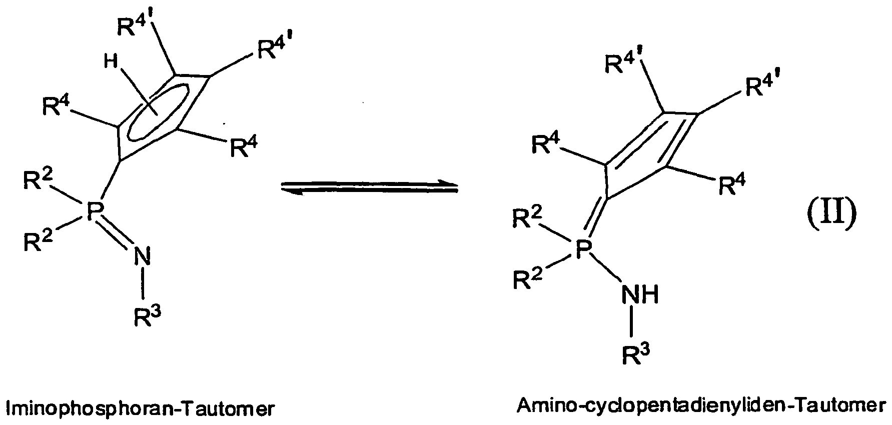

Erfindungsgemäß werden Metalle der III. Gruppe aus Sc, Y und La und Metalle der IV. Gruppe aus Ti, Zr und Hf ausgewählt. Lanthan (La) ist einerseits ein Metall der III. Gruppe. Andererseits ist es aber auch der erste Vertreter der nach ihm benannten Gruppe der 4f-Elemente, nämlich der Lanthanoide. Im Rahmen der vorliegenden Erfindung wird La der III. Gruppe zugerechnet, und unter den "Lanthanoiden", welche die Zentralatome der erfindungsgemäßen Komplexe darstellen, werden die Metalle Ce, Pr, Nd, Pm, Sm, Eu, Gd, Tb, Dy, Ho, Er, Tm und Yb verstanden.

Dabei liegt das Metallatom in der Oxidationsstufe +III vor, falls es ein Metall der III. Gruppe oder ein Lanthanoid ist und in der Oxidationsstufe +IV, falls es ein Metall der IV. Gruppe ist.

Erfindungsgemäß ist das Metallatom in den erfindungsgemäßen CpPN-Komplexen nicht nur an eine Cyclopentadienylphosphazen-Einheit, sondern außerdem an weitere Liganden gebunden. Bei dem erfindungsgemäßen Komplexfragment bestehend aus Metallatom und weiteren Liganden handelt es sich formal um ein kationisches Fragment gemäß Formel (III) 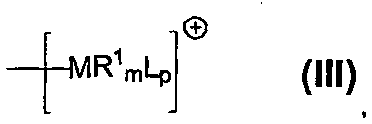 worin M, R¹, L, m und p die folgenden Bedeutungen haben:
- M = Metall, ausgewählt aus der Gruppe Sc, Y, La, Ti, Zr, Hf, Ce, Pr, Nd, Pm, Sm, Eu, Gd, Tb, Dy, Ho, Er, Tm, Yb,
- m = 3, falls das Metall ein Metall der IV. Gruppe ist und somit in der Oxidationsstufe +IV vorliegt,
- m = 2, falls das Metall ein Metall der III. Gruppe oder ein Lanthanoid ist und somit in der Oxidationsstufe +III vorliegt,
- p = 0 oder 1,
   und
   die R¹ anionische Liganden darstellen, die unabhängig voneinander ausgewählt sind aus
- Fluorid, Chlorid, Bromid, Iodid, Cyanid, Cyanat, Thiocyanat, Azid,
- -Me, -CH₂, CH₂CMe₂Ph, -CH₂CMe₃, -CH₂Ph, -CH₂SiMe₃,
- -O-Aryl, OSiMe₃,
- -OR⁵, -NR⁵₂,
   worin
   R⁵ = eine verzweigte oder unverzweigte Alkylgruppe mit 1 bis 10 Kohlenstoffatomen oder eine Phenylgruppe darstellt,
   und
   L einen Neutralliganden darstellt, ausgewählt aus
- einem Ether (beispielsweise THF, Diethylether Et₂O, Dimethoxyethan DME), einem Thioether, einem tertiären Amin, Pyridin.

Handelt es sich bei R⁵ um eine verzweigte oder unverzweigte Alkylgruppe mit 1 bis 10 C-Atomen, so wird diese bevorzugt ausgewählt aus Methyl, Ethyl, n-Propyl, 2-Propyl, n-Butyl, 2-Butyl, tert-Butyl.

Da in den erfindungsgemäßen Komplexen CpPN die Cyclopentadienyleinheit (innerhalb des Cyclopentadienylphosphazens) einen monoanionischen Liganden des Metallatoms darstellt, ergeben sich durch Kombination dieses monoanionischen Liganden mit dem formal kationischen Fragment gemäß Formel (III) neutrale Komplexe der allgemeinen Formel (IV)

[(CpPN)MR¹ₘ(L)ₚ] **(IV),**

worin
m, p, R¹ und L wie oben definiert sind.

Falls R¹ eine Gruppe -NR⁵₂ gemäß obiger Definition darstellt, so stellt im entsprechenden CpPN-Komplex die Cyclopentadienyleinheit einen monoanionischen und monodentaten Liganden des Metallatoms dar, während das Stickstoffatom der Cyclopentadienylphosphazen-Einheit nicht an das Metallatom koordiniert. Diese CpPN-Komplexe werden durch die allgemeine Formel (V) 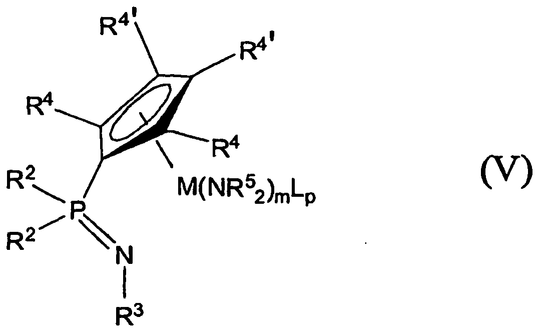 repräsentiert, worin m, p, R², R³, R⁴, R^{4'} und R⁵ und L die oben aufgeführten Bedeutungen haben.

Falls R¹ eine Gruppe gemäß obiger Definition mit Ausnahme von -NR⁵₂ darstellt, so stellt im entsprechenden CpPN-Komplex die Cyclopentadienylphosphazen-Einheit (CpPN) der erfindungsgemäßen Komplexe einen bidentaten Liganden dar. In diesem Fall erfolgt die Bindung der Cyclopentadienylphosphazen-Einheit an das Metallatom sowohl über die monoanionische Cyclopentadienyleinheit des CpPN als auch über das Stickstoffatom. Diese CpPN-CGC werden durch die allgemeine Formel (VI) 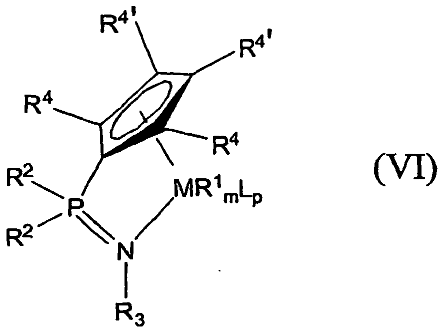 repräsentiert, worin m, p, R², R³, R⁴, R^{4'} und R⁵ und L die oben aufgeführten Bedeutungen haben.

In einer weiteren Ausführungsform der vorliegenden Erfindung stellt R¹ gemäß obiger Definition ein Halogenid X dar, ausgewählt aus Fluorid, Chlorid, Bromid, Iodid. Die wasserfreien CpPN-Komplexe dieser Ausführungsform zeigt Formel (VII):

[(CpPN)MXₘ(thf)ₜ] **(VII).**

Darin sind M und m wie oben definiert, und
t = 0, 1, 2 oder 3 für ein Metall der III. Gruppe oder ein Lanthanoid,
t = 0, 1, 2 für ein Metall der IV. Gruppe.

In einer weiteren Ausführungsform der vorliegenden Erfindung ist ein anionischer Ligand R¹ im erfindungsgemäßen CpPN-Komplex gemäß Formel III durch mindestens einen Neutralliganden L ersetzt.

Besonders bevorzugt dabei sind solche erfindungsgemäßen CpPN-Komplexe, bei denen ein anionischer Ligand R¹ gemäß Formel III durch einen Neutralliganden L ersetzt wird, so dass kationische CpPN-Komplexe mit einem Anion X⁻ gemäß Formel (VIII)

[(CpPN)MR⁶ₘ₋₁(L)] ^{⊕} X^{⊖} **(VIII)**,

resultiert,
worin
- M = Metall, ausgewählt aus der Gruppe Sc, Y, La, Ti, Zr, Hf, Ce, Pr, Nd, Pm, Sm, Eu, Gd, Tb, Dy, Ho, Er, Tm, Yb,
- CpPN = Cyclopentadienylphosphazen
- m = 3, falls das Metall ein Metall der IV. Gruppe ist und somit in der Oxidationsstufe +IV vorliegt,
- m = 2, falls das Metall ein Metall der III. Gruppe oder ein Lanthanoid ist und somit in der Oxidationsstufe +III vorliegt,
   die R⁶ anionische Liganden darstellen, die unabhängig voneinander ausgewählt sind aus
- Fluorid, Chlorid, Bromid, Iodid, Cyanid, Cyanat, Thiocyanat, Azid,
- -Me, -CH₂, CH₂CMe₂Ph, -CH₂CMe₃, -CH₂Ph, -CH₂SiMe₃,
- -O-Aryl, -OSiMe₃,
- -OR⁵, -NR⁵₂,
   worin
   R⁵ = eine verzweigte oder unverzweigte Alkylgruppe mit 1 bis 10 Kohlenstoffatomen oder eine Phenylgruppe darstellt,
   und
   L einen Neutralliganden darstellt, ausgewählt aus
- einem Ether (beispielsweise THF, Diethylether Et₂O, Dimethoxyethan DME), einem Thioether, einem tertiären Amin, Pyridin
   und
   X⁻ ausgewählt ist aus Fluoroborat, Tetraphenylborat, Tetrakis-(3,5-trifluormethylphenyl)-borat.

Im Rahmen der vorliegenden Erfindung sind solche CpPN-Komplexe gemäß den Formeln (IV), (V), (VI), (VII) und (VIII) bevorzugt, bei denen das Metallatom homoleptisch koordiniert ist in Bezug auf diejenigen anionischen Liganden, die keine Cyclopentadienylphosphazen-Einheit darstellen.

Ganz besonders bevorzugt sind erfindungsgemäße CpPN-Komplexe gemäß den Formeln (IV), (V), (VI), (VII) und (VIII) bei denen das Metallatom homoleptisch durch Liganden koordiniert ist in Bezug auf diejenigen anionischen Liganden, die keine Cyclopentadienylphosphazen-Einheit darstellen, wobei diese anionischen Liganden ausgewählt sind aus der Gruppe -CH₂Ph, -CH₂SiMe₃ und NMe₂.

Die Aufgabe der Bereitstellung der erfindungsgemäßen CpPN-Komplexe wird erfindungsgemäß gelöst durch ein in situ-Verfahren umfassend die Schritte
- Reaktion von einem Äquivalent eines Metallhalogenids MX_{q} mit q Äquivalenten eines Alkali- oder Erdalkalisalzes des Liganden R¹ in einem Ether bei einer Temperatur kleiner-70°C, wobei
   - X = F, Cl, Br, I und
   - q = 3, falls M ein Metall der III. Gruppe oder ein Lanthanoid ist,
   - q = 4, falls M ein Metall der IV. Gruppe ist,
   - und R¹ wie oben definiert ist,
- anschließend Zugabe von einem Äquivalent eines protonierten Cyclopentadienylphosphazens [CpPN]H.

Überraschend wurde gefunden, dass sich die erfindungsgemäßen Komplexe gemäß Formel (IV) in situ darstellen lassen, indem ein Äquivalent eines Metallhalogenids MX_{q} zunächst mit q Äquivalenten eines Alkali- oder Erdalkalisalzes des Liganden R¹ (mit Ausnahme der Halogenide und Pseudohalogenide) und anschließend mit einem Äquivalent des protonierten Cyclopentadienylphosphazens [CpPN]H umgesetzt wird.

Bei dem Metallhalogenid MX_{q} handelt es sich dabei um ein Fluorid, Chlorid, Bromid oder Iodid eines Metalls der III. oder IV. Gruppe oder eines Lanthanoids, ausgewählt aus Sc, Y, La, Ti, Zr, Hf, Ce, Pr, Nd, Pm, Sm, Eu, Gd, Tb, Dy, Ho, Er, Tm, Yb. Bei dem Alkali- oder Erdalkalisalz des Liganden R¹ handelt es sich um das entsprechende Lithium-, Natrium-, Kalium- oder Magnesiumsalz.
Geeignete Ether sind beispielsweise Diethylether, Dimethylether, Dimethoxyethan (DME) und Tetrahydrofuran (THF).

Die in situ-Reaktion ist exemplarisch gezeigt für ein Li-Salz des Liganden R¹ und THF als Lösungsmittel:
MX_{q}(thf)ₓ + q R¹-Li = [MR¹_{q}]* q LiX * y (thf)ₓ] (Assoziat)
[MR¹_{q}]* q LiX * y (thf)ₓ] + [CpPN]H = [(CpPN)M(R¹_{q-1})(thf)_{y}] + q Li-X + R¹-H

Dabei ist exemplarisch das Li-Salz des Liganden R¹ genannt.
R¹ und q sind wie oben definiert.
Im Metallhalogenid sowie im Assoziat sind THF-Moleküle gebunden. Es ist x = 2 für q = 4 und
x = 3 für q = 3
y, d.h. die Anzahl der assoziierten THF-Moleküle, ist eine ganze Zahl zwischen 0 und 3 für Metalle der III. Gruppe und der Lanthanoide bzw. eine ganze Zahl zwischen 0 und 2 für Metalle der IV. Gruppe.

Alternativ kann die in situ-Herstellung der erfindungsgemäßen CpPN-Komplexe gemäß Formeln (IV) auch erfolgen, indem ein Äquivalent des Metallhalogenids MX_{q} zuerst mit einem Äquivalent des protonierten Liganden [CpPN]H umgesetzt und danach q Äquivalente eines Alkali- oder Erdalkalisalzes des Liganden R¹ zugegeben werden, wobei diese in situ-Reaktion wie oben beschrieben in einem Ether als Lösungsmittel und bei Temperaturen kleiner -70°C durchgeführt wird.

Diese alternative in situ-Reaktion ist exemplarisch gezeigt für ein Li-Salz des Liganden R¹ und THF als Lösungsmittel:
MX_{q}(thf)ₓ + [CpPN]H = [(CpPN-H)MX_{q}(thf)_{y}]
[(CpPN-H)MX_{q}(thf)_{y}] + q R¹-Li = [(CpPN)M(R¹_{q-1})(thf)_{y}] + q Li-X + R¹-H

Hierbei sind q, x, y und R¹ wie oben definiert.

In einer weiteren Ausführungsform erfolgt die Herstellung der erfindungsgemäßen CpPN-Komplexe gemäß Formeln (IV), indem ein Äquivalent einer isolierten Verbindung MR⁷_{q} mit einem Äquivalent des protonierten Liganden [CpPN]H in einem Ether, einem aliphatischen tertiären Amin, in Hexan oder in Toluol bei Temperaturen kleiner -70°C umgesetzt wird.
Dabei ist R⁷ ausgewählt aus
- -Me, -CH₂, CH₂CMe₂Ph, -CH₂CMe₃, -CH₂Ph, -CH₂SiMe₃,
- -O-Aryl, -OSiMe₃,
- -OR⁵, -NR⁵₂,
   worin
   R⁵ = eine verzweigte oder unverzweigte Alkylgruppe mit 1 bis 10 Kohlenstoffatomen oder eine Phenylgruppe darstellt, und
   q wie oben definiert ist.

Dabei kann die Verbindung MR⁷_{q} in Form ihres Etherates oder ihres Komplexes mit einem aliphatischen tertiären Amin vorliegen.

Der Ether wird ausgewählt aus THF, Diethylether, Dimethylether, DME. Wird stattdessen ein aliphatisches tertiäres Amin als Lösungsmittel verwendet, so wird dieses beispielsweise ausgewählt aus *N,N,N,N*-Tetramethylethylendiamin, TME-DA oder *N*-Methylpyrrolidin.

Dieses Herstellungsverfahren wird formal dargestellt durch folgende Reaktionsgleichung:
M(R⁷)_{q}(Ether, Amin)ₓ + [CpPN]H = [(CpPN)M(R⁷)_{q-1}] + R⁷-H + Ether, Amin
Dabei haben x, q und R⁷ die oben aufgeführten Bedeutungen.

Erfindungsgemäße Komplexe gemäß Formel VII

[(CpPN)MXₘ(thf)ₜ] **(VII)**

werden hergestellt, indem ein Äquivalent des wasserfreien Metallhalogenids in einem Ether bei einer Temperatur kleiner -70°C mit einem Alkali- oder Erdalkalisalz des CpPN-Liganden umgesetzt wird.

Dabei wird der Ether ausgewählt aus THF, Diethylether, Dimethylether, DME (Dimethoxyethan). Bei dem Alkali- oder Erdalkalisalz handelt es sich bevorzugt um ein Lithium-, Natrium-, Kalium- oder Magnesiumsalz.

Erfindungsgemäße kationische CpPN-Komplexe gemäß Formel VIII

[(CpPN)MR⁶ₘ₋₁(L)]^{⊕} X^{⊖} **(VIII)**

werden durch Reaktion des entsprechenden Komplexes [(CpPN)MR⁶ₘ] mit einem kationgenerierenden Reagenz hergestellt.

Für die Herstellung der kationischen Spezies werden folgende kationgenerierenden Reagenzien eingesetzt (L ist ein schwach koordinierendes Solvensmolekül), m = 2 für ein dreiwertiges Seltenerdmetall, m =3 für ein vierwertiges Metall der Gruppe 4:
1. Halogeno- und Pseudohalogenokomplexe (R⁶ = Halogen, Pseudohalogen) werden mit Methylaluminoxan ([MeAlO]_{z}) umgesetzt:
   [(CpPN)M(R⁶)ₘ] + [MeAlO]_{z} + L = [(CPPN)M(R⁶)ₘ₋₁L]⁺ + [R⁶-MeAlO]⁻
2. Alkylkomplexe werden mit Tris(pentafluorophenyl)boran B(C₆F₅)₃ (BCF) umgesetzt:
   [(CpPN)M(R⁶)ₘ] + BCF + L = [(CpPN)M(R⁶)ₘ₋₁L]⁺ + [R⁶-BCF]⁻
3. Alkylkomplexe werden mit Oxonium-tetraarylboraten umgesetzt: BARF = [B{3,5-(CF₃)₂C₆H₃}₄]⁻
   [(CpPN)M(R⁶)ₘ] + [H(OR₂)₂]BARF + L = [(CpPN)M(R⁶)ₘ₋₁ L]⁺ + [BARF]⁻ R⁶-H
4. Alkylkomplexe werden mit tert-Ammonium-tetraarylboraten umgesetzt:
   [(CpPN)M(R⁶)ₘ] + [PhNMe₂H][B(C₆F₅)₄] + L = [(CpPN)M(R⁶)ₘ₋₁L]⁺ + [B(C₆F₅)₄]⁻ + R⁶-H + PhNMe₂
5. Alkylkomplexe werden mit Tritylium-tetraarylboraten umgesetzt:
   [(CpPN)M(R⁶)ₘ] + Ph₃C[B(C₆F₅)₄] +L = [(CpPN)M(R⁶)ₘ₋₁L]⁺ + [B(C₆F₅)₄]⁻+ Ph₃C-R⁶
   Dabei ist m wie oben definiert.

Bei diesem Austausch eines anionischen Liganden R⁶ gegen einen neutralen Liganden L ändern sich weder Oxidationsstufe noch die Koordinationszahl des Metallatoms.

Die erfindungsgemäßen CpPN-Komplexe sind überraschend stabil. Unter inerter Atmosphäre sind sie bei RT für mindestens 6 Monate haltbar.

Die erfindungsgemäßen neutralen CpPN-Komplexe können als Katalysatoren für die intramolekulare Hydroaminierung von Aminoalkenen verwendet werden. Bevorzugt wird der Katalysator hierbei in einer Menge von 4-6 mol% in Bezug auf das Aminoalken eingesetzt.

Die erfindungsgemäßen kationischen CpPN-Komplexe können als Katalysatoren für die Polymerisation von Olefinen verwendet werden. Hierfür wird der erfindungsgemäße CpPN-Komplex in Gegenwart eines Scavengers und eines Cokatalysators eingesetzt. Als Scavenger eignet sich beispielsweise Triisobutylaluminium (TIBA); geeignete Cokatalysatoren sind Methylaluminoxan (MAO) und Tris(pentafluorphenyl)boran (BCF).

### Ausführungsbeispiele

### Ausführungsbeispiel 1:

### Herstellung von 2,6-Diisopropylphenylazid

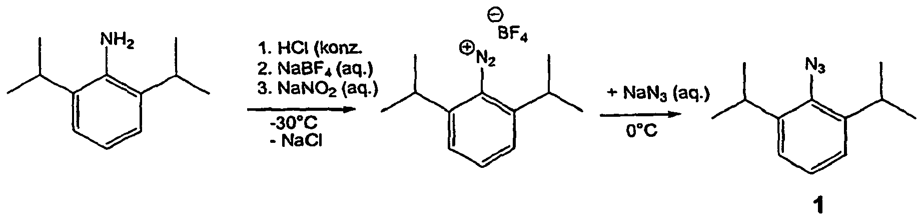

15.00 g (84.7 mmol) 2,6-Diisopropylphenylamin wurden bei -30°C in 60 mL konzentrierte Salzsäure eingetropft. Es entstand eine weiße Suspension. Zu dieser Suspension wurde eine Lösung von 18.60 g (169.4 mmol) NaBF₄ in 30 mL dest. Wasser getropft. Anschließend wurde ebenfalls eine Lösung von 6.44 g (93.5 mmol) NaNO₂ in 20 mL dest. Wasser zu dem Gemisch getropft. Die Suspension verfärbte sich dabei Orange-gelb, und es entstanden braune Dämpfe. Das Gemisch wurde weitere 35 min bei -30°C gerührt, anschließend mit 70 mL Eiswasser versetzt und auf RT erwärmt. Nach etwa 10 bis 15 min bei RT entstand eine orangefarbene Flüssigkeit unter einem gelben Schaum. Die Flüssigkeit wurde abgezogen und verworfen. Es wurden noch einmal 70 mL dest. Wasser zugegeben und die orange Flüssigkeit vom Boden des Becherglases abgezogen. Der verbliebene gelbe Schaum wurde mit einem Spatel zu einer auf 0°C gekühlten Lösung von 16.50 g (253.8 mmol) NaN₃ gegeben, das Gemisch auf RT erwärmt und für 1.5 h bei RT gerührt, bis die einsetzende Gasentwicklung beendet war. Es wurde eine orange, ölige Substanz in einer gelben wässrigen Lösung. Die wässrige Phase wurde dreimal mit je 50 mL Pentan extrahiert. Die vereinigten organischen Phasen wurden über MgSO₄ getrocknet und die erhaltene orangefarbene Lösung für 12 bis 16 Stunden über Silicagel (Merck 60) gerührt. Das Silicagel wurde abfiltriert und das Lösungsmittel bei RT am Vakuum entfernt. Das erhaltene gelbe Öl wurde über Silicagel filtriert und mit 200 mL Pentan eluiert. Das Lösungsmittel wurde erneut im Vakuum entfernt und das gelbe Öl am Hochvakuum getrocknet. Ausbeute: 9.24 g (54%)
**¹H-NMR** (300.1 MHz, CDCl₃): δ = 1.13 (d, ³J_{HH} = 6.8 Hz, 12 H, *Me*₂CH-), 3.32 (sept, ³J_{HH} = 6.8 Hz, 2 H, Me₂C*H*-), 7.04-6.93 (m, 3 H, C₆H₃) ppm.
**¹³C-NMR** (75.5 MHz, CDCl₃): δ = 24.0 (s, (CH₃)₂ CH-), 28.5 (s, (CH₃)₂*C*H-), 124.2 (s, *C*ₒᵣₜₕₒ), 127.7 (s, *C*ₚₐᵣₐ), 137.3 (s, *C*ₘₑₜₐ), 143.1 (s, *C*ᵢₚₛₒ) ppm.

### Ausführungsbeispiel 2:

### Herstellung von P-2,6-Diisopropylamino-P-diphenyl-cyclopentadienyliden-phosphoran über Cyclopentadienylthallium

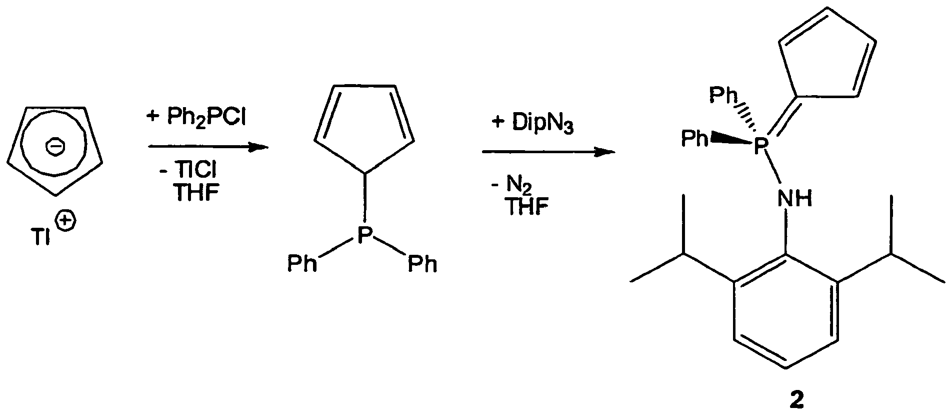

Zu einer Suspension von 2,03 g (7,58 mmol) TlCp in 25 mL THF wurde eine Lösung von 1,61 g (7,29 mmol) Ph₂PCl bei RT zugetropft. Es bildete sich sofort eine weiße Suspension in einer grün-gelblichen Lösung. Das Gemisch wurde 1,5 h gerührt und anschließend filtriert. Die erhaltene gelbe Lösung wurde auf 0°C abgekühlt und mit 1,71 g (8,44 mmol) 2,6-Diisopropylphenylazid versetzt. Die Lösung wurde für 12 bis 16 Stunden bei RT gerührt und anschließend 1 h auf 50°C erhitzt, bis keine Gasentwicklung mehr erkennbar war. Anschließend wurde das Lösungsmittel entfernt, der erhaltene orange Feststoff in einem Gemisch aus Hexan/Diethylether (1:1) suspendiert, filtriert, mit dem selben Lösungsmittelgemisch gewaschen und der hellgelbe Feststoff im Hochvakuum getrocknet.
Ausbeute: 2,68 g (83%)
**CHN:** C₂₉H₃₂NP FW 425,55 g/mol
**¹H-NMR** (300.1 MHz, C₆D₆): δ = 0.81 (d, 12 H, ³J_{HH} = 6.8 Hz, *Me*₂CH-), 3.24 (sept, 2 H, ³J_{HH} = 6.8 Hz, Me₂C*H*), 4.52 (d, ²J_{HP} = 6.2 Hz, 1 H, N-*H*), 6.36 (s, 2 H, *H*-Cp), 6.50 (d, ^{3,4}J_{HP} = 5.3 Hz, 2 H, *H*-Cp), 7.01-6.99 (m, 1 H, *Ar*), 7.26-7.18 (m, 2 H, *Ar*), 7.57-7.37 (m, 10 H, *Ph*) ppm.
**¹³C-NMR** (75.5 MHz, C₆D₆): δ = 23.0 (*Me*₂CH-), 28.6 (*Me*₂CH-), 83.2 (d, ¹J_{CP} = 132.0 Hz, *ipso*-C_{cp}), 114.5 (d, ^{2,3}J_{CP} = 18.9 Hz, C_{cp}), 116.9 (d, ^{2,3}J_{CP} = 17.4 Hz, C_{cp}), 123.9 (s, Ar), 126.8 (s, Arᵢₚₛₒ), 128.2 (d, J_{CP} = 12.4 Hz, Ph), 128.3 (Ar), 131.7 (d, J_{CP} = 5.9 Hz, Ph), 132.5 (d, J_{CP} = 2.9 Hz, Ph), 133.5 (d, J_{CP} = 10.9 Hz, Ph), 148.4(d, J_{CP} = 2.5 Hz, Ar) ppm.
**³¹P-NMR** (121.5 MHz, C₆D₆): δ = 40.7 ppm.

### Ausführungsbeispiel 3:

### Herstellung von P-2,6-Diisopropylamino-P-diphenyl-cyclopentadienyliden-phosphoran über Cyclopentadienyllithium

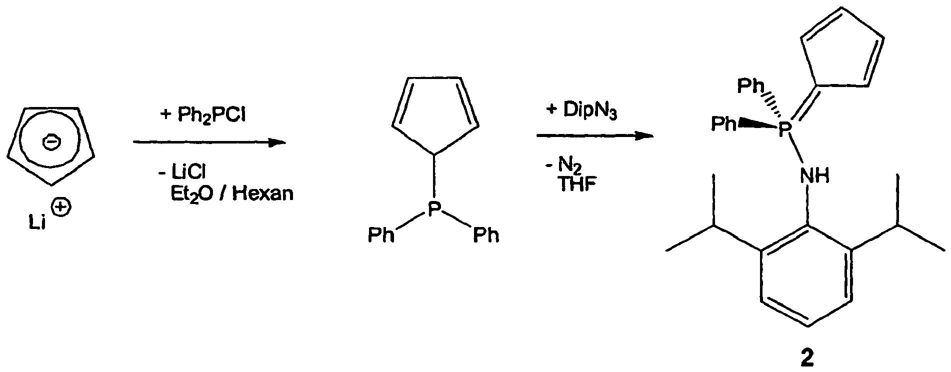

1,07 g (14,7 mmol) LiCp wurden in einem Gemisch aus 60 mL Diethylether und 60 mL Hexan suspendiert. Eine Lösung von 3,60 g (15,5 mmol) Ph₂PCl wurde zu der auf 0°C gekühlten Suspension getropft, die ihre Farbe sofort von weiß zu hellgelb änderte. Das Gemisch wurde auf RT erwärmt und für 12 bis 16 Stunden gerührt. Die Lösung wurde filtriert, das Lösungsmittel entfernt und die gelbe Flüssigkeit in 10 mL THF gelöst. Zu der Lösung von CpPPh₂ wurde eine Lösung von DipN₃ in 10 mL THF gegeben. Die Farbe änderte sich sofort von gelb nach dunkelrot. Außerdem war eine Gasentwicklung und eine Erwärmung der Lösung zu beobachten. Die Lösung wurde 1 h bei RT gerührt, bis keine Gasentwicklung mehr zu erkennen war. Anschließend wurde die Lösung 1 h auf 65°C erhitzt. Dabei war eine Farbänderung hin zu braun zu beobachten. Das Lösungsmittel wurde abgezogen und durch 50 mL Hexan ersetzt. Filtration und anschließendes mehrfaches Waschen mit Diethylether ergab ein hellgrünes Pulver, welches am Hochvakuum getrocknet wurde.
Ausbeute 1.464 g (23%)
**¹H-NMR** (300.1 MHz, C₆D₆): δ = 0.79 (d, 12 H, ³J_{HH} = 7.0 Hz, *Me*₂CH-), 3.35 (sept, 2 H, ³J_{HH} = 6.8 Hz, Me₂C*H*), 4.64 (br, s, 1 H, N-*H*), 6.82 (d, ^{3,4}J_{HP} = 6.4 Hz, 2 H, *H*-Cp), 6.87 (d, ^{3,4}J_{HP} = 9.8 Hz, 2 H, *H*-Cp), 7.08-6.98 (m, 8 H, *Ar*, *Ph*), 7.40-7.34 (m, 6 H, *Ph*) ppm.
**³¹P-NMR** (121.5 MHz, C₆D₆): δ = 40.7 ppm.

### Ausführungsbeispiel 4:

### Herstellung von P-1-1-Adamantylamino-P-dimethyl-2,3,4,5-tetramethylcyclopentadienyliden-phosphoran

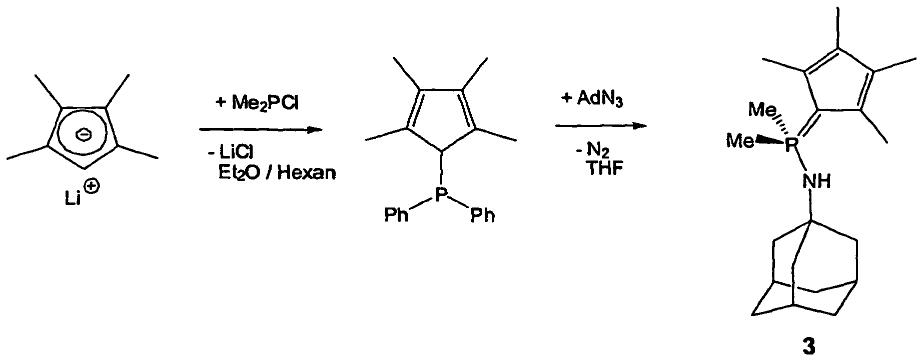

1,90 g (14,7 mmol) [LiC₅Me₄H] wurden in einem Gemisch aus 60 mL Hexan und 60 mL Diethylether durch einstündiges Rühren suspendiert. Die Suspension wurde auf 0°C abgekühlt und eine Lösung von 1,50 g (15,5 mmol) Me₂PCl in 10 mL Diethylether über einen Zeitraum von etwa 20 min zugetropft. Die Farbe der Suspension änderte sich sofort von gelb nach weiß. Das Gemisch wurde auf RT erwärmt und innerhalb von 12 bis 16 Stunden gerührt. Nach dem Filtrieren des Gemischs wurde das Lösungsmittel am Vakuum abgezogen und das erhaltene gelbe Öl (2,87 g) in 10 mL THF gelöst. Anschließend wurde eine Lösung von 2,90 g (16,3 mmol) AdN₃ in 10 mL THF zu der Lösung des C₅Me₄HPMe₂ getropft. Nach kurzer Zeit wurde eine Gasentwicklung und eine Farbänderung von Gelb zu Orange beobachtet. Die Lösung wurde für 12 bis 16 Stunden bei RT gerührt und anschließend für 1 h auf 50°C erwärmt, bis keine weitere Gasentwicklung erkennbar ist. Anschließend wurde das Lösungsmittel abgezogen und der erhaltene orangefarbene Feststoff in 20 mL Hexan suspendiert. Filtration und anschließendes Waschen mit dreimal je 10 mL Hexan ergaben ein weißes Pulver, welches im Hochvakuum getrocknet wurde.
Ausbeute 3.56 g (78%)
**CHN:** C₂₁H₃₄NP FW 331.48 g/mol
**¹H-NMR** (300.1 MHz, C₆D₆): δ = 1.24 (d, ²J_{HP} = 13.0 Hz, 6 H, *Me*₂P; 1 H, N*H*-Ad), 1.33-1.31 (br, m, 6 H, CH-C*H*₂-CH). 1.40 (br, d, ⁴J_{HP} = 2.7 Hz, 6 H, N-C(C*H*₂)₃), 1.72 (br, s, 3 H, C*H*_{Ad}), 2.48 (s, 6 H, C₅*Me*₄), 2.50 (s, 6 H, C₅*Me*₄) ppm.
**¹³C-NMR** (75.5 MHz, C₆D₆): δ = 1.2 (s, C₅*Me*₄), 4.2 (s, C₅*Me*₄), 10.3 (d, ¹J_{CP} = 67.7 Hz, *Me*₂P), 26.2 (s, CH_{Ad}), 35.8 (d, ⁴J_{CP} = 3.3 Hz, CH-*C*H₂-CH), 43.1 (d, ³J_{CP} = 6.1 Hz, N-C(*C*H₂)₃), 67.6 (s, P-NH-C_{Ad}), 70.1 (d, ¹J_{CP} = 126.5 Hz, *ipso-C_{cp}*), 107.9 (d, ^{2,3}J_{CP} =16.5 Hz, C(Me)=C(Me)), 109.8 (d, ^{2,3}J_{CP} = 18.2 Hz, C(Me)=C(Me)) ppm.
**³¹P-NMR** (121.5 MHz, C₆D₆): δ = 35.8 ppm.

### Ausführungsbeispiel 5:

### Herstellung von [(η⁵:η¹-C₅H₄PPh₂NDip)ZrCl₃·thf]

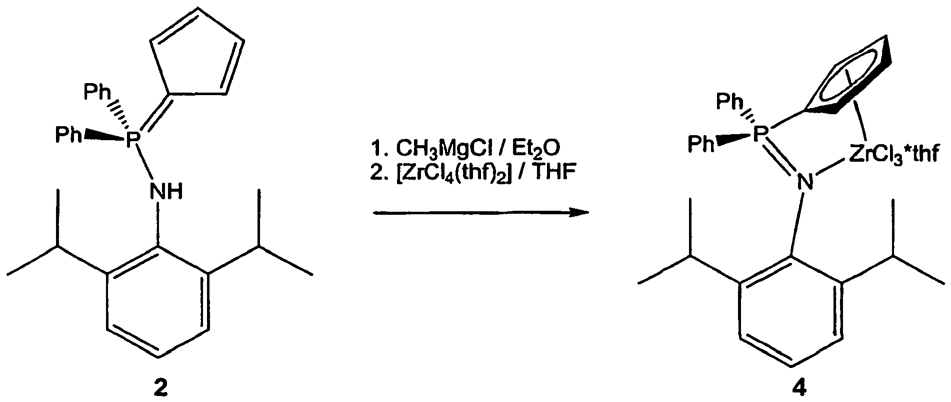

213 mg (0,5 mmol) C₅H₄PPh₂NHDip wurden in 10 mL THF gelöst, die Lösung auf -78°C abgekühlt und 0,17 mL (0,5 mmol) einer etherischen Methylmagnesiumchloridlösung (3 M) langsam zugetropft. Die Lösung wurde je 30 min bei -78°C, - 45°C, 0°C und RT gerührt. Anschließend wurde die Lösung kurz bis zum Sieden erhitzt, bis keine Gasentwicklung mehr beobachtet wird. Die Lösung wurde wieder auf -78°C abgekühlt und zu einer kalten Lösung (-78°C) von 189 mg (0,5 mmol) [ZrCl₄(thf)₂] in 20 mL THF getropft. Es entstand ein weißer Niederschlag. Das Gemisch wurde langsam auf RT erwärmt und für 12 bis 16 Stunden bei RT gerührt. Das Lösungsmittel wurde entfernt und der Feststoff in 20 mL Toluol aufgenommen. Durch Filtration wurde die orangefarbene Lösung von dem hellen Niederschlag getrennt. Das Lösungsmittel wurde entfernt und der orange-gelbe Feststoff am Hochvakuum getrocknet. Er ist löslich in Toluol und THF und unlöslich in Pentan und Hexan.
**³¹P-NMR** (121.5 MHz, C₆D₆): 3 Signale, Hauptsignal bei δ = 26.1 ppm.

### Ausführungsbeispiel 6:

### Herstellung von [(η⁵:η¹-C₅Me₄PMe₂NAd)ZrCl₃·thf]

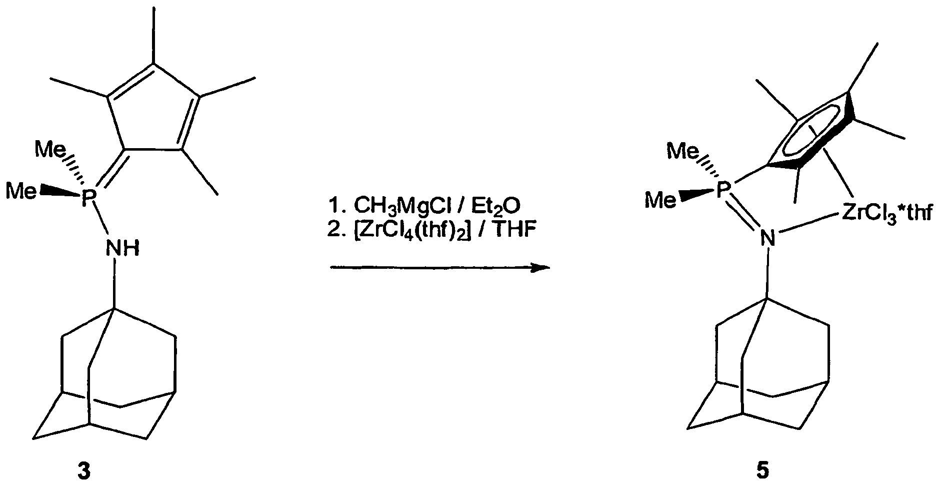

Zu einer Lösung von 185 mg (0,5 mmol) C₅Me₄PMe₂NHAd in 10 mL THF wurden bei 0°C 0,17 mL (0,5 mmol) einer Lösung von Methylmagnesiumchlorid in Diethylether (3 M) getropft. Es setzte sofort eine starke Gasentwicklung ein. Die Lösung wurde anschließend kurz zum Sieden erhitzt, bis keine Gasentwicklung mehr erkennbar war. Anschließend wurde die Lösung auf -78°C abgekühlt und zu einer ebenfalls auf -78°C gekühlten Lösung von 189 mg (0,5 mmol) [ZrCl₄(thf)₂] in 10 mL THF getropft. Die Lösung wurde innerhalb von 12 bis 16 Stunden auf RT erwärmt, das Lösungsmittel durch 15 mL Toluol ersetzt und filtriert. Nach Entfernen des Lösungsmittels am Vakuum wurde ein blass-orangefarbener Feststoff erhalten. Er ist sehr schwer löslich in C₆D₆, unlöslich in Hexan und Pentan und löslich in THF.
**³¹P-NMR** (121.5 MHz, C₆D₆): 16 Signale, Hauptsignal bei δ = 33.3 ppm.

### Ausführungsbeispiel 7:

### Herstellung von [(η⁵-C₅H₄PPh₂NDip)ZrBr₄]

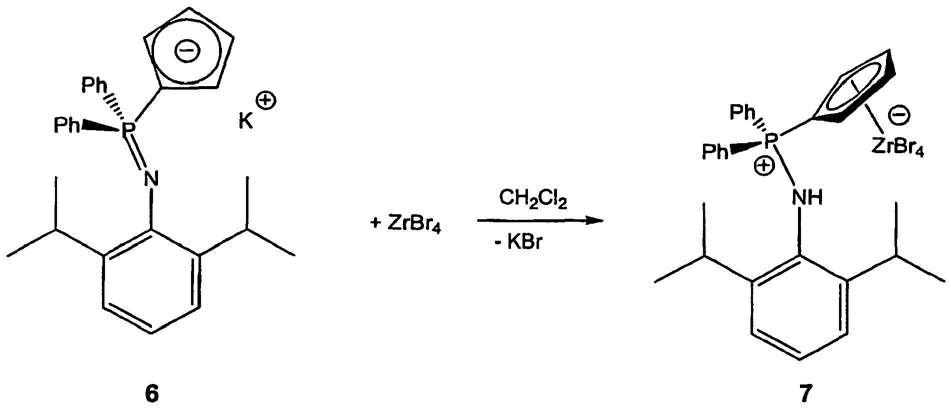

888 mg ZrBr₄ (2,16 mmol, 1,00 eq) wurden in 25 mL Dichlormethan suspendiert und bei -78°C 1,00 g C₅H₄PPh₂NDipK (2,16 mmol, 1,00 eq) portionsweise als Feststoff zugegeben. Es wurde innerhalb von 12 bis 16 Stunden auf RT erwärmt, wobei sich eine dunkelbraune Suspension bildete. Die Suspension wurde zentrifugiert und die überstehende dunkelbraune Lösung abdekantiert und verworfen. Das Lösungsmittel wurde im Hochvakuum entfernt. Der hellbraune Rückstand ist unlöslich in Hexan und Et₂O, schwerlöslich in Toluol und Benzol, aber löslich in Dichlormethan, Chloroform und THF.
Ausbeute: 820 mg (45%).

**CHN:** C₂₉H₃₂Br₄NPZr MW: 836.39 g/mol

| | berechnet | gefunden (1. Messung) | gefunden (2. Messung) |
|---|---|---|---|
| C | 41.64 | 48.37 | 47.96 |
| H | 3.86 | 5.20 | 5.52 |
| N | 1.67 | 2.12 | 2.12 |

**¹H-NMR** (300.1 MHz, CDCl₃): δ = 0.91 (br, s, 12 H, *Me*₂CH), 3.13 (sept, 4 H, ³*J*_{HH} = 6.9 Hz, Me₂C*H*). 3.66 (br, s, 1 H, *H*_{Cp}), 6.72 (br, s, 1 H, *H*_{Cp}), 6.96 (d, ³*J*_{HH} = 7.8 Hz, 2 H, *m*-Dip), 7.13 (m, 1 H, *p*-Dip), 7.15 (br, s, 1 H, *H*_{Cp}), 7.21 (br, s, 1 H, *H*_{Cp}), 7.47-7.53 (m, 4 H, *o*-Ph),
7.60-7.68 (m, 6 H, *m*-/*p*-Ph), 9.79 (d, ²J_{*H*P} = 6.9 Hz, N*H*) ppm.
**¹³C-NMR** (75.5 MHz, CDCl₃): δ = 23.8 (s, *M*e₂CH), 29.4 (s, Me₂CH), 46.2 (d, ^{2/3}*J*_{CP} = 12.6 Hz, *C*_{Cp}), 124.0 (s, *m*-Dip), 128.4 (s, *p*-Dip), 129.3 (d, ²*J*_{CP} = 14.7 Hz, *o*-Ph), 132.6 (d, ^{2/3}*J*_{CP} = 18.6 Hz, *C*_{Cp}), 133.5 (d, ³*J*_{CP} = 10.9 Hz, *m*-Ph), 134.2 (d, ⁴*J*_{CP} = 2.7 Hz, *p*-Ph), 146.9 (d, ^{2/3}*J*_{CP} = 9.1 Hz, *C*_{Cp}), 148.6 (d, ³*J*_{CP} = 3.4 Hz, *o-*Dip), 156.1 (d, ^{2/3}*J*_{CP} = 14.8 Hz, *C*_{Cp}) ppm.
Die Signale der *ipso*-C-Atome sind im ¹³C-NMR-Spektrum nicht zu beobachten. **³¹P-NMR** (81.0 MHz, CDCl₃): δ = 27.3 ppm.
**EI/MS** (70 eV)): m/z (%) = 425 (17.2) [Ligand⁺], 382 (21.1) [Ligand⁺ - CHMe₂], 177 (35.3) [Dip⁺], 162 (87.8) [Me₂Ph⁺].
**ESI/MS** (ACN): m/z (%) = 785.4 (29), 614.4 (11), 454.2 (9), 426.2 (100) [Ligand + H⁺].

### Ausführungsbeispiel 8:

### Herstellung von [(η⁵:η¹-C5Me₄PMe₂NAd)ZrBr₃]

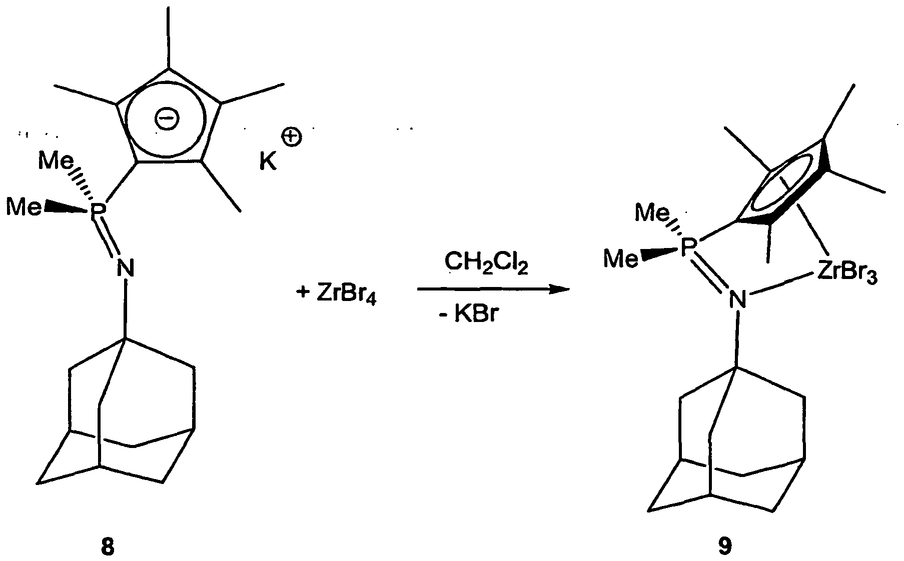

400 mg ZrBr₄ (0,97 mmol, 1,00 eq) wurden in 10 mL Dichlormethan suspendiert und bei -78°C 360 mg C₅Me₄PMe₂NAdK (0,97 mmol, 1,00 eq) zugegeben. Es wurde innerhalb von 12 bis 16 Stunden auf RT erwärmt, wobei sich eine hellbraune Suspension gebildet hatte. Die Suspension wurde zentrifugiert und die überstehende schwarze Lösung abdekantiert. Nach dem Entfernen des Lösungsmittels im Hochvakuum wurde ein hellbrauner Feststoff erhalten. Der Feststoff ist unlöslich in Toluol, Benzol, Hexan und Et₂O, aber löslich in Dichlormethan und Chloroform.
**³¹P-NMR** (81.0 MHz, CDCl₃): δ = Hauptsignal bei 26.0 ppm (63%), vier weitere Signale bei: 72.7 (7%), 57.8 (7%), 53.7 (7%), 44.9 (16%) ppm.

### Ausführungsbeispiel 9:

### Herstellung von [(η⁵:η¹-C₅H₄PPh₂NDip)ZrBr₃]

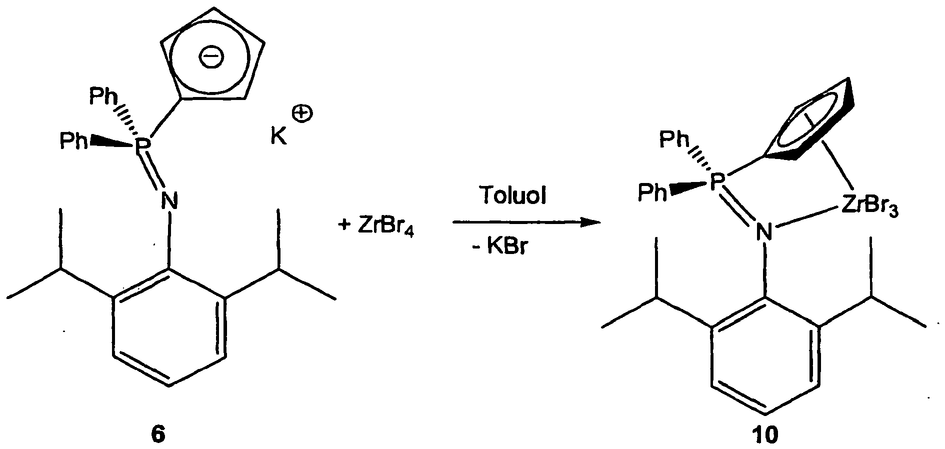

311 mg ZrBr₄ (0,67 mmol, 1,00 eq) wurden in 7 mL Toluol suspendiert und bei -78°C 275 mg C₅H₄PPh₂NDipK (0,67 mmol, 1,00 eq) zugegeben. Es wurde innerhalb von 12 bis 16 Stunden auf RT erwärmt, wobei sich eine braune Suspension gebildet hatte. Der braune Niederschlag wurde abfiltriert und mit 3 x 5 mL Toluol gewaschen.
Das Filtrat wurde bis zur Trockene eingeengt. Als Rückstand verblieb ein hellbrauner Feststoff.
**³¹P-NMR** (81.0 MHz, C₆D₆): δ = Hauptsignal bei 28.0 ppm (48%), fünf weitere Signale bei: 31.4 (9%), 28.70 (11%), 28.5 (15%), 14.7 (13%), 13.9 (4%) ppm.

### Ausführungsbeispiel 10:

### Herstellung von [(η⁵:η¹-C₅Me₄PMe₂NAd)ZrCl₃]

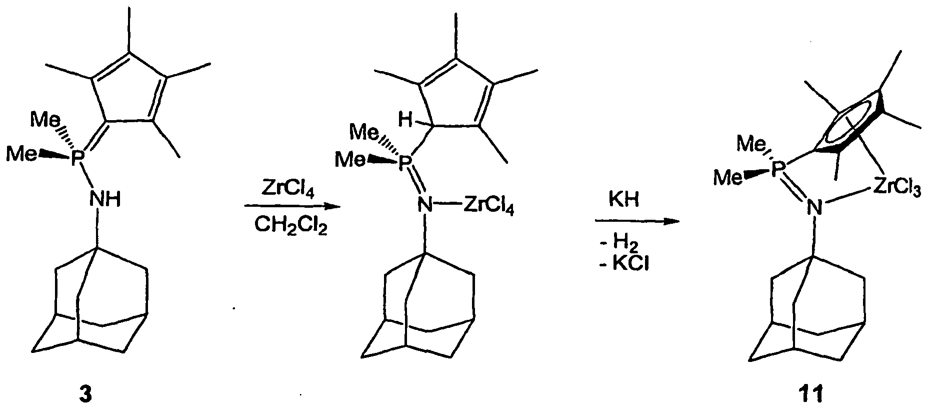

1,00 g C₅Me₄PMe₂NHAd (3,63 mmol, 1.00 eq) wurden in 40 mL Dichlormethan gelöst und bei -78°C 846 mg ZrCl₄ als Feststoff zugegeben. Dabei trat sofort eine Farbänderung von Orange nach Beige auf. Es wurde innerhalb von 12 bis 16 Stunden auf RT erwärmt, wobei sich in geringer Menge ein weißer Niederschlag in einer bordeauxfarbenen Lösung gebildet hatte. Nach dem Entfernen des Lösungsmittels im Hochvakuum wurde der Rückstand in 30 mL THF gelöst und 364 mg KH (9,1 mmol, 2,51 eq) wurden zugegeben. Es wurde für 12 bis 16 Stunden bei 40°C gerührt und dann das Lösungsmittel im Hochvakuum entfernt. Der rosafarbene Feststoff ist unlöslich in Hexan, Et₂O und Toluol, aber löslich in Dichlormethan, Chloroform und THF.
**³¹P-NMR** (81.0 MHz, CDCl₃): δ = Hauptsignal bei 37.4 ppm (68%), drei weitere Signale bei: 30.3 (18%), 28.9 (7%), 28.1 (7%) ppm.

### Ausführungsbeispiel 11:

### Herstellung von [(η⁵:η¹-Cp™PPh₂NAd)ZrCl₃]

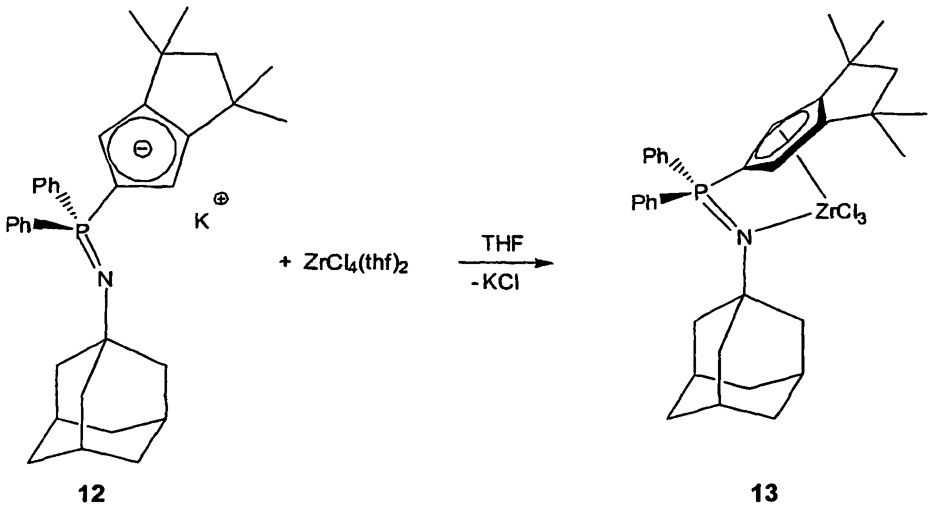

Eine Lösung von 1,38 g Cp™PPh₂NAdK (2,59 mmol, 1,00 eq) in 20 mL THF wurde zu einer auf -78°C gekühlten Lösung von 975 mg [ZrCl4(thf)2] (2,59 mmol, 1,00 eq) in 10 mL THF gegeben. Die schwarzbraune Lösung wurde innerhalb von 12 bis 16 Stunden auf RT erwärmt, wobei ein weißer Niederschlag ausfiel. Es wurde über Celite fitriert und das Filtrat bis zur Trockene eingeengt. Der Rückstand wurde in 50 mL Hexan suspendiert, über eine Umkehrfritte filtriert, mit zweimal je 10 mL Hexan gewaschen und schließlich im Hochvakuum getrocknet. Der violette Feststoff ist unlöslich in Hexan, schwerlöslich in Benzol und Toluol, aber löslich in Dichlormethan, Chloroform und THF.
**³¹P-NMR** (81.0 MHz, CDCl3): δ = Hauptsignal bei 37.8 ppm (59%), ein weiteres Signal bei 22.0 (41%) ppm.

### Ausführungsbeispiel 12:

### Herstellung von [(η⁵:η¹-C₅H₄PPh₂NDip)Zr(CH₂SiMe₃)₃]

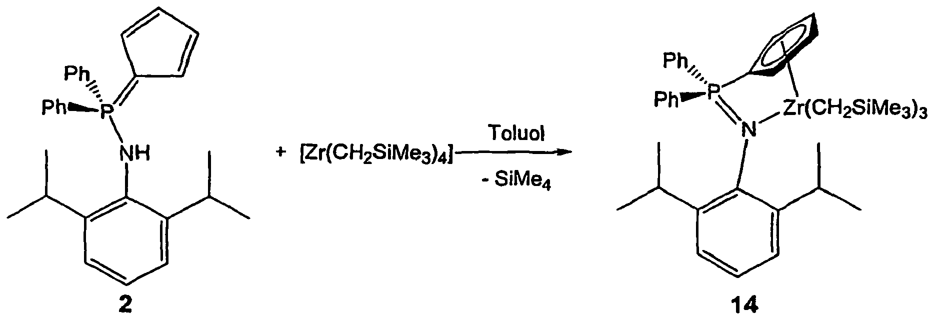

Eine Lösung von 731 mg [Zr(CH₂SiMe₃)₄] (1,66 mmol, 1.00 eq) in 10 mL Toluol wurde auf -78°C abgekühlt und eine auf ebenfalls -78°C vorgekühlte Suspension von 706 mg C₅H₄PPh₂NHDip (1,66 mmol, 1,00 eq) in 5 mL Toluol dazu gegeben. Die hellgelbe Suspension wurde innerhalb von 12 bis 16 Stunden auf RT erwärmt, wobei sich eine orangefarbene Lösung gebildet hatte. Das Lösungsmittel wurde im Hochvakuum entfernt und das orangegelbe Rohprodukt zweimal aus Hexan bei -80°C umkristallisiert. Der gelbe Feststoff ist schwerlöslich in Pentan und Hexan, aber löslich in Benzol und Toluol.
Ausbeute: 474 mg (37%).
**CHN**: C₄₁H₆₄NPSi₃Zr MW: 777.41 g/mol

| | berechnet | gefunden (1. Messung) | gefunden (2. Messung) |
|---|---|---|---|
| C | 63.34 | 54.45 | 54.72 |
| H | 8.30 | 5.83 | 6.11 |
| N | 1.80 | 1.75 | 1.76 |

**¹H-NMR** (300.1 MHz, C₆D₆): δ = 0.20 (s, 27 H, Si(C*H*₃)₃), 0.89 (s. 6 H, Zr-C*H*₂-Si), 1.11 (d, ³*J*_{HH} = 7.0 Hz, 12 H, *M*e₂CH), 3.69 (sept, 2 H, ³*J*_{HH} = 7.4 Hz, Me₂C*H*), 6.43 (m, 2 H, *H*_{Cp}), 6.65 (m, 2 H, *H*_{Cp}), 6.99 (m, 6 H, m-/*p*-Ph). 7.03 (m, 2 H, *m*-Dip), 7.13 (m, 1 H, *p*-Dip), 7.42-7.49 (m, 4 H, *o*-Ph) ppm.
**¹³C-NMR** (75.5 MHz, C₆D₆): δ = 3.0 (s, Si(CH₃)₃), 24.2 (*M*e₂CH), 29.2 (Me₂CH), 66.6 (s, Zr-CH₂-Si), 114.7 (d, ^{2,3}*J*_{CP} = 11.8 Hz, *C*_{CP}), 115.5 (d, ^{2,3}*J*_{CP} = 7.6 Hz, *C*_{Cp}), 120.8 (d, *J*_{CP} = 2.0 Hz, *p*-Dip), 123.4 (d, ⁴*J*_{CP} = 2.1 Hz, *m*-Dip), 128.7 (s, *p*-Ph), 131.5 (d, ³*J*_{CP} = 2.3 Hz, *m*-Ph), 132.2 (d, ²*J*_{CP} = 9.5 Hz, o-Ph) ppm.
Die Signale der *ipso*-C-Atome sind im ¹³C-NMR-Spektrum nicht zu beobachten. **³¹P-NMR** (81.0 MHz, C₆D₆): δ = -10.9 ppm.
**EI/MS** (70 eV): m/z (%) = 763 (4.2) [(C₅H₄PPh₂NDip)Zr(CH₂SiMe₃)₂(CH₂SiMe₂)⁺], 692 (100.0) [(C₅H₄PPh₂NDip)Zr(CH₂SiMe₃)₂⁺]. 514 (77.4), 473 (76.5) 425 (2.9) [Ligand⁺].
**IR** (Nujol): 1244 [v (P=N)] (s), 1225 (m), 1186 (s), 1049 (m), 744 (s), 704 [v (P-C)] (s), 696 (w), 517 (w), 465 [v Zr-C] (m) cm⁻¹.

### Kristallstrukturanalyse

| **Kristalldaten** | | |
|---|---|---|
| Identifizierungsnummer | eq26r | |
| Gestalt, Farbe | blockförmig, farblos | |
| Kristallgröße | 0,33 x 0,24 x 0,21 mm³ | |
| Kristallsystem | monoklin | |
| Raumgruppe | I 2/a Z = 8 | |
| Abmessungen der Elementarzelle | a = 18,9452(17) Å | α= 90°, |
| | b = 22,259(3) Å | β= 102,343(11)°, |
| | c = 21,1392(19) Å | γ = 90°. |
| Volumen | 8708,3(15) Å³ | |
| Zellbestimmung | 7997 Peaks mit Theta 1,9 bis 26°. | |
| Empirische Formel | C32,80 H51,20 N0,80 P0,80 Si2,40 Zr0,80 | |
| Formelmasse | 621,91 | |
| Dichte (berechnet) | 1,186 Mg/m³ | |
| Absorptionskoeffizient | 0,399 mm⁻¹ | |
| F(000) | 3312 | |
| | | |

| Datenerfassung | | |
|---|---|---|
| Diffraktometertyp | IPDS1 | |
| Wellenlänge | 0,71073 Å | |
| Temperatur | 293(2) K | |
| Theta-Bereich für Datenerfassung | 1,83 bis 25,98°. | |
| Indexbereiche | -23<=h<=23, -27<=k<=27, -25<=I<=25 | |
| Datenerfassungssoftware | STOE Expose | |
| Zellverfeinerungssoftware | STOE Cell | |
| Datenreduktionssoftware | STOE Integrate | |
| | | |

| Auflösung und Verfeinerung | | |
|---|---|---|
| Reflexe | 47882 | |
| unabhängige Reflexe | 8356 [R(int) = 0,0385] | |
| Vollständigkeit bis theta = 25,00° | 98,3% | |
| beobachtete Reflexe | 6279[I>2sigma(I)] | |
| Reflexe, die für die Verfeinerung vierwendet wurden | 8356 | |
| Absorptionskorrektur | Empirical (SHELXA) | |
| Maximale und minimale Transmission | 0,9167 and 0,7062 | |
| Größter Differenzpeak, -lücke | 0,383 and -0,419 e,Å⁻³ | |
| Lösung | direct/ difmap | |
| Verfeinerung | Methode der kleinsten Fehlerquadrate bezogen auf F² | |
| Behandlung von H-Atomen | gemischt | |
| Verwendete Programme | SHELXS-86 (Sheldrick, 1986) | |
| | SHELXL-97 (Sheldrick, 1997) | |
| | Diamond 2,1, STOE IPDS1 software | |
| Daten / Einschränkungen / Parameter | 8356 / 0 / 424 | |
| Güte des Fittes an F² | 0,899 | |
| R index (alle Daten) | wR2 = 0,0712 | |
| R index konventionell [I>2sigma(I)] | R1 = 0,0284 | |

### Ausführungsbeispiel 13:

### Herstellung von [(η⁵:η¹-C₅H₄PMe₂NDip)Zr(CH₂SiMe₃)₃]

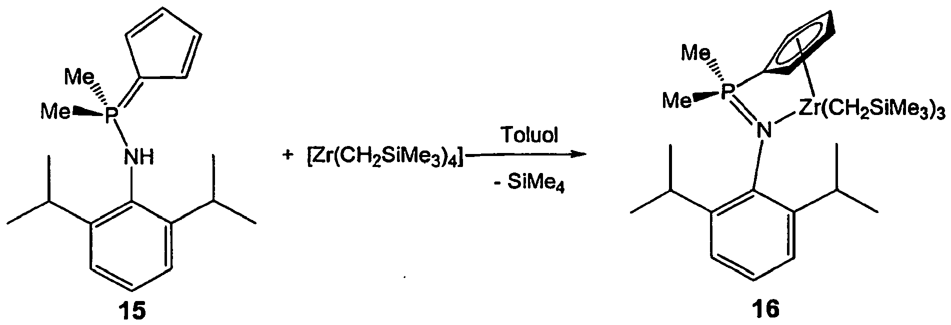

1,46 g [Zr(CH₂SiMe₃)₄] (3,32 mmol, 1,00 eq) wurden in 45 mL Toluol gelöst und bei -78°C 1,00 g C₅H₄PMe₂NHDip (3,32 mmol, 1,00 eq) portionsweise als Feststoff zugegeben. Es wurde innerhalb von 12 bis 16 Stunden auf RT erwärmt, wobei sich eine rotbraune Lösung gebildet hatte. Das Lösungsmittel wurde im Hochvakuum entfernt und der Rückstand bei -30°C aus Hexan umkristallisiert. Der apricotfarbene Feststoff ist schwerlöslich in Pentan und Hexan, aber löslich in Benzol und Toluol.
Ausbeute: 1.66 g (77%).

**CHN**: C₃₁H₆₀NPSi₃Zr MW: 653.27 g/mol

| | berechnet | gefunden (1. Messung) | gefunden (2. Messung) |
|---|---|---|---|
| C | 57.00 | 51.14 | 53.73 |
| H | 9.26 | 8.02 | 8.50 |
| N | 2.14 | 2.12 | 2.08 |

**¹H-NMR** (300.1 MHz, C₆D₆): δ = 0.36 (s, 27 H, Si(C*H*₃)₃), 0.91 (s, 6 H, Zr-C*H*₂-Si), 1.06 (d, ²*J*_{HP} = 12.3 Hz, P*M*e₂), 1.32 (d, ³*J*_{HH} = 6.8 Hz, 12 H, *M*e₂CH), 3.20 (sept, 2 H, ³*J*_{HH} = 6.8 Hz, Me₂C*H*), 6.48 (m, 2 H, *H*_{Cp}). 6.76 (m, 2 H, *H*_{Cp}), 7.13 (m, 2 H, *m-*Dip), 7.24 (m, 1 H, *p*-Dip) ppm.
**¹³C-NMR** (75.5 MHz, C₆D₆): δ = 3.7 (s, Si(CH₃)₃), 15.4 (d, ¹*J*_{CP} = 59.6 Hz, P*M*e₂), 25.5 (*M*e₂CH), 28.0 (Me₂CH), 61.4 (s, Zr-CH₂-Si), 110.0 (d, ^{2,3}*J*_{CP} = 13.1 Hz, *C*_{Cp}), 118.8 (d, ^{2,3}*J*_{CP} = 12.8 Hz, *C*_{Cp}), 123.2 (d, ⁵*J*_{CP} = 3.4 Hz, *p*-Dip), 124.4 (d, ⁴*J*_{CP} = 3.6 Hz, *m*-Dip), 144.9 (d, ³*J*_{CP} = 6.4 Hz, *o-Dip*) ppm.
Das Signal des *ipso*-*C*_{Cp}-Atoms ist im ¹³C-NMR-Spektrum nicht zu beobachten. **³¹P-NMR** (81.0 MHz, C₆D₆): δ = 10.2 ppm.
**EI/MS** (70 eV): m/z (%) = 642 (2.8) [(C₅H₄PMe₂NDip)Zr(CH₂SiMe₃)₂(CH₂SiMe₂)⁺], 564 (0.9) [(C₅H₄PMe₂NDip)Zr(CH₂SiMe₃)₂⁺], 515 (4.1), 301 (3.6) [Ligand⁺], 177 (34.1) [Dip⁺], 162 (100) [Me2Ph⁺].
**IR** (Nujol): 2361 (w), 1240 [v (P=N)] (s), 1225 (m), 1190 (s), 1047 (s), 743 (s), 710 [v (P-C)] (s), 696 (w), 606 (w), 517 (w), 583 (w), 488 (m), 451 [v (Zr-C)] (s) cm-1.

### Kristallstrukturanalyse

| **Kristalldaten** | | |
|---|---|---|
| Identifizierungsnummer | eq55 | |
| Gestalt, Farbe | farblos | |
| Kristallgröße | 0,36 x 0,3 x 0,21 mm³ | |
| Kristallsystem | monoklin | |
| Raumgruppe | P 21/cZ = 4 | |
| Abmessungen der Elementarzelle | a = 10,8463(10) Å | α = 90°. |
| | b = 19,9277(14) Å | β = 101,856(10)°. |
| | c = 17,7542(15) Å | γ = 90°. |
| Volumen | 3755,6(5) Å³ | |
| Zellbestimmung | 8000 Peaks mit Theta 2,0 bis 26°. | |
| Empirische Formel | C31 H60 N P Si3 Zr | |
| Formelmasse | 653,26 | |
| Dichte (berechnet) | 1,155 Mg/m³ | |
| Absorptionskoeffizient | 0,450 mm⁻¹ | |
| F(000) | 1400 | |

| Datenerfassung | | |
|---|---|---|
| Diffraktometertyp | IPDS1 | |
| Wellenlänge | 0,71073 Å | |
| Temperatur | 293(2) K | |
| Theta-Bereich für Datenerfassung | 1,92 bis 26,03°. | |
| Indexbereiche | -13<=h<=13, -23<=k<=24, -21 <=l<=21 | |
| Datenerfassungssoftware | STOE Expose | |
| Zellverfeinerungssoftware | STOE Cell | |
| Datenreduktionssoftware | STOE Integrate | |
| | | |

| Auflösung und Verfeinerung | | |
|---|---|---|
| gesammelte Reflexe | 21053 | |
| unabhängige Reflexe | 7324 [R(int) = 0,0326] | |
| Vollständigkeit bis theta = 25,00° | 99,8% | |
| Beobachtete Reflexe | 5088[I>2sigma(I)] | |
| Reflexe, die für die Verfeinerung verwendet wurden | 7324 | |
| Absorptionskorrektur | semiempirisch | |
| Max. und min. Transmission | 0,8837 and 0,8642 | |
| Größte Peakdifferenz, -lücke | 1,040 und -0,506 e,Å⁻³ | |
| Lösung | direct/ difmap | |
| Verfeinerung | Methode der kleinsten Fehlerquadrate bezogen auf F² | |
| Behandlung von H-Atomen | gemischt | |
| verwendete Programme | SHELXS-97 (Sheldrick, 1997) | |
| | SHELXL-97 (Sheldrick, 1997) | |
| | Diamond 2,1, STOE IPDS1 software | |
| Daten / Einschränkungen / Parameter | 7324 / 0 / 334 | |
| Güte des Fittes an F² | 0,890 | |
| R index (alle Daten) | wR2 = 0,0885 | |
| R index konventionell [I>2sigma(I)] | R1 = 0,0357 | |

### Ausführungsbeispiel 14:

### Herstellung von [(η⁵:η¹-C5Me₄PMe₂NAd)Zr(CH₂SiMe₃)₃] in Toluol

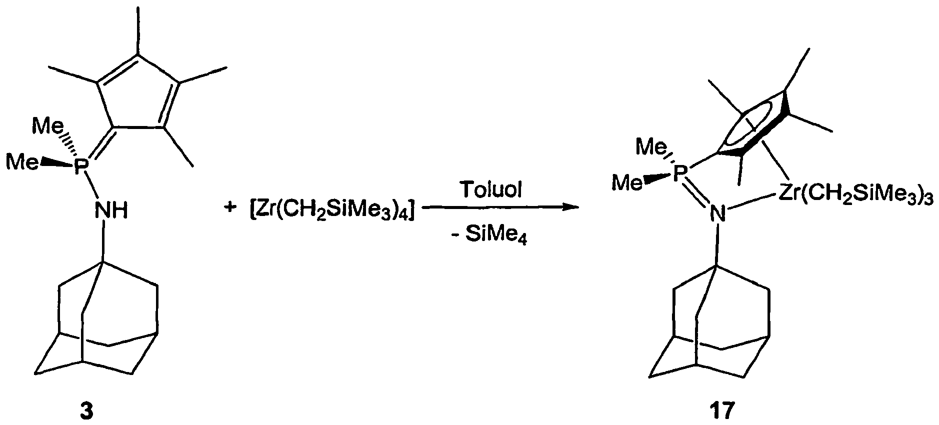

224 mg (0,51 mmol) [Zr(CH₂SiMe₃)₄] wurden in 15 mL Toluol gelöst und auf -78°C abgekühlt. Zu dieser Lösung wurde eine Suspension von 190 mg (0,51 mmol) C₅Me₄PMe₂NHAd in 15 mL Toluol, die ebenfalls auf -78°C gekühlt war, gegeben. Das Gemisch wurde 6 h bei -78°C gerührt, während dessen eine klare, leicht orange Lösung entstand. Anschließend wurde die Lösung auf RT erwärmt. Entfernen des Lösungsmittels und Trocknen im Hochvakuum ergab einen orangegelben Feststoff, der löslich in Pentan, Hexan, Toluol und THF ist.
Ausbeute: 338 mg (97%)

**CHN**: C₃₃H₆₆NPSi₃Zr FW 683.34 g/mol

| | Berechnet | Gefunden (1. Messung) | Gefunden (2. Messung) |
|---|---|---|---|
| C | 58.00 | 46.82 | 47.29 |
| H | 9.74 | 6.68 | 8.32 |
| N | 2.05 | 2.19 | 2.12 |

**¹H**-**NMR** (300.1 MHz, C₆D₆): δ = 0.35 (s. 27 H, -Si-(C*H*₃)₃), 0.43 (s, 6 H, Zr-C*H*₂-Si), 1.28 (d, ²J_{PH}= 12.0 Hz, 6 H, *M*e₂P), 1.71-1.59 (br, m, 6 H, CH-C*H*₂-CH), 1.89 (br, d, ³J_{HH} = 3,6 Hz, 6 H, N-C(C*H*₂)₃), 1.99 (s, 6 H, C₅*M*e₄), 2.1 (br, m, 3 H, C*H*_{Ad}). 2.06 (s, 6 H, C₅*M*e₄) ppm.
**¹³C-NMR** (75.5 MHz, C₆D₆): δ = 4.4 (s, -Si-*M*e₃), 12.4 (s, C₅*M*e₄), 23.0 (d, ¹J_{CP} = 50.6 Hz, *M*e₂P), 14.8 (s, C₅*M*e₄), 30.8 (d, ⁴J_{PC} = 1.6 Hz, *C*H_{Ad}), 36.9 (s, CH-*C*H₂-CH), 48.0 (d, ³J_{CP} = 10.4 Hz, N-C(CH₂)₃), 54.6 (d, ²J_{CP} = 5.5 Hz, P=N-C_{Ad}), 60.6 (s, Zr-CH₂-Si), 121.8 (d, ^{2,3}J_{CP} = 12.3 Hz, *C*(Me)=C(Me)), 126.4 (d, ^{2,3}J_{CP}= 12.6 Hz, C(Me)=*C*(Me)) ppm.
Das Signal des *ipso*-C_{Cp} ist im ¹³C-NMR-Spektrum nicht zu beobachten. **³¹P-NMR** (121.5 MHz, C₆D₆): δ = 29.9 ppm.
**EI/MS** (70 eV): m/z (%) = 332 (1) [Ligand⁺], 170 (25.7), 150 (13.4) [N-Ad⁺]. 135 (35.7) [Ad⁺], 94 (42.3), 79 (11.5), 77 (16.3) [Me₂PN⁺], 41 (11.0).
IR (Nujol): Wellenzahl = 3470 (m), 1377 (m), 1303 (m), 1260 [v (P=N)], 1242 (m), 1099 (m), 904 s, 852 (m) cm⁻¹.

### Ausführungsbeispiel 15:

### Herstellung von [(η⁵:η¹-C₅Me₄PMe₂NAd)Zr(CH₂SiMe₃)₃] In Hexan

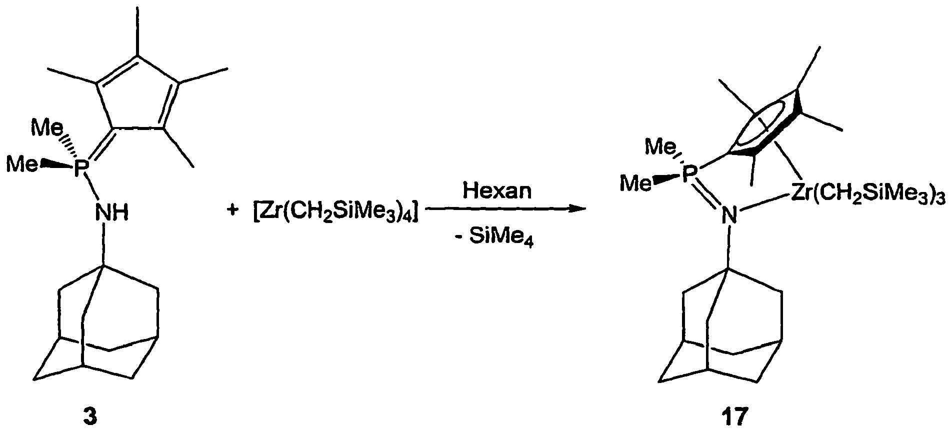

1,00 g [Zr(CH₂SiMe₃)₄] (2,27 mmol, 1,00 eq) wurde in 50 mL Hexan gelöst und bei -78°C 626 mg C₅Me₄PMe₂NHAd (2,27 mmol, 1,00 eq) portionsweise als Feststoff zugegeben. Es wurde innerhalb von 12 bis 16 Stunden auf RT erwärmt, wobei sich eine blassorangefarbene Lösung gebildet hatte. Das Lösungsmittel wurde im Hochvakuum entfernt und der Rückstand bei -30°C aus Hexan umkristallisiert. Der apricotfarbene Feststoff ist schwerlöslich in Pentan und Hexan, aber löslich in Benzol und Toluol.
Ausbeute: 534 mg (34%).
**CHN**: C₃₃H₆₆NPSi₃Zr MW: 683.34 g/mol

| | berechnet | gefunden (1. Messung) | gefunden (2. Messung) |
|---|---|---|---|
| C | 58.00 | 53.20 | 53.40 |
| H | 9.74 | 7.97 | 7.88 |
| N | 2.05 | 1.76 | 1.82 |

**¹H-NMR** (300.1 MHz, C₆D₆): δ = 0.39 (s, 27 H, Si(C*H*₃)₃), 0.51 (s, 6 H, Zr-C*H*₂-Si), 1.29 (d, ²*J*_{HP} = 12.0 Hz, 6 H, P*M*e₂), 1.67 (br, m, 6 H, C*H*_{2Ad}). 1.92 (br, m, 6 H, N-C(C*H*₂)₃), 2.00 (s, 6 H, C(*M*e)=C(Me), 2.09 (br, m, 3 H, C*H*_{Ad}; 6 H, C(Me)=C(*M*e) ppm.
**¹³C-NMR** (75.5 MHz, C₆D₆): δ = 4.4 (s, Si(*C*H₃)₃), 12.5 (s, C(Me)=C(*M*e)), 14.9 (s. C(*M*e)=C(Me)), 23.0 (d, ¹*J*_{CP} = 50.6 Hz, P*M*e₂), 30.8 (s, CH_{Ad}). 36.9 (s, CH_{2Ad}). 48.1 (d, ³*J*_{CP} = 10.3 Hz, N-C(CH₂)₃), 54.6 (d, ²*J*_{CP} = 4.8 Hz, P=N-C_{Ad}), 61.0 (s, Zr-CH₂-Si), 121.8 (d, ^{2,3}*J*_{CP} = 12.2 Hz, C(Me)=C(Me)), 126.4 (d, ^{2,3}*J*_{CP} = 12.7 Hz, C(Me)=*C*(Me)) ppm.
Das Signal des ipso-*C*Cₚ-Atoms ist im ¹³C-NMR-Spektrum nicht zu beobachten. **³¹P-NMR** (81.0 MHz, C₆D₆): δ = 2.1 ppm.
**EI/MS** (70 eV): m/z (%) = 331 (1.6) [Ligand⁺] 211 (1.8) [Me₂PNAd⁺], 94 (1.6), 73 (100.0).
**IR** (Nujol): 1260 [v (P=N)] (m), 860 (m), 721 (w) [v (P-C)] (s), 669 (w), 449 [v (Zr-C)] (m) cm⁻¹.

### Kristallstrukturanalyse

| **Kristalldaten** | | |
|---|---|---|
| Identifizierungsnummer | eq77 | |
| Gestalt, Farbe | rund, farblos | |
| Kristallgröße | 0,57 x 0,15 x 0,15 mm³ | |
| Kristallsystem | monoklin | |
| Raumgruppe | C 2/c Z = 4 | |
| Abmessungen der Elementarzelle | a = 39,944(4) Å | α = 90°. |
| | b = 10,3379(8) Å | β = 91,878(13)°. |
| | c = 18,527(2) Å | γ = 90°, |
| Volumen | 7646,2(13) Å³ | |
| Zellbestimmung | 8000 Peaks mit Theta 2 bis 25,5°. | |
| Empirische Formel | C66 H132 N2 P2 Si6 Zr2 | |
| Formelmasse | 1366,66 | |
| Dichte (berechnet) | 1,187 Mg/m³ | |
| Absorptionskoeffizient | 0,445 mm⁻¹ | |
| F(000) | 2944 | |
| | | |

| **Datenerfassung**: | | |
|---|---|---|
| Diffraktometertyp | IPDS1 | |
| Wellenlänge | 0,71069 Å | |
| Temperatur | 293(2) K | |
| Theta-Bereich für Datenerfassung | 2,03 bis 26,06°. | |
| Indexbereiche | -49<=h<=49, -12<=k<=12, -22<=l<=22 | |
| Datenerfassungssoftware | STOE Expose | |
| Zellverfeinerungssoftware | STOE Cell | |
| Datenreduktionssoftware | STOE Integrate | |
| | | |

| **Auflösung und Verfeinerung:** | | |
|---|---|---|
| gesammelte Reflexe | 37191 | |
| unabhängige Reflexe | 7477 [R(int) = 0,0474] | |
| Vollständigkeit bis theta = 25,00° | 99,5% | |
| beobachtete Reflexe | 5901[I>2sigma(I)] | |
| Reflexe, die für die Verfeinerung verwendet wurden | 7477 | |
| Absorptionskorrektur | semiempirisch | |
| Max. and min. Transmission | 0,9207 and 0,8516 | |
| Größter Differenzpeak und -lücke | 0,463 and -0,340 e,Å⁻³ | |
| Lösung | direct/ difmap | |
| Verfeinerung | Methode der kleinsten Fehlerquadrate bezogen auf F2 | |
| Behandlung von H-Atomen | gemischt | |
| Verwendete Programme | SHELXS-86 (Sheldrick, 1986) | |
| | SHELXL-97 (Sheldrick, 1997) | |
| | Diamond 2.1, STOE IPDS1 software | |
| Daten / Einschränkungen / Parameter | 7477 / 0 / 369 | |
| Güte des Fittes an F² | 0.930 | |
| R index (alle Daten) | wR2 = 0.0784 | |
| R index konventionell [I>2sigma(I)] | R1 = 0.0308 | |

### Ausführungsbeispiel 16:

### Darstellung von [(η⁵:η¹-Cp™PPh₂NAd)Zr(CH₂SiMe₃)₃]

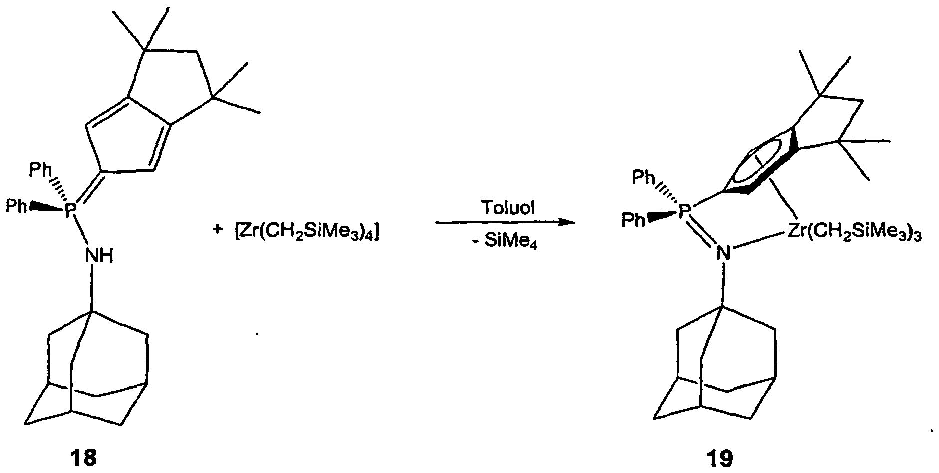

88 mg [Zr(CH₂SiMe₃)₄] (0,20 mmol, 1,00 eq) wurden in 5 mL Toluol gelöst und bei -78°C 100 mg Cp^{™}PPh₂NHAd (2,27 mmol, 1,00 eq) portionsweise als Feststoff zugegeben, worauf eine orangefarbene Lösung entstand. Es wurde innerhalb von 12 bis 16 Stunden auf RT erwärmt und dann 7 d bei 60°C erhitzt. Das Lösungsmittel wurde im Hochvakuum entfernt. Der orangegelbe Rückstand ist sehr gut löslich in Hexan und Toluol, selbst bei -80°C.
**³¹P-NMR** (81.0 MHz, Toluol): δ = 16.6 (43%) [Ligand], 13.7 (57%) ppm.

### Ausführungsbeispiel 17:

### Darstellung von [(η⁵:η¹-Cp™PPh₂NDip)Zr(CH₂SiMe₃)₃]

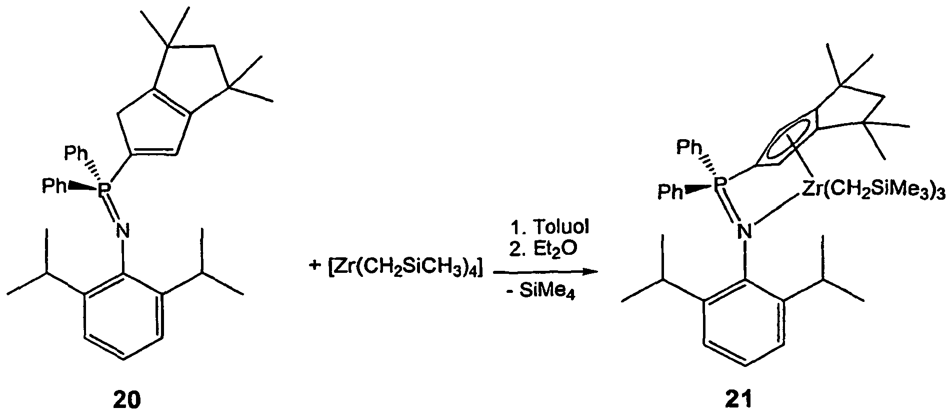

295 mg [Zr(CH₂SiMe₃)₄] (0,67 mmol, 1,00 eq) wurden in 10 mL Toluol gelöst und bei -78°C 350 mg CpH^{™}PPh₂NDip (0,67 mmol, 1,00 eq) portionsweise als Feststoff zugegeben, worauf eine gelbe Lösung entstand. Es wurde innerhalb von 12 bis 16 Stunden auf RT erwärmt. Das Lösungsmittel wurde im Hochvakuum entfernt, der gelbe Rückstand in 5 mL Et₂O gelöst und für 4 h bei RT gerührt. **³¹P-NMR** (81.0 MHz, Et₂O): δ = -9.3 (9%), -11.7 (26%), -14.8 (65%) [Ligand] ppm.

### Ausführungsbeispiel 18:

### Herstellung von [(η⁵:η¹-C₅Me₄PMe₂NAd)Zr(CH₂Ph)₃]

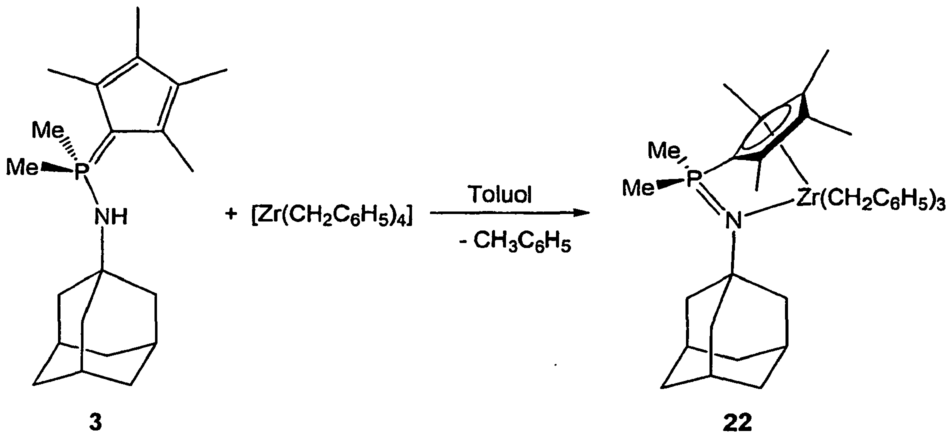

242 mg [Zr(CH₂CᵣH₅)₄] (0,53 mmol) wurden in 10 mL Toluol gelöst und auf -78°C abgekühlt. Zu dieser Lösung wurde eine Suspension von 196 mg (0,53 mmol) C₅Me₄PMe₂NHAd in 10 mLToluol, die ebenfalls auf -78°C gekühlt war, gegeben. Das Gemisch wurde auf RT erwärmt und für 12 bis 16 Stunden gerührt. Es entstand eine klare, rote Lösung. Entfernen des Lösungsmittels ergab einen roten Feststoff, der unlöslich in Pentan und Hexan, jedoch löslich in Toluol, Benzol und THF ist.
Ausbeute: 361 mg (97%)
**CHN**: C₄₂H₅₄NPZr FW 695.08 g/mol

| | Berechnet | Gefunden (1. Messung) | Gefunden (2. Messung) |
|---|---|---|---|
| C | 72.57 | 59.30 | 62.75 |
| H | 7.83 | 7.26 | 9.68 |
| N | 2.02 | 2.71 | 2.70 |

**¹H-NMR** (300.1 MHz, C₆D₆): δ = 1.21 (d, ²J_{HP} = 12.87 Hz. 6 H, *M*e₂P), 1.35 (br, m, 6 H, CH-C*H*₂-CH), 1.65 (s, CH₂-Zr). 2.04 (d, 6 H, ³J_{HH} = 1.36 Hz, N-C(C*H*₂)₃), 2.36 (s, 6H, C₅Me₄), 2.41 (d, ^{4,5}J_{HP} = 7.75 Hz, 6 H, C₅Me_{4;} 3 H, C*H*_{Ad}), 7.20-6.80 (m, 15 H, *Ph)* ppm.
**¹³C-NMR** (75.5 MHz, C₆D₆): δ = 12.1 (d, ^{3,4}J_{CP} = 3.0 Hz, C₅*M*e₄). 14.9 (s, C₅*M*e₄), 19.4 (d, ¹J_{CP} = 69.8 Hz, Me₂P), 21.4 (s, Zr-CH₂-Ph), 29.9 (s, CH_{Ad}). 36.1 (s, CH-CH₂-CH), 44.8 (d, ³J_{CP} = 4.1 Hz, N-C(CH₂)₃), 52.5 (d, ²J_{CP} = 4.4 Hz, P-N-C_{Ad}), 117.7 (d, ^{2,3}J_{CP} = 16.6 Hz, C(Me)=*C*(Me)), 120.7 (d, ^{2,3}J_{CP} = 19.6 Hz, C(Me)=C(Me)), 125.6 *(Bzₚₐᵣₐ),* 128.5 *(Bzₘₑₜₐ),* 129.3 (*Bzₒᵣₜₕₒ*), 137.8 (*Bzᵢₚₛₒ*) ppm. Das Signal des *ipso*-C_{Cp} ist im ¹³C-NMR-Spektrum nicht zu beobachten.
**³¹P-NMR** (121.5 MHz, C₆D₆): δ = 29.9 ppm.
**EI/MS** (70 eV): m/z (%) = 331 (25.2) [Ligand⁺], 211 (100) [Me₂PNAd⁺], 196 (57) [MePNAd⁺], 170 (10), 154 (37), 150 (12) [NAd⁺], 135 (73) [Ad⁺], 105 (21), 94 (72), 91 (22) [Bz⁺], 79 (36), 77 (31) [Ph⁺], 61 (18), 55 (11), 41 (35).
IR (Nujol): Wellenzahl = 3470 (w), 2726 [v (C-CH₃)] (m), 2281 (m), 1377 [v (C-C)] (m), 1303 [v (P=N)] (s), 1203 (m), 1154 (s), 1096 (m), 1035 (m), 723 [v (P-C)] (s) cm⁻¹.
**UV/VIS** (THF): λₘₐₓ = 279 nm.

### Ausführungsbeispiel 19:

### Herstellung von [(η⁵:η¹-C₅H₄PPh₂NDip)Zr(CH₂Ph)₃]

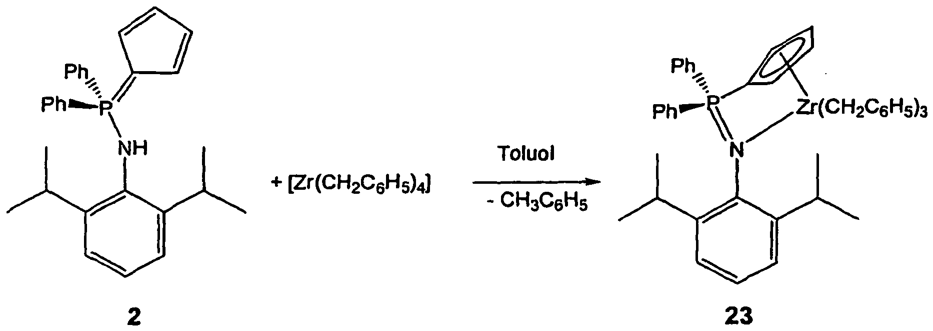

Eine Suspension von 500 mg [Zr(CH₂C₆H₅)₄] (1.09 mmol, 1.00 eq) in 20 mL Toluol wurde auf -78°C abgekühlt -78°C abgekühlt und eine auf ebenfalls -78°C vorgekühlte Suspension von 464 mg C₅H₄PPh₂NHDip (1,09 mmol, 1,00 eq) in 5 mL Toluol wurde dazu getropft. Es wurde innerhalb von 12 bis 16 Stunden auf RT erwärmt, wobei sich eine limongelbe Suspension sowie ein weißer Niederschlag gebildet hatten. Es wurde über Celite filtriert, der weiße Rückstand dreimal mit je 5 mL Toluol gewaschen und das Filtrat bis zur Trockene eingeengt. Der gelbbraune Rückstand ist unlöslich in Hexan, aber löslich in Benzol, Toluol und Et₂O. Ausbeute: 232 mg (27%).
**CHN:** C₅₀H₅₂NPZr MW: 789.15 g/mol
**¹H-NMR** (300.1 MHz, d⁸-THF): δ = 0.81 (br, s. 12 H, *M*e₂CH), 2.52 (br, s, Zr-C*H*₂Ph), 3.37 (m, 2 H, Me₂C*H*), 6.10 (m, 2 H, *H*_{Cp}), 6.57 (m, 2 H, *H*_{Cp}), 6.72 (m, 1 H, *p*-Dip), 6.88 (m, 2 H, *m*-Dip), 7.01-7.19 (m, 15 H, CH₂*Ph)*, 7.33-7.42 (m, 6 H, *m*-/*p*-Ph), 7.61 (m, 4 H, *o-*Ph) ppm.
**³¹P-NMR** (81.0 MHz, d⁸-THF): δ = 13.2 ppm.
**³¹P-NMR** (81.0 MHz, C₆D₆): δ = 14.2 ppm.

### Ausführungsbeispiel 20:

### Herstellung von [(η⁵-C₅H₄PPh₂NDip)Zr(NMe₂)₃]

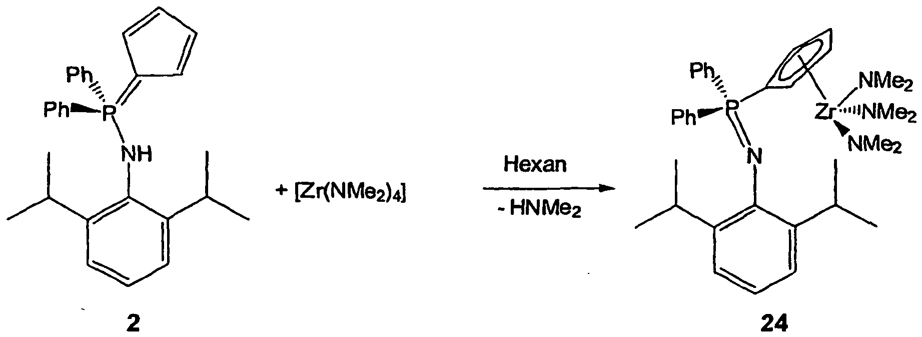

Eine Lösung von 629 mg [Zr(NMe₂)₄] (2,35 mmol, 1,00 eq) in 35 mL Hexan wurde auf -78°C abgekühlt und 1,00 g C₅H₄PPh₂NHDip (2,35 mmol, 1,00 eq) portionsweise als Feststoff zugegeben. Es wurde innerhalb von 12 bis 16 Stunden auf RT erwärmt, wobei sich eine blassgelbe Lösung sowie ein weißer Niederschlag gebildet hatten. Es wurde vollständig eingeengt und bei -30°C aus Hexan umkristallisiert.
Der weiße Feststoff ist schwerlöslich in Hexan, aber löslich in Toluol und Benzol. Ausbeute: 904 mg (60%).
**CHN**: C₃₅H₄₉N₄PZr MW: 647.99 g/mol

| | berechnet | gefunden (1. Messung) | gefunden (2. Messung) |
|---|---|---|---|
| C | 64.87 | 62.31 | 63.26 |
| H | 7.62 | 6.43 | 6.81 |
| N | 8.65 | 6.16 | 7.40 |

**¹H-NMR** (300.1 MHz, C₆D₆): 15 = 1.14 (d, ³*J*_{HH} = 6.9 Hz, 12 H, *M*e₂CH), 2.92 (s, 18 H, NMe₂), 3.76 (sept, 2 H, ³*J*_{HH} = 6.9 Hz, Me₂C*H*), 6.27 (br, m, 2 H, *H*_{Cp}), 6.59 (br, m, 2 H, *H*_{Cp}),
6.90-7.06 (m, 9 H, *m*-/*p*-Ph; *m*-/*p*-Dip), 7.43 (m, 4 H, *o*-Ph) ppm.
**³¹C-NMR** (75.5 MHz, C₆D₆): δ = 24.1 (*M*e₂CH), 28.9 (Me₂CH), 45.1 (s, Zr-N*M*e₂), 113.6 (d, ^{2,3}*J*_{CP} = 12.7 Hz, *C*_{Cp}), 117.5 (d, ^{2,3}*J*_{CP} = 12.9 Hz, C_{Cp}), 119.9 (d, ⁵*J*_{CP} = 5.7 Hz, *p*-Dip), 923.2 (d, ⁴*J*_{CP} = 2.6 Hz, *m*-Dip), 128.2 (s, *p*-Ph), 130.8 (s, *m*-Ph), 132.0 (d, ²*J*_{CP} = 9.4 Hz, *o*-Ph), 142.8 (s, *o*-Dip) ppm.
Die Signale der *ipso*-C-Atome sind im ¹³C-NMR-Spektrum nicht zu beobachten. **³¹P-NMR** (81.0 MHz, C₆D₆): δ =-12.4 ppm.
**EI/MS** (70 eV): m/z (%) = 425 (14.0) [Ligand⁺], 253 (12.8) [Ph₂PCp⁺], 133 (18.0), 28 (100.0).
**IR** (Nujol): 2855 [v (N-C)] (s), 1400 [v (P=N)] (s), 702 [v (P-C)] (m), 453 (m), 415 [v (Zr-N)] (s) cm⁻¹.

### Kristallstrukturanalyse

| **Kristalldaten:** | | |
|---|---|---|
| Identifizierungsnummer | eq106 | |
| Gestalt, Farbe | scheibenförmig, hellgelb | |
| Kristallgröße | 0,45 x 0,42 x 0,03 mm³ | |
| Kristallsystem | monoklin | |
| Raumgruppe | P 21/n, Z = 4 | |
| Abmessungen der Elementarzelle | a = 17,944(2) Å | α = 90°. |
| | b = 8,8621 (9) Å | β 111,379(10)°. |
| | c = 23,610(3) Å | γ = 90°. |
| Volumen | 3496,1(8) Å³ | |
| Zellbestimmung | 11903 Peaks mit Theta 2,5 bis 25,7°. | |
| Empirische Formel | C35 H49 N4 P Zr | |
| Formelmasse | 647,97 | |
| Dichte (berechnet) | 1,231 Mg/m³ | |
| Absorptionskoeffzient | 0,388 mm⁻¹ | |
| F(000) | 1368 | |
| | | |

| **Datenerfassung** | | |
|---|---|---|
| Diffraktometertyp | IPDS1 | |
| Wellenlänge | 0,71073 Å | |
| Temperatur | 293(2) K | |
| Theta-Bereich für Datenerfassung | 2,44 bis 25,47°. | |
| Indexbereiche | -21<=h<=20, -10<=k<=10, -28<=l<=28 | |
| Datenerfassungssoftware | STOE Expose | |
| Zellverfeinerungssoftware | STOE Cell | |
| Datenreduktionssoftware | STOE Integrate | |
| | | |

| **Auflösung und Verfeinerung** | | |
|---|---|---|
| gesammelte Reflexe | 24871 | |
| unabhängige Reflexe | 6389 [R(int) = 0.0662] | |
| Vollständigkeit bis theta = 25,00 | 99,4% | |
| Beobachtete Reflexe | 4579[I>2sigma(I)] | |
| Reflexe, die für die Verfeinerung verwendet wurden | 6389 | |
| Absorptionskorrektur | semiempirisch | |
| Max. and min. Transmission | 0,967 und 0,8646 | |
| Größter Differenzpeak und -lücke | 0,328 und -0,309 e,Å⁻³ | |
| Lösung | direct/ difmap | |
| Verfeinerung | Methode der kleinsten Fehlerquadrate bezogen auf F2 | |
| Behandlung von H-Atomen | gemischt | |
| Verwendete Programme | SHELXS-97 (Sheldrick, 1997) | |
| | SHELXL-97 (Sheldrick, 1997) | |
| | Diamond 2,1, STOE IPDS1 software | |
| Daten / Einschränkungen / Parameter | 6389 / 0 / 370 | |
| Güte des Fittes an F² | 0,857 | |
| R index (alle Daten) | wR2 = 0,0611 | |
| R index konventionell [I>2sigma(I)] | R1 = 0,0312 | |

### Ausführungsbeispiel 21:

### Herstellung von [(η⁵-C₅H₄PMe₂NDip)Zr(NMe₂)₃]

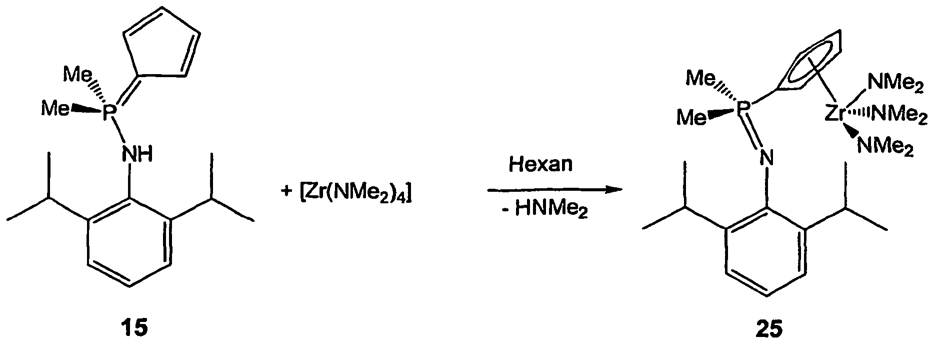

Eine Lösung von 682 mg [Zr(NMe₂)₄] (2,55 mmol, 1,00 eq) in 30 mL Hexan wurde auf -78°C abgekühlt und 770 mg C₅H₄PMe₂NHDip (2,55 mmol, 1,00 eq) portionsweise als Feststoff zugegeben. Es wurde innerhalb von 12 bis 16 Stunden auf RT erwärmt, wobei sich ein weißer Niederschlag gebildet hatte. Es wurde vollständig eingeengt. Der weiße Feststoff ist schwerlöslich in Hexan, aber löslich in Toluol und Benzol.
Ausbeute: 1,21 g (90%).
**CHN:** C₂₅H₅₀N₄PZr MW: 528,89 g/mol

| | berechnet | gefunden (1.,Messung) | gefunden (2. Messung) |
|---|---|---|---|
| C | 56.77 | 52.45 | 54.07 |
| H | 9.53 | 7.89 | 8.07 |
| N | 10.59 | 8.89 | 9.29 |

**¹H-NMR** (300.1 MHz, C₆D₆): δ = 1.28 (d, ²*J*_{HP} = 12.0 Hz, P*Me*₂), 1.35 (d, ³*J*_{HH} = 6.8 Hz, 12 H, *Me*₂CH), 2.92 (s, 18 H, N*Me*₂), 3.76 (sept, 2 H, ³*J*_{HH} = 6.8 Hz, Me₂C*H*), 6.09 (br, m, 2 H, *H*_{Cp}), 6.42 (br, m, 2 H, *H*_{Cp}), 7.08 (t, 1 H, ³*J*_{HH} = 7.7 Hz, *p*-Dip), 7.25 (dd, 2H, ³*J*_{HH} = 7.0 Hz, ⁵*J*_{HP} = 1.2 Hz, *m*-Dip) ppm.
**¹³C-NMR** (75.5 MHz, C₆D₆): δ = 19.0 (d, ²*J*_{CP} = 62.7 Hz, P*Me*₂), 24.4 (*Me*₂CH), 28.5 (Me₂*C*H), 45.0 (s, Zr-N*Me*₂), 113.3 (d, ^{2,3}*J*_{CP} = 11.5 Hz, *C*_{Cp}), 114.4 (d, ^{2,3}*J*_{CP} = 11.9 Hz, *C*_{Cp}), 119.8 (d, ⁵*J*_{CP} = 4.1 Hz, *p*-Dip), 123.1 (d, ⁴*J*_{CP} = 3.3 Hz, *m*-Dip), 142.8 (d, ³*J*_{CP} = 7.6 Hz, o-Dip) ppm.
Das Signal des *ipso*-C_{Cp}-Atoms ist im ¹³C-NMR-Spektrum nicht zu beobachten. **³¹P-NMR** (81.0 MHz, C₆D₆): δ = -11.3 ppm.
**EI/MS** (70 eV): m/z (%) = 301 (23.1) [Ligand⁺], 286 (26.0) [C₅H₄PMeNDip⁺], 258 (12.0) [C₅H₄PMe₂N(Me₂CHPh)⁺], 177 (28.3) [NDip⁺], 162 (100).
**IR** (Nujol): 2854 [v (N-C)] (s), 1400 [v (P=N)] (m), 671 [v (P-C)] (w), 465 (m), 440 [v (Zr-N)] (s) cm⁻¹.

### Kristallstrukturanalyse

| **Kristalldaten:** | | |
|---|---|---|
| Identifizierungsnummer | eq103 | |
| Gestalt, Farbe | blockförmig, farblos | |
| Kristallgröße | 0,36 x 0,12 x 0,09 mm³ | |
| Kristallsystem | triklin | |
| Raumgruppe | P -1 Z = 2 | |
| Abmessungen der Elementarzelle | a = 8,2685(14) Å | α = 96,14(2)°. |
| | b = 9,0132(17) Å | β = 92,18(2)°. |
| | c = 21,211 (4) Å | γ = 94,00(2)°. |
| Volumen | 1566,2(5) Å³ | |
| Zellbestimmung | 8000 peaks mit Theta 3,0 bis 26,0°. | |
| Empirische Formel | C28,50 H49 N4 P Zr | |
| Formelmasse | 569,91 | |
| Dichte (berechnet) | 1,208 Mg/m³ | |
| Absorptionskoeffizient | 0,424 mm⁻¹ | |
| F(000) | 606 | |
| | | |

| **Datenerfassung** | | |
|---|---|---|
| Diffraktometertyp | IPDS1 | |
| Wellenlänge | 0,71069 Å | |
| Temperatur | 293(2) K | |
| Theta-Bereich für Datenerfassung | 1,93 bis 26,00°. | |
| Indexbereiche | -10<=h<=10, -11<=k<=11, -25<=l<=26 | |
| Datenerfassungssoftware | STOE Expose | |
| Zellverfeinerungssoftware | STOE Cell | |
| Datenreduktionssoftware | STOE Integrate | |
| | | |

| **Auflösung und Verfeinerung:** | | |
|---|---|---|
| gesammelte Reflexe | 15444 | |
| unabhängige Reflexe | 5714 [R(int) = 0,0685] | |
| Vollständigkeit bis theta = 25,00° | 94,2% | |
| beobachtete Reflexe | 4144[I>2sigma(I)] | |
| Reflexe, die für die Verfeinerung verwendet wurden | 5714 | |
| Absorptionskorrektur | semiempirisch | |
| Max. and min. Transmission | 0,9924 und 0,8993 | |
| Größter Differenzpeak und -lücke | 0,634 and -0,668 e,Å⁻³ | |
| Lösung | direct/ difmap | |
| Verfeinerung | Methoder der kleinsten Fehlerquadrate bezogen auf F2 | |
| Behandlung von H-Atomen | gemischt | |
| Verwendete Programme | SIR97 (Giacovazzo et al, 1997) | |
| | SHELXL-97 (Sheldrick, 1997) | |
| | Diamond 2,1, STOE IPDS1 software | |
| Daten / Einschränkungen / Parameter | 5714/2/332 | |
| Güte des Fittes an F² | 0,915 | |
| R index (alle Daten) | wR2 = 0,1035 | |
| R index konventionell [I>2sigma(I)] | R1 = 0,0423 | |

### Ausführungsbeispiel 22:

### Herstellung von [(η¹:η¹-C₅Me₄PMe₂NAd)Zr(NMe₂)₃]

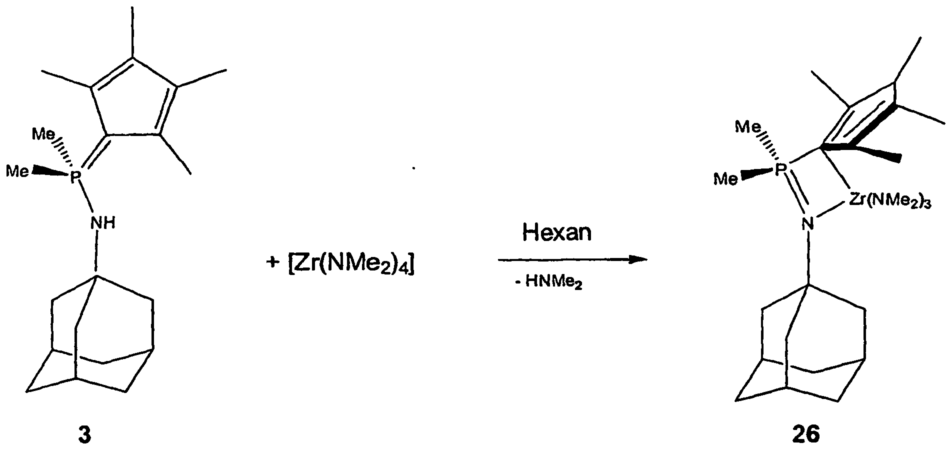

Eine Lösung von 720 mg [Zr(NMe₂)₄] (2,69 mmol, 1.00 eq) in 50 mL Hexan wurde auf-78°C abgekühlt und 741 mg C₅Me₄PMe₂NHAd (2,69 mmol, 1,00 eq) portionsweise als Feststoff zugegeben. Es wurde innerhalb von 12 bis 16 Stunden auf RT erwärmt, wobei sich ein weißer Niederschlag gebildet hatte. Es wurde vollständig eingeengt und bei -30°C aus Hexan umkristallisiert. Der weiße Feststoff ist schwerlöslich in Hexan, aber löslich in Toluol und Benzol.
Ausbeute: 1,03 g (69%).
**CHN:** C₂₅H₅₀N₄PZr MW: 528.89 g/mol

| | berechnet | gefunden (1. Messung) | gefunden (2. Messung) |
|---|---|---|---|
| C | 58.54 | 50.22 | 50.51 |
| H | 9.28 | 7.99 | 7.93 |
| N | 10.11 | 7.45 | 7.63 |

**¹H-NMR** (300.1 MHz, C₆D₆): δ = 1.29 (d, ²*J*_{HP} = 11.7 Hz, 6 H, P*Me*₂). 1.62 (br, m, 6 H, C*H*_{2Ad}), 1.79 (br, m, 6 H, N-C(C*H*₂)₃), 2.00 (s, 3 H, C*H*_{Ad}), 2.18 (br, m, 6 H, C₅*Me*₄), 2.32 (br, m, 6 H, C₅*Me*₄), 3.04 (s, 18 H, N*Me*₂) ppm.
**¹³C-NMR** (75.5 MHz, C₆D₆): δ = 12.1 (s, C₅*Me*₄), 15.3 (s, C₅*Me*₄), 21.9 (d, ¹*J*_{CP} = 48.6 Hz, P*Me*₂), 30.7 (s, CH_{Ad}), 36.8 (s, CH_{2Ad}), 45.1 (s, Zr-N*Me*₂), 46.3 (d, ³*J*_{CP} = 8.5 Hz, NC(CH₂)₃), 55.5 (d, ²*J*_{CP} = 6.0 Hz, P=N-C_{Ad}), 84.4 (s, *ipso*-C_{CP}), 120.9 (d, ^{2,3}*J*_{CP} = 9.4 Hz, C(Me)=C(Me)), 126.4 (d, ^{2,3}*J*_{CP} =12.8 Hz, C(Me)=*C*(Me)) ppm. **³¹P-NMR** (81.0 MHz, C₆D₆): δ = 13.3 ppm.
**EI/MS** (70 eV): m/z (%) = 332 (3.6) [Ligand⁺], 269 (2.8), 227 (42.6), 211 (19.0) [Me₂PNAd⁺], 196 (18.8) [MePNAd⁺], 170 (100.0), 150 (65.7) [AdN⁺], 136 (14.9) [Ad⁺].
**IR** (Nujol): 2854 [v (N-C)] (s), 2761 (w), 1399 [v (P=N)] (m), 1294 (w), 1282 (w), 1034 (s), 902 (w), 777 [v (P-C)] (m), 679 (w), 646 (m), 534 (m), 482 [v (Zr-N)] (m) cm⁻¹.

### Kristallstrukturanalyse

| **Kristalldaten:** | | |
|---|---|---|
| Identifizierungsnummer | eq85 | |
| Gestalt, Farbe | prismatisch, farblos | |
| Kristallgröße | 0,42 x 0,42 x 0,18 mm³ | |
| Kristallsystem | monoklin | |
| Raumgruppe | P21/nZ = 4 | |
| Abmessungen der Elementarzelle | a = 10,069(2) Å | α = 90°. |
| | b = 28,431 (9) Å | β = 100,32(3)°. |
| | c = 10,149(2) Å | γ = 90°. |
| Volumen | 2858,3(13) Å³ | |
| Zellbestimmung | 0 Peaks mit Theta 0 bis 0°. | |
| Empirische Formel | C27 H51 N4 P Zr | |
| Formelmasse | 553,91 | |
| Dichte (berechnet) | 1,287 Mg/m³ | |
| Absorptionskoeffizient | 0,462 mm⁻¹ | |
| F(000) | 1184 | |

| **Datenerfassung** | | |
|---|---|---|
| Diffraktometertyp | IPDS1 | |
| Wellenlänge | 0,71073 Å | |
| Temperatur | 293(2) K | |
| Theta-Bereich für Datenerfassung | 2,16 to 26,02°. | |
| Indexbereiche | -12<=h<=12, -34<=k<=35, -12<=l<=12 | |
| Datenerfassungssoftware | STOE Expose | |
| Zellverfeinerungssoftware | STOE Cell | |
| Datenreduktionssoftware | STOE Integrate | |
| | | |

| **Auflösung und Verfeinerung** | | |
|---|---|---|
| gesammelte Reflexe | 22397 | |
| unabhängige Reflexe | 5577 [R(int) = 0,0313] | |
| Vollständigkeit bis theta = 25,00 | 99,9% | |
| Beobachtete Reflexe | 4558[I>2sigma(I)] | |
| Reflexe, die für die Verfeinerung ver- | 5577 | |
| wendet wurden | | |
| Absorptionskorrektur | semiempirisch | |
| Max. and min. Transmission | 0,8906 and 0,8229 | |
| Größter Differenzpeak und -lücke | 0,426 and -0,277 e,Å⁻³ | |
| Lösung | direct/ difmap | |
| Verfeinerung | Methode der kleinsten Fehlerquadrate bezogen auf F2 | |
| Behandlung von H-Atomen | gemischt | |
| Verwendete Programme | SHELXS-86 (Sheldrick, 1986) | |
| | SHELXL-97 (Sheldrick, 1997) | |
| | Diamond 2,1, STOE IPDS1 software | |
| Daten / Einschränkungen / Parameter | 5577/0/301 | |
| Güte des Fittes an F² | 0,995 | |
| R index (alle Daten) | wR2 = 0,0707 | |
| R index konventionell [I>2sigma(I)] | R1 = 0,0259 | |

### Ausführungsbeispiel 23:

### Herstellung von [(η⁵:η¹-Cp^{™}PPh₂NDip)Zr(NMe₂)₃]

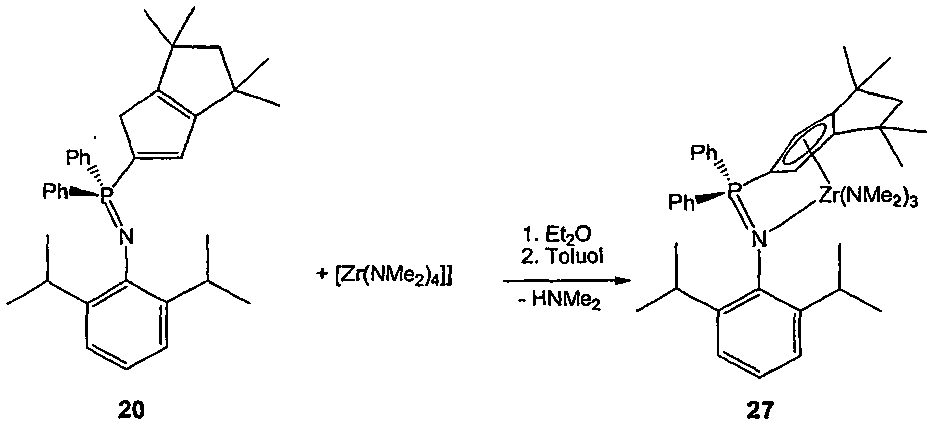

Eine Lösung von 256 mg [Zr(NMe₂)₄] (0,96 mmol, 1,00 eq) in 20 mL Et₂O wurde auf -78°C abgekühlt und 500 mg CpH^{TM}PPh₂NDip (0,96 mmol, 1,00 eq) portionsweise als Feststoff zugegeben. Es wurde innerhalb von 12 bis 16 Stunden auf RT erwärmt, wobei sich die farblose Lösung schwach grün gefärbt hatte. Es wurde bis zur Trockene eingeengt und der blassgrüne Rückstand in 20 mL THF gelöst. Die Lösung wurde 3 d bei 50°C erhitzt.
**³¹P-NMR** (81.0 MHz, 1. Et₂O, 2. THF): δ= 1. nach Rühren innerhalb von 12 bis 16 Stunden in Et₂O: 2.3 (35%), -14.8 (65%) [Ligand] ppm; 2. nach 3 d Rühren in THF bei 50°C: fünf Signale, Hauptsignal bei -14.5 (49%) [Ligand] ppm.

### Ausführungsbeispiel 24:

### Herstellung von [(η⁵:η¹-Cp^{™}PPh₂NAd)Zr(NMe₂)₃]

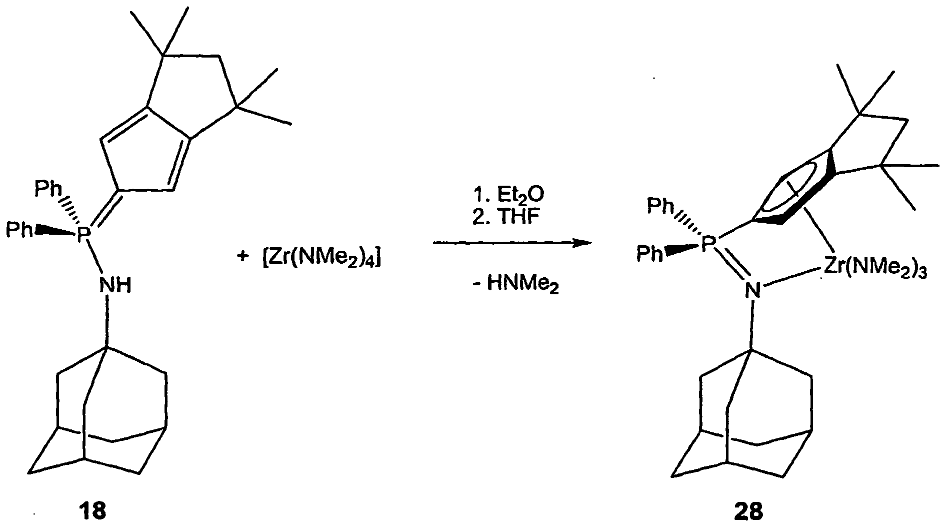

Eine Lösung von 270 mg [Zr(NMe₂)₄] (1,01 mmol, 1,00 eq) in 20 mL Et₂O wurde auf -78°C abgekühlt und 500 mg Cp^{™}PPh₂NHAd (1,01 mmol, 1,00 eq) portionsweise als Feststoff zugegeben. Es wurde innerhalb von 12 bis 16 Stunden auf RT erwärmt, wobei aus der schwarzen Lösung ein grauer Niederschlag ausfiel. Es wurde bis zur Trockene eingeengt und der dunkelgraue Rückstand in 20 mL THF gelöst. Die Lösung wurde 3 d bei 50°C erhitzt.
**³¹P-NMR** (81.0 MHz, 1. Et₂O, 2. C₆D₆): δ = 1. nach Rühren für 12 bis 16 Stunden in Et₂O: 16.7 (100%) [Ligand] ppm; 2. nach 3 d Rühren in THF bei 50°C: 16.7 (100%) [Ligand] ppm.

### Ausführungsbeispiel 25:

### In situ-Herstellung von [(η⁵:η¹-C₅H₄PPh₂NDip)Zr(CH₂SiMe₃)₃]

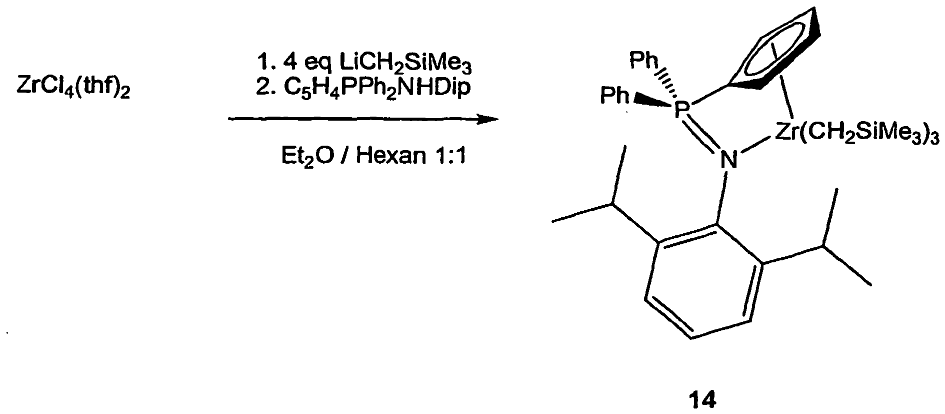

377 mg (1,00 mmol, 1,00 eq) LiCH₂SiMe₃ wurden als Feststoff bei 0°C zu einer Suspension von 377 mg ZrCl₄(thf)₂ (1,00 mmol, 1,00 eq) in 10 mL Hexan/Et₂O = 1 : 1 gegeben und 2 h unter Rühren auf 0°C gehalten. Dabei fiel ein weißer Niederschlag aus. Anschließend wurden bei 0°C 426 mg C₅H₄PPh₂NHDip (1,00 mmol, 1,00 eq) als Feststoff zugegeben und die Reaktionsmischung innerhalb von 12 bis 16 Stunden auf RT erwärmt. Dabei veränderte sich die Farbe der Suspension von Gelb nach Graugrün. Es wurde auf die Hälfte des Ausgangsvolumens eingeengt, über Celite filtriert und der weiße Rückstand mit 10 mL Hexan gewaschen. Das Filtrat wurde bis zur Trockene eingeengt. Dabei wurde ein orangefarbenes Öl erhalten. Durch Umkristallisation aus Hexan bei -80°C wurden 252 mg eines weißen Feststoffs erhalten (Ausbeute 32%).
**¹H-NMR** (300.1 MHz, C₆D₆): δ = 0.20 (s, 27 H, Si(C*H*₃)₃), 0.89 (s, 6 H, Zr-C*H*₂-Si), 1.11 (d, ³*J*_{HH} = 7.0 Hz, 12 H, *Me*₂CH), 3.69 (sept, 2 H, ³*J*_{HH} = 7.4 Hz, Me₂C*H*), 6.43 (m, 2 H, *H*_{Cp}), 6.65 (m, 2 H, *H*_{Cp}), 6.99 (m, 6 H, *m*-/*p*-Ph), 7.03 (m, 2 H, *m*-Dip), 7.13 (m, 1 H, *p*-Dip), 7.42-7.49 (m, 4 H, *o*-Ph) ppm.
**³¹P-NMR** (81.0 MHz, C₆D₆): δ = -10.9 ppm.

### Ausführungsbeispiel 26:

### Herstellung von [η⁵:η¹-C₅H₄PPh₂NDip]Y(CH₂SiMe₃)₂(thf)

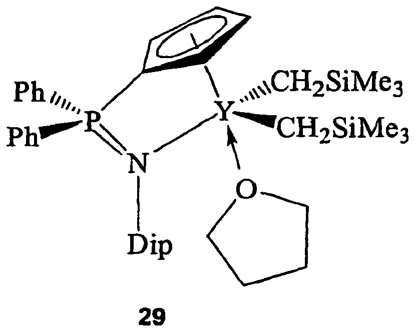

Zu einer Suspension von YCl₃(thf)₃ (411 mg, 1.00 mmol), THF (0.3 mL, 3.7 mol) und [η⁵:η¹-C₅H₄PPh₂NHDip] (425 mg, 1.00 mmol) in Diethylether (30 mL) wurde eine Lösung von LiCH₂SiMe₃ (286 mg, 3.04 mmol) in Hexan (15 mL) bei 0°C getropft. Nach beendeter Zugabe von LiCH₂SiMe₃ wurde die Lösung für weitere 1,5 h bei 0°C gerührt; anschließend wurde das bei der Reaktion gebildete LiCl abfiltriert. Das Lösungsmittel wurde abgezogen und der Rückstand mit Hexan extrahiert. Kristallisation bei -30 °C ergab einen weißen mikrokristallinen Feststoff. Ausbeute: 34% (231 mg).
**¹H-NMR (300.1 MHz, C₆D₆): δ** = -0.48 (br. s, 4 H, C*H*₂TMS), 0.46 (s, 18 H, CH₂*TM*S), 0.74 (br. s, 12 H, *Me*₂CH), 1.14 (m, 4 H, *THF*), 3.18 (sept, ³*J*_{HH} = 6.8 Hz, 2 H, Me₂*CH*), 3.66 (m, 4 H, *THF),* 6.74 (m, 2 H, *Cp*), 6,90-7.00 (m, 9 H, *Ar*), 7.09 (m, 2 H, *Cp*), 7.47 (m, 4 H, *o-Ph*) ppm.
**¹³C{¹H} NMR (75.5 MHz, C₆D₆): δ** = 4.6 (*TMS*CH₂), 24.5 (br, s, *Me*₂CH), 24.9 (*THF*)*,* 29.0 (C*H*Me₂), 31.6, 32.1 (C*H*₂TMS), 70.1 (*THF*), 94.5 (d, *J* = 125 Hz, *ipso-Cp*), 115.5 (d, *J* = 13.5 Hz, *Cp*), 119.0 (d, *J* = 14.4 Hz, Cp), 124.2 (d, *J* = 4.0 Hz, *p-*Dip), 124.4 (d, *J* = 3.5 Hz, *m*-Dip), 128.4(d, *J* = 12 Hz, *m*-Ph), 129.5 (d, *J* = 88 Hz, *ipso*-Ph), 132.3 (d, *J* = 2.9 Hz, *p*-Ph), 133.1 (d, *J* = 9.6 Hz, *o*-Ph), 141.4 (d, *J* = 9.8 Hz, *ipso*-Dip), 145.2 (d, *J* = 6.4 Hz, *o*-Dip), 188.1 ppm.
**³¹P{¹H} NMR (81.0 MHz, C₆D₆):** δ= 9.6 (s) ppm.
**Elementaranalyse:** Berechnet für C₄₁H₅₉NOPSi₂Y (757.99): C 64.97, H 7.85, N 1.85. Gefunden: C 64.56, H 7.80, N 1.90.

### Ausführungsbeispiel 27:

### Herstellung von [η⁵:η¹- C₅Me₄PMe₂NAd]Y(CH₂SiMe₃)₂

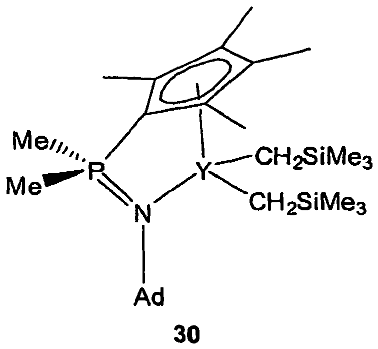

Die Herstellung erfolgt analog zu der in Ausführungsbeispiel 1 beschriebenen Vorgehensweise.
Zu einer Suspension von YCl₃(dme)₂ (275 mg, 1.00 mmol) und [η⁵:η¹-C₅Me₄PMe₂NHAd] (330 mg, 1.00 mmol) in Diethylether (20 mL) wurde eine Lösung von LiCH₂SiMe₃ (290 mg, 3.08 mmol) in Hexan (20 mL) bei 0°C getropft. Nach beendeter Zugabe von LiCH₂SiMe₃ wurde die Lösung für weitere 1,5 h bei 0°C gerührt; anschließend wurde das bei der Reaktion gebildete LiCl abfiltriert. Das Lösungsmittel wurde abgezogen und der Rückstand mit Hexan extrahiert. Kristallisation bei -30°C ergab einen weißen mikrokristallinen Feststoff. Ausbeute: 58% (343 mg).
**¹H (300.1 MHz, C₆D₆)** -0.70, -0.75 (2*dd, 2*2H, ²*J*_{HY} = 3.0 Hz, ²*J*_{HH} = 11 Hz, ABX System), 0.40 (s, 18 H, 2*Si*Me*₃), 1.13 (d, 6 H, ²*J*_{HP} = 12.5 Hz, *Me*₂P), 1.56 (m, 6 H, Ad), 1.71 (m, 6 H, Ad), 2.00 (m, 3 H, Ad), 2.03 (s, 6 H, *Me*₄C₅), 2.12 (s, 6 H, *Me*₄C₅).
**¹³C{¹H} (75.5 MHz, C₆D₆)** δ = 4.7 (s, Si*Me*₃), 11.4 (s, *Me*-C=C-Me), 13.9 (s, Me-C=C-*Me*), 21.9 (d, ¹*J*_{CP} = 55 Hz, *Me*₂P), 30.2 (s, H*C*(CH₂)₃), 31.4 (d, ¹*J*_{CY} = 34 Hz, Y-*C*H₂Si) 36.3 (s, *C*H₂(CH)₂), 47.6 (d, ²*J*_{CP} = 9.1 Hz, NC(*C*H₂)₃), 54.2 (s,¹*J*_{CP} = 7.5 Hz, N-C_{Ad}), 84.6 (d, ¹*J*_{CP} = 116 Hz, Me₂P-*C*ᵢₚₛₒ), 121.8 (d, *J*_{CP} = 13 Hz, Me₂*C-*CMe₂), 123.7 (d, *J*_{CP} = 16 Hz, Me₂C-*C*Me₂) ppm.
**³¹{¹H} NMR (81.0 MHz, C₆D₆):** δ= 14.7 ppm.
**Elementaranalyse:** Berechnet für C₂₉H₅₅NPSi₂Y (593.82): C 58.66, H 9.34, N 2.36. Gefunden: C 59.21, H 9.71, N 2.41.

### Ausführungsbeispiel 28:

### Herstellung [η⁵:η¹-C₅Me₄PMe₂NAd]Sc(CH₂SiMe₃)₂]

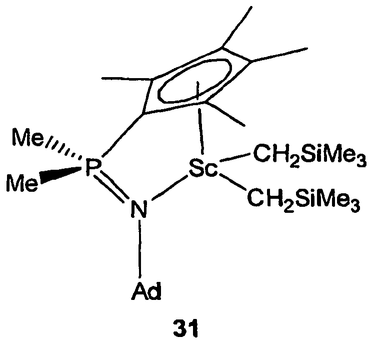

Die Herstellung erfolgt analog zu der in Ausführungsbeispiel 1 beschriebenen Vorgehensweise.
Zu einer Suspension von ScCl₃(thf)₃ (367 mg, 1.00 mmol) und [η⁵:η¹-C₅Me₄PMe₂NHAd] (330 mg, 1.00 mmol) in Diethylether (20 mL) wurde eine Lösung von LiCH₂SiMe₃ (290 mg, 3.08 mmol) in Hexan (20 mL) bei 0°C getropft. Nach beendeter Zugabe von LiCH₂SiMe₃ wurde die Lösung für weitere 1,5 h bei 0°C gerührt; anschließend wurde das bei der Reaktion gebildete LiCl abfiltriert. Das Lösungsmittel wurde abgezogen und der Rückstand mit Hexan extrahiert. Kristallisation bei -30°C ergab einen weißen mikrokristatiinen Feststoff. Ausbeute: 42% (231 mg).
**¹H NMR (300.1 MHz, C₆D₆):** δ = -0.40 (d, AB-System, ²*J*_{HH} = 11.2 Hz, 2 H, C*H*₂SiMe₃), -0.37 (d, AB-System, ²*J*_{HH} = 11.2 Hz, 2 H, C*H*₂SiMe₃), 0.36 (s, 18 H, 3*CH₂Si*Me*₃), 1.17 (d, ²*J*_{HP} = 12.5 Hz), 1.60 (m, 6 H, NC(C*H*₂)₃), 1.83 (m, 6 H, C*H*₂(CH)₂), 2.01 (s, 6 H, C₅*Me*₄), 2.02 (m, 3 H, C*H*(CH₂)₃), 2.14 (s, C₅*Me*₄) ppm.
**¹³{¹H} NMR (75.5 MHz, C₆D₆):** δ = 4.5 (s, Si*Me*₃), 12.0 (d, *J* = 6.9 Hz, C₅*Me*₄), 14.4 (C₅*Me*₄). 21.6 (d, ²*J*_{CP} = 55 Hz, *Me*₂P), 30.4 (C*H*(CH₂)₃), 36.5 (C*H*₂(CH₂), 47.2 (d, *J* = 8.7 Hz, NC(C*H*₂)₃), 54.6 (d, *J* = 6.8 Hz NC), 84.8 (d, ¹*J*_{CP} = 114 Hz, *ipso*-C₅Me₄), 122.5 (d, *J* = 13.3 Hz, C₅Me₄), 125.7 (d, *J* = 14.4 Hz, C₅Me₄) ppm.
**³¹P{¹H} NMR (81.0 MHz, C₆D₆):** δ = 12.0 (s) ppm
**Elementaranalyse:** Berechnet für C₂₉H₅₅NPScSi₂ (549.87): C 63.35, H 10.08, N 2.55. Gefunden: 62.92, H 9.78, N 2.41.

### Ausführungsbeispiel 29:

### Herstellung von [η⁵:η¹-C₅H₄PPh₂NDip]Sc(CH₂SiMe₃)₂

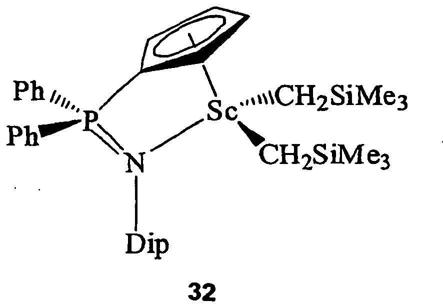

Die Herstellung erfolgt analog zu der in Ausführungsbeispiel 1 beschriebenen Vorgehensweise.
Zu einer Suspension von ScCl₃(thf)₃ (367 mg, 1.00 mmol) und [η⁵:η¹- C₅H₄P Ph₂NHDip] (425 mg, 1.00 mol) in Diethylether (20 mL) wurde eine Lösung von LiCH₂SiMe₃ (290 mg, 3.08 mmol) in Hexan (20 mL) bei 0°C getropft. Nach beendeter Zugabe von LiCH₂SiMe₃ wurde die Lösung für weitere 1,5 h bei 0°C gerührt; anschließend wurde das bei der Reaktion gebildete LiCl abfiltriert. Das Lösungsmittel wurde abgezogen und der Rückstand mit Hexan extrahiert. Kristallisation bei -30°C ergab einen weißen mikrokristallinen Feststoff. Ausbeute: 32% (206 mg).
**¹H NMR (300.1 MHz, C₆D₆):** δ = 0.12 (br, s, 2 H, C*H*₂SiMe₃), 0.25 (br, s, 2 H, C*H*₂SiMe₃), 0.37 (s, 18 H, CH₂Si*Me*₃), 1.25 (br, s, 12 H, Me₂CH), 3.42 (sept, ³*J*_{HH} = 6.8 Hz, 2 H, Me₂C*H*), 6.77 (m, 2 H, C₅*H*₄), 8.85-7.09 (m, 11 H, C₅*H*₄, Ph, Dip), 7.41 (m, 4 H, *o*-Ph) ppm.
**¹³C{¹H} NMR (75.5 MHz, C₆D₆): δ =** 3.9 (s, CH₂Si*Me*₃), 23.5 (br, s, *Me*₂CH), 26.3 (br, s, *Me*₂CH), 28.8 (s, Me₂*C*H), 42.2 (br, s, CH₂TMS), 92.7 (d, *J* = 121 Hz, *ipso-*C₅H₄), 118.3 (d, *J* = 12.9 Hz, C₅H₄), 119.2 (d, *J* = 14.2 Hz, *C*₅H₄), 124.8 (d, *J* = 3.4 Hz, *m*-Dip), 125.3 (d, *J* = 3.9 Hz, *p*-Dip), 127.7 (d, *J* = 90 Hz, *ipso*-Ph) 128.7 (d, *J* = 12.3 Hz, *m*-Ph), 132.8 (d, *J* = 2.8 Hz, p-Ph), 133.5 (d, *J* = 9.9 Hz, o-Ph), 139.9 (d, *J* = 9.3 Hz, *ipso*-Dip), 145.8 (d, *J* = 6.1 Hz, o-Dip) ppm.
³¹P{¹H} NMR (81.0 MHz, C₆D₆): δ = 12.1 (s) ppm
**Elementaranalyse:** Berechnet für C₃₇H₅₃NPScSi₂ (643.94): C 69.01, H 8.30, N 2.17. Gefunden: 68.71, H 8.59, N 2.10.

### Ausführungsbeispiel 30:

### Herstellung von [η⁵:η¹-C₅H₄PMe₂NDip]Nd(CH₂SiMe₃)₂(thf)

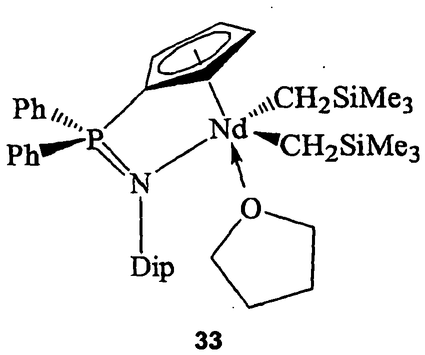

Zu einem Gemisch von NdBr₃(thf)₄ (672.3 mg, 1.00 mmol) und [η⁵:η¹-C₅H₄PMe₂NHDip] (331 mg) in Diethylether (15 mL) wurde innerhalb von 15 min eine Lösung von LiCH₂SiMe₃ (290 mg, 3.08 mmol) in Toluol (15 mL) bei 0°C getropft. Nach beendeter Zugabe von LiCH₂SiMe₃ wurde die Lösung für weitere 15 min gerührt und anschließend auf 1/3 des ursprünglichen Volumens reduziert. Der entstandene Niederschlag wird durch Filtration über Celite entfernt. Die transparente grüne Lösung wird bei -30°C stehen gelassen, um zu kristallisieren. Danach wurden 15 mL Hexan zugegeben und der gebildete blaue Niederschlag abfiltriert.
Ausbeute: 7.6% (55 mg, 0.076 mmol). Die grüne Substanz ist stark paramagnetisch; die Charakterisierung erfolgte mittels Einkristall-XRD. **Elementaranalyse:** Berechnet für C₃₁H₅₇NNdOPSi₂ (691.19): C 53.87, H 8.31, N 2.03. Gefunden: C 51.10, H 10.23, N 1.70.

### Ausführungsbeispiel 31:

### Herstellung von [η⁵:η¹-C₅Me₄PMe₂NAd]Nd(CH₂SiMe₃)₂

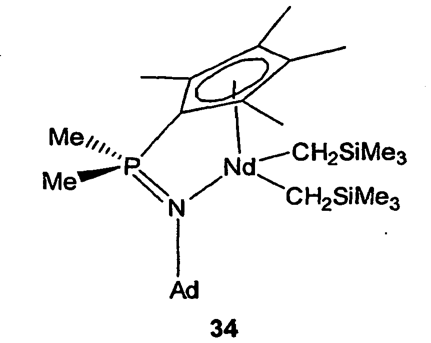

Die Herstellung erfolgt analog zu der in Ausführungsbeispiel 5 beschriebenen Vorgehensweise.
Zu einem Gemisch von NdCl₃(dme) (340 mg, 1.00 mmol) und [η⁵:η¹-C₅Me₄PMe₂NHAd] (340 mg, 1.03 mmol) in Diethylether (15 ml) wurde innerhalb von 15 min eine Lösung von LiCH₂SiMe₃ (290 mg, 3.08 mmol) in Toluol (15 mL) bei 0°C getropft. Nach beendeter Zugabe von LiCH₂SiMe₃ wurde die Lösung für weitere 15 min geführt und anschließend auf 1/3 des ursprünglichen Volumens reduziert. Der entstandene Niederschlag wurde durch Filtration Ober Celite entfernt. Die transparente grüne Lösung wurde bei -30°C stehen gelassen, um zu kristallisieren. Danach wurden 15 mL Hexan zugegeben und der gebildete mikrokristalline blaue Niederschlag abfiltriert. Ausbeute: 49% (315 mg, 0.49 mmol).
**¹H NMR (300.1 MHz, C₆D₆):** δ = -21.72 (s, 6 H, *Me*₄C₅), -13.52 (s, 6 H, *Me*₄C₅), -5.83 (d, ²*J*_{HH} = 10 Hz, 3 H, HC*H*(CH)₂), -4.94 (s, 3 H, C*H*(CH₂)₂), -3.62 (d, ²*J*_{HH} = 10 Hz, 3 H, *H*CH(CH)₂), 2.62 (s, 18 H, Si*Me*₃), 10.58 (d, ²*J*_{HP} = 13 Hz, 6 H, *Me*₂P). 11.45 (s, 6 H, C*H*₂CN), 20.22 (br, s, 2 H C*H*₂Si), 29.45 (br, s, 2 H C*H*₂Si) ppm.
**Elementaranalyse:** Berechnet für C₂₉H₅₅NNdPSi₂ (649.15): C 53.66, H 8.54, N 2.16. Gefunden: C 51.70, H 7.90, N 1.82.

### Ausführungsbeispiel 32:

### Intramolekulare Hydroaminierung von ω-Aminoalkenen mit CG-CpPN-Komplexen des Zirkoniums

Einige der erfindungsgemäßen CG-CpPN-Komplexe des Zirkoniums wurden als Katalysatoren für die intramolekulare Hydroaminierung von ω-Alkenen verwendet. Als Substrat diente dabei 2,2-Diphenyl-pent-4-enamin: 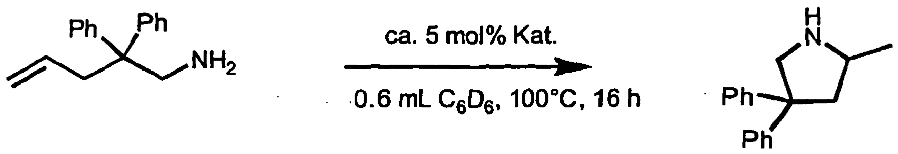 Die Versuche zur Katalyse sind nachfolgend tabellarisch dargestellt:

| Ausbeute / % | Verwendeter Katalysator | Mol% Kat. | Menge Kat. / mg | Menge Amin / mg | TOF/ h⁻¹ (Mini-malwert) |
|---|---|---|---|---|---|
| 86¹) | 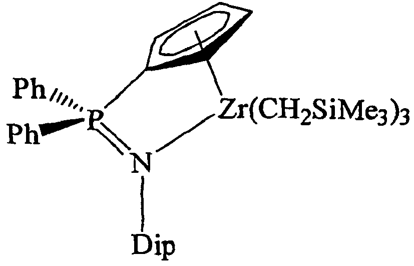 | 4.7 | 14.17 | 93 | 1.1 |
| 100 | 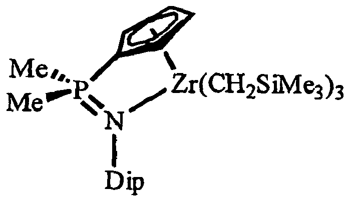 | 5.3 | 13.51 | 93 | 1.2 |
| 100 | 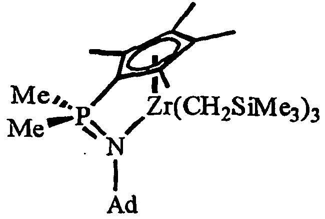 | 4.6 | 13.39 | 93 | 1.4 |
| 67²⁾ | 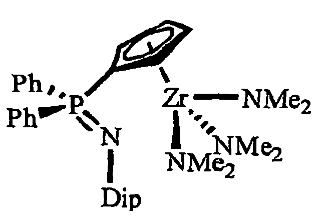 | 4.5 | 11.51 | 93 | 0.9 |
| 100 | 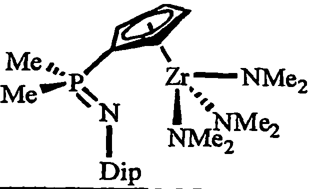 | 5.3 | 11.07 | 93 | 1.2 |
| 100 | 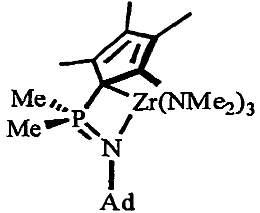 | 4.5 | 9.82 | 93 | 1.4 |

| | | | | | |
|---|---|---|---|---|---|
| ⁽¹⁾ =Reaktionskontrolle nach 20 h zeigte keine weitere Umsetzung, ²⁾ = Reaktionskontrolle nach 20 h zeigte weitere Umsetzung; d.h. das Katalysatorsystem war nach 16 h noch aktiv). | | | | | |

Die Untersuchungen zeigen, dass neutrale CG-Komplexe des Zirkoniums mit dem CpPN-Liganden aktiv in der intramolekularen Hydroaminierung von 2,2-Diphenyl-pent-4-en-1-amin sind.

### Ausführungsbeispiel 33:

### Intramolekulare Hydroaminierung von rrAminoalkenen mit CG-CpPN-Komplexen der Seltenerdmetalle

Beispielhaft sind Katalysestudien zur intramolekularen Hydroaminierung von ω-Aminoalkenen aufgeführt. Die Reaktionen werden bei 25°C durchgeführt und per ¹H-NMR-Spektroskopie in C₆D₆ oder auch per quantitativer GC verfolgt. Als Standardsubstrate dienen 2,2-Dimethyl-pent-4-en-1-amin und 2,2-Diphenyl-pent-4-en-1-amin. Die Selektivität der Cyclisierung ist bei allen verwendeten Katalysatoren 100%. Das bedeutet, dass die angegebenen Ausbeuten den jeweiligen Umsätzen nach der Zeit t entsprechen (erste Spalte):

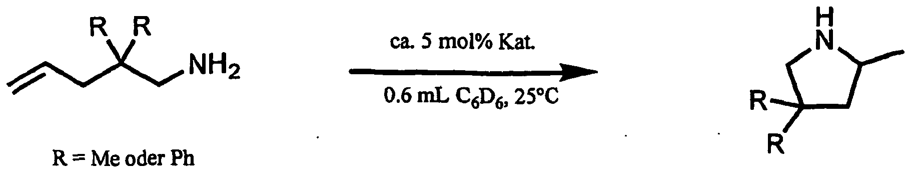

| Ausbeute / % (t / min) | Verwendeter Katalysator | Substrat R= | Mol% Kat. | Menge Kat. / mg | Menge Amin / mg | TOF/ h⁻¹ (Mini-malwert) |
|---|---|---|---|---|---|---|
| 92 (15) | 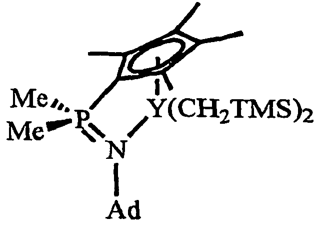 | Ph | 5.2 | 9.47 | 73 | 70.5 |
| 21 (15) | 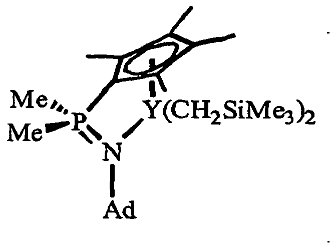 | Me | 5.0 | 7.46 | 28 | 15.2 |
| 33 (6) | 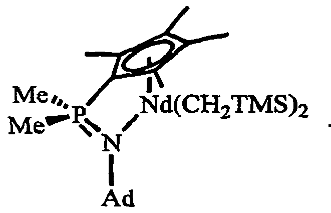 | Ph | 4.2 | 6.32 | 55 | 78.0 |
| 24 (17) | 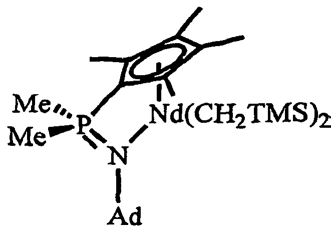 | Me | 4.9 | 9.29 | 33 | 17.9 |

Die TOF-Werte liegen in dem Bereich, der für Hydroaminierungen mit CG-Katalysatoren der Seltenerdmetalle mit dem klassischen CpSiN-Liganden [(C₅Me₄SiMe₂N^{t}Bu)Ln(R¹)(thf)] üblich ist [Ref: T.J. Marks et al., Organometallics 1999, 18, 2568-2570].
Dabei steht TOF für "Turn Over Frequency".

### Ausführungsbeispiel 34:

### Erzeugung der kationischen Katalysatorspezies für die Polymerisation von Ethen mit Hilfe von Tris-(pentafluorphenyl)-bor

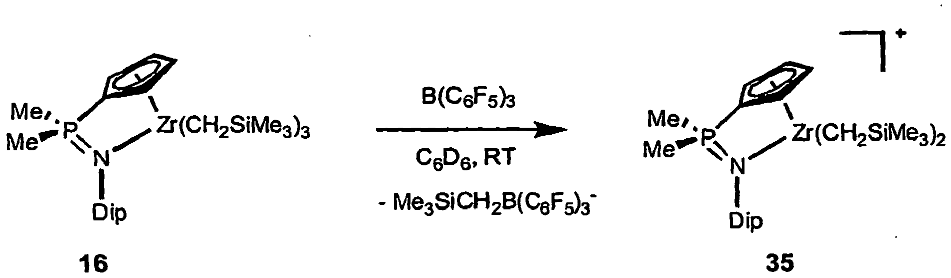

22,98 mg [(η⁵:η¹-C₅H₄PMe₂NDip)Zr(CH₂SiMe₃)₃] (35,18 µmol, 1,00 eq) und 23,5 mg B(C₆F₅)₃ (45,90 mmol, 1,95 eq) wurden in ein NMR-Rohr eingewogen und in 0,6 mL C₆D₆ gelöst. Bei RT wurde das Reaktionsgemisch 30 sec geschüttelt. Dabei hatten sich zwei miteinander nicht mischbare Phasen gebildet. Die Benzol-Phase wurde mit Hilfe einer Spritze abgezogen und die zurückgebliebene, blassgelbe ionische Flüssigkeit NMR-spektroskopisch untersucht. Die Flüssigkeit ist für mehrere Tage bei RT stabil.
**¹H-NMR** (300.1 MHz, CD₂Cl₂): δ = 0.26 (s, 9H, Si(C*H*₃)₃), 0.27 (s, 9 H, Si(C*H*₃)₃), 0.30 (d, ⁴*J*_{BH} = 12.5 Hz, 9 H, BCH₂Si(C*H*₃)₃), 0.89 (br, s, 2 H, BC*H*₂Si(CH₃)₃), 1.04 (d, ²*J*_{HH} = 10.7 Hz, 2 H, Zr-C*H*₂-Si), 1.42 (d, ³*J*_{HH} = 6.9 Hz, 12 H, *Me*₂CH), 1.44 (d, ²*J*_{HH} = 11.1 Hz, 2 H, Zr-C*H*₂-Si), 1.97 (d, ²*J*_{HP} = 12.3 Hz, P*Me*₂), 2.78 (sept, 2 H, ³*J*_{HH} = 6.6 Hz, Me₂C*H*), 7.08 (br, m, 2 H, *H*_{Cp}), 7.27 (br, m, 2 H, *H*_{Cp}), 7.40 (d, ³*J*_{HH} = 7.8 Hz, 2 H, *m*-Dip), 7.50 (br, m, 1 H, *p*-Dip) ppm.
**¹³C-NMR** (75.5 MHz, CD₂Cl₂): δ = 1.3 (s, Si(*C*H₃)₃), 2.2 (s, Si(*C*H₃)₃), 3.2 (s, BCH₂Si(*C*H₃)₃), 13.2 (d, ¹*J*_{CP} = 59.1 Hz, P*Me*₂), 24.8 (s, BCH₂Si(CH₃)₃), 26.3 (*Me*₂CH), 26.4 (*Me*₂CH), 28.7 (s, Me₂CH), 80.3 (s, Zr-CH₂-Si), 81.4 (s, Zr-CH₂-Si), 117.7 (d, ^{2,3}*J*_{CP} = 13.6 Hz, C_{Cp}), 117.9 (d, ^{2,3}*J*_{CP} = 13.1 Hz, C_{Cp}), 118.8 (d, ^{2,3}*J*_{CP} = 12.8 Hz, C_{Cp}), 119.1 (d, ^{2,3}*J*_{CP} = 13.6 Hz, C_{Cp}), 126.7 (s, *p*-Dip), 129.1 (d, ⁴*J*_{CP} = 3.6 Hz, *m*-Dip), 145.6 (d, ³*J*_{CP} = 6.4 Hz, o-*Dip*) ppm.

Die Signale der Kohlenstoffatome des perfluorierten Arylrings sind im ¹³C-NMR-Spektrum nicht zu beobachten.
**³¹P-NMR** (81.0 MHz, CD₂Cl₂): (δ = 27.4 ppm.
**¹⁹F-NMR** (188.3 MHz, CD₂Cl₂): δ = -135.4 (d, ³*J*_{FF} = 24.5 Hz), -167.5 (t,
³*J*_{FF} = 20.7 Hz), -170.1 (t, ³*J*_{FF} = 21.2 Hz) ppm.

### Ausführungsbeispiel 35:

### Erzeugung der kationischen Katalysatorspezies für die Polymerisation von Ethen mit Hilfe von N,N-Dimethylanilinium-tetrakis-pentafluorphenyl-borat

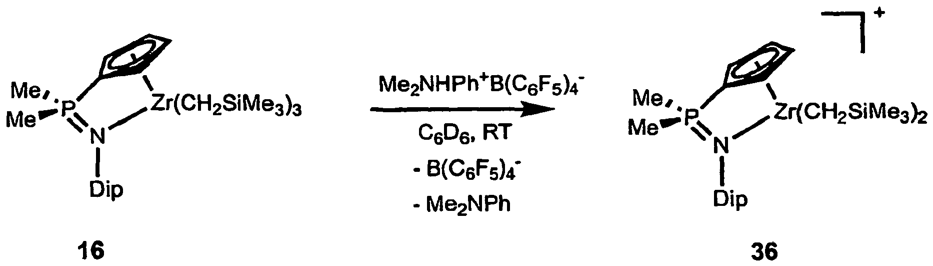

29,39 mg [(η⁵:η¹-C₅H₄PMe₂NDip)Zr(CH₂SiMe₃)₃] (44,99 µmol, 1,00 eq) und 37,76 mg Me₂NHPh⁺B(C₆F₅)₄⁻ (47,13 mmol, 1,05 eq) wurden in ein NMR-Rohr eingewogen und in 0,6 mL C₆D₆ gelöst. Bei RT wurde das Reaktionsgemisch 30 sec geschüttelt. Dabei hatten sich zwei miteinander nicht mischbare Phasen gebildet. Die Benzol-Phase wurde mit Hilfe einer Spritze abgezogen und die zurückgebliebene, gelbgrüne ionische Flüssigkeit NMR-spektroskopisch untersucht. Die Flüssigkeit ist für mehrere Tage bei RT stabil.
**¹H-NMR** (300.1 MHz, CD₂Cl₂): δ = 0.18 (s, 18 H, Si(C*H*₃)₃), 0.98 (s, 2 H, Zr-C*H*₂-Si), 1.35 (d, ³*J*_{HH} = 6.6 Hz, 12 H, *Me*₂CH), 1.36 (d, ²*J*_{HH} = 10.7 Hz, 2 H, Zr-C*H*₂-Si), 2.00 (d, ²*J*_{HP} = 12.6 Hz, P*Me*₂), 2.73 (sept, 2 H, ³*J*_{HH} = 6.9 Hz, Me₂C*H*), 7.06 (m, br, 2 H, *H*_{Cp}), 7.25 (m, br, 2 H, *H*_{Cp}), 7.35 (d, ³*J*_{HH} = 7.8 Hz, 2 H, *m*-Dip), 7.43 (m, br, 1 H, *p*-Dip) ppm.
**¹³C-NMR** (75.5 MHz, CD₂Cl₂): δ = 2.3 (s, Si(*C*H₃)₃), 13.6 (d, ¹*J*_{CP} = 59.1 Hz, P*Me*₂), 25.1 (*Me*₂CH), 26.5 (*Me*₂CH), 29.0 (s, Me₂CH), 80.2 (s, Zr-CH₂-Si), 117.7 (d, ^{2,3}*J*_{CP} = 13.0 Hz, C_{Cp}), 118.9 (d, ^{2,3}*J*_{CP} = 13.4 Hz, *C*_{Cp}), 128.6 (s, ⁵*J*_{CP} = 3.0 Hz, *m-*Dip), 128.9 (d, ⁴*J*_{CP} = 3.4 Hz, *p*-Dip), 145.5 (d, ³*J*_{CP} = 5.2 Hz, *o-Dip*) ppm.

Die Signale der Kohlenstoffatome des perfluorierten Arylrings sind im ¹³C-NMR-Spektrum nicht zu beobachten.
**³¹P-NMR** (81.0 MHz, CD₂Cl₂): δ = 27.4 ppm.
**¹⁹F-NMR** (188.3 MHz, CD₂Cl₂): δ = -135.5 (s, br), -166.0 (s, br), -169.9 (t, ³*J*_{FF} = 20.7 Hz) ppm.

### Ausführungsbeispiel 36:

### Polymerisation von Ethen

Die Polymerisation von Ethen wurde in einem 250 mL Zweihals-SCHLENK-Kolben bei einer Temperatur von 50°C und einem Druck von 1 atm durchgeführt. Das Ethen wurde mittels einer Säule über Cu-Katalysator (R3-11G-Kat., Fa. BASF) von Sauerstoff und anschließend in einer zweiten Säule mit Molsieb 3 Å von Wasserspuren befreit. Der Reaktionskolben wurde mit einer Lösung von Triiobutylaluminium (TIBA) in 145 mL Toluol bei RT gespült, um Spuren von eventuell absorbiertem Wasser zu entfernen. Das Triisobutylaluminium blieb wegen seiner Funktion als Scavenger während der Polymerisation im Reaktionskolben. Ethen wurde etwa 20 min in die Lösung geleitet, um eine gesättigte Lösung zu erzeugen. Etwa 50 µmol (1.0 eq) des Katalysators wurden in der Glove-Box in 5 mL Toluol gelöst und durch Umsetzung mit ca. 75 µmol (1.5 eq) B(C₆F₅)₃ (BCF) aktiviert. Die aktive Katalysatorspezies wurde dann in einem Schwung zu der mit Ethen gesättigten und auf 50°C temperierten toluolischen Lösung von TIBA gegeben. Bei allen getesteten Katalysatoren trat sofort nach Zugabe der kationischen Spezies Wärmeentwicklung auf. Die Lösung wurde augenblicklich viskoser und nach wenigen Minuten fiel Polyethylen als weißer Feststoff aus. Die Reaktion wurde nach 30 min durch Zugabe von 20 mL einer 5%igen Lösung von HCl in Ethanol abgebrochen. Der Inhalt des Reaktionskolbens wurde zu 200 mL einer 5%igen Lösung von HCl in Ethanol gegeben. Das gebildete Polyethylen wurde nach 2 h abfiltriert, mit Ethanol gewaschen und im Trockenschrank bei 100°C getrocknet.

Da die Aktivität eines Katalysators sehr stark von den Reaktionsbedingungen abhängt, wurde für einen angemessenen Vergleich das in der Polymerisationskatalyse aktive Eurocen 5031 [Zr^{IV}(*n*BuCp)₂Cl₂] unter ähnlichen Bedingungen verwendet. Dazu wurden 25 mmol MAO in 245 mL Toluol vorgelegt und 20 min mit Ethen gespült. 50 µmol des Katalysators wurden in der Glove-Box in 5 mL Toluol gelöst und in einem Schwung zu der mit Ethen gesättigten toluolischen Lösung von Methylaluminoxan (MAO) gegeben. Die Reaktion wurde nach 30 min durch Zugabe von 20 mL einer 5%igen Lösung von HCl in Ethanol abgebrochen. Der Inhalt des Reaktionskolbens wurde zu 200 mL einer 5%igen Lösung von HCl in Ethanol gegeben. Das gebildete Polyethylen wurde nach 2 h abfiltriert, mit Ethanol gewaschen und im Trockenschrank bei 100°C getrocknet.

### Getestete Katalysatoren

[Zr^{IV}(*n*BuCp)₂Cl₂] 37

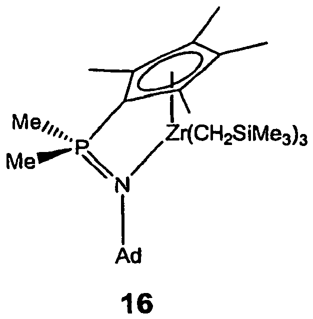

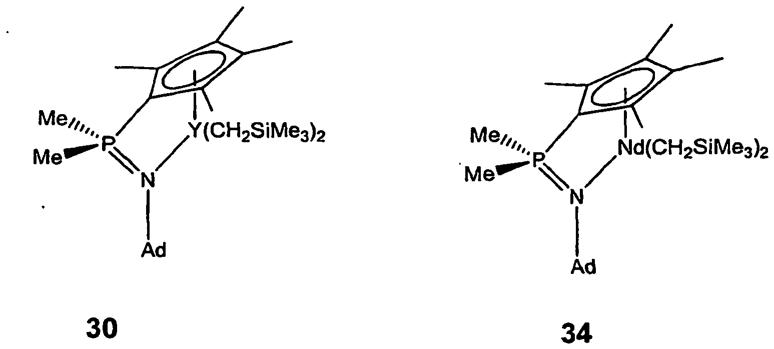

| Prä katalysator | Cokatalysator | Scavenger (TIBA) | T/°C | t/min | Ausbeute / g | Schmelz-punkt / °C |
|---|---|---|---|---|---|---|
| **37** 20.23 mg | MAO 1.45 g | / | 25 | 30 | 12.48 | 138 |
| **16** 32.72 mg | BCF 54.38 mg | 340 mg | 50 | 30 | 10.54 | 134 |
| **30** 27.84 mg | BCF 49.29 mg | 340 mg | 50 | 30 | 8.21 | 132 |
| **34** 30.63 mg | BCF 54.46 mg | 340 mg | 50 | 30 | 6.78 | 136 |

Hierbei bedeuten
BCF = Tris(pentafluorphenyl)boran und
MAO = Methylaluminoxan.

## Patentansprüche

1. Cyclopentadienylphosphazen-Komplexe (CpPN-Komplexe) der Metalle der III. und IV. Gruppe und der Lanthanoide, **dadurch gekennzeichnet, dass**
- das Metall ausgewählt ist aus der Gruppe Sc, Y, La, Ti, Zr, Hf, Ce, Pr, Nd, Pm, Sm, Eu, Gd, Tb, Dy, Ho, Er, Tm, Yb, worin das Metallatom
- in der Oxidationsstufe +III vorliegt, falls es ein Metall der III. Gruppe oder ein Lanthanoid ist, oder
- in der Oxidationsstufe +IV vorliegt, falls es ein Metall der IV. Gruppe ist, und
- genau eine Cyclopentadienylphosphazen-Einheit im Komplex vorliegt, und
- die Cyclopentadienylphosphazen-Einheit als monoanionischer Ligand an das Metallatom gebunden ist und
- das Metallatom außerdem an weitere anionische Liganden gebunden ist, welche nicht zur Cyclopentadienylphosphazen-Einheit gehören.

2. Cyclopentadienylphosphazen-Komplexe (CpPN-Komplexe) der Metalle der III. und IV. Guppe und der Lanthanoide gemäß Anspruch 1, **dadurch gekennzeichnet, dass** es sich bei dem monoanionischen Cyclopentadienylphosphazen um eine Struktur gemäß Formel 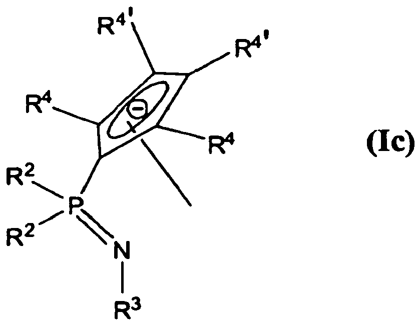 handelt, worin
R² = für eine verzweigte oder unverzweigte Alkylgruppe mit 1 bis 10 Kohlenstoffatomen oder eine Arylgruppe,
R³ = für eine verzweigte oder unverzweigte Alkylgruppe mit 1 bis 10 Kohlenstoffatomen, 1-Adamantyl (Ad) oder eine Arylgruppe steht sowie
R⁴ und R^{4'} = H oder Methyl (Me) bedeuten oder
R⁴, R^{4'} und der Cyclopentadienylring gemeinsam eine 4,4,6,6-Tetramethyl-5,6-dihydropentalen-2(4H)-yliden-Einheit bilden.

3. Cyclopentadienylphosphazen-Komplexe (CpPN-Komplexe) der Metalle der III. und IV. Guppe und der Lanthanoide gemäß Anspruch 2, **dadurch gekennzeichnet, dass** das monoanionischen Cyclopentadienylphosphazen ausgewählt ist aus

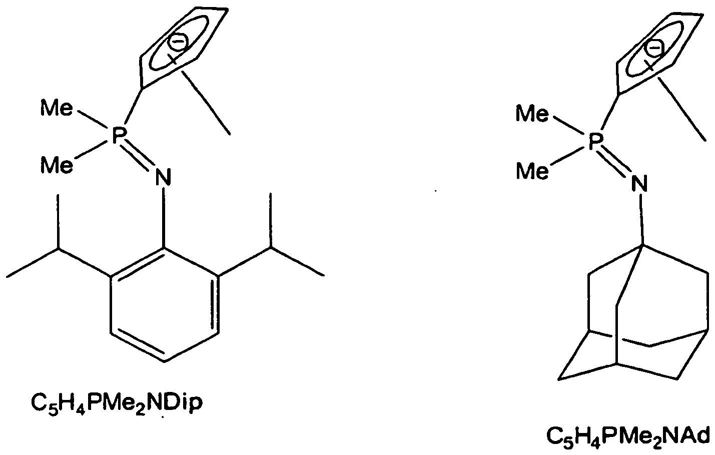

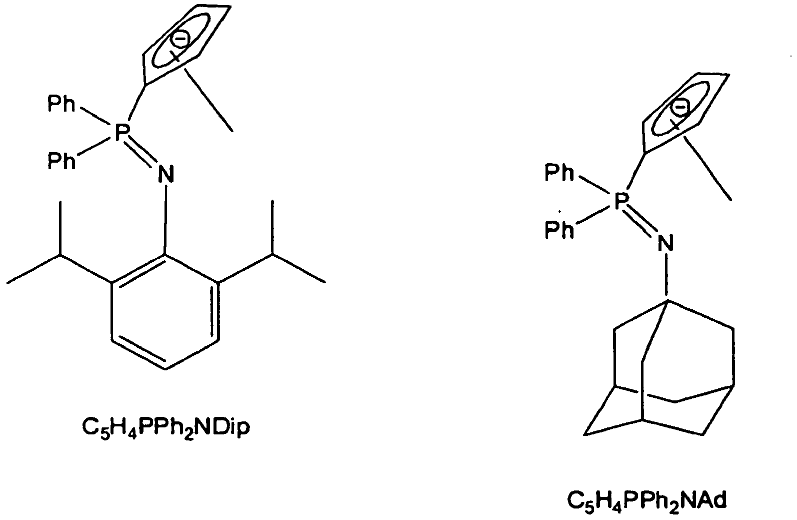

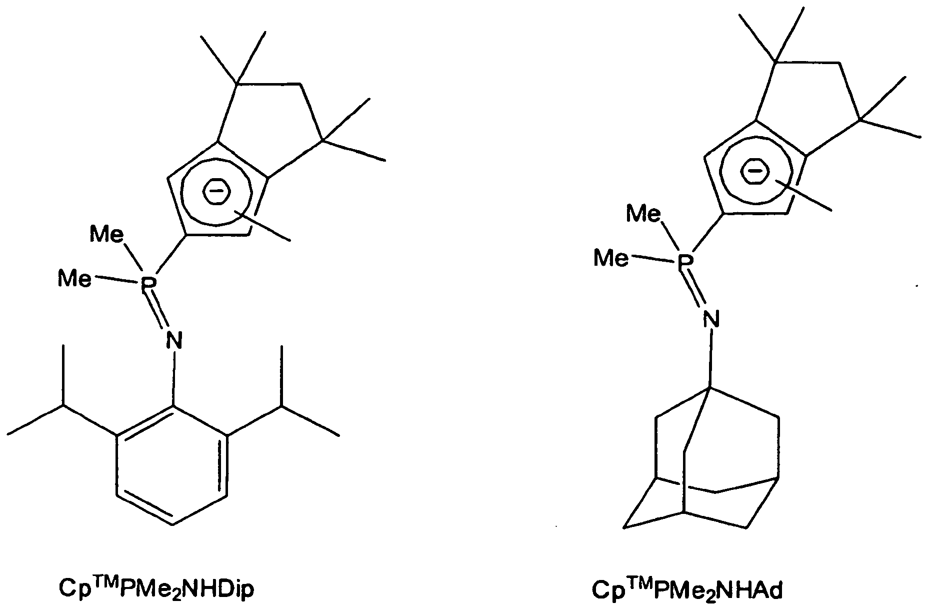

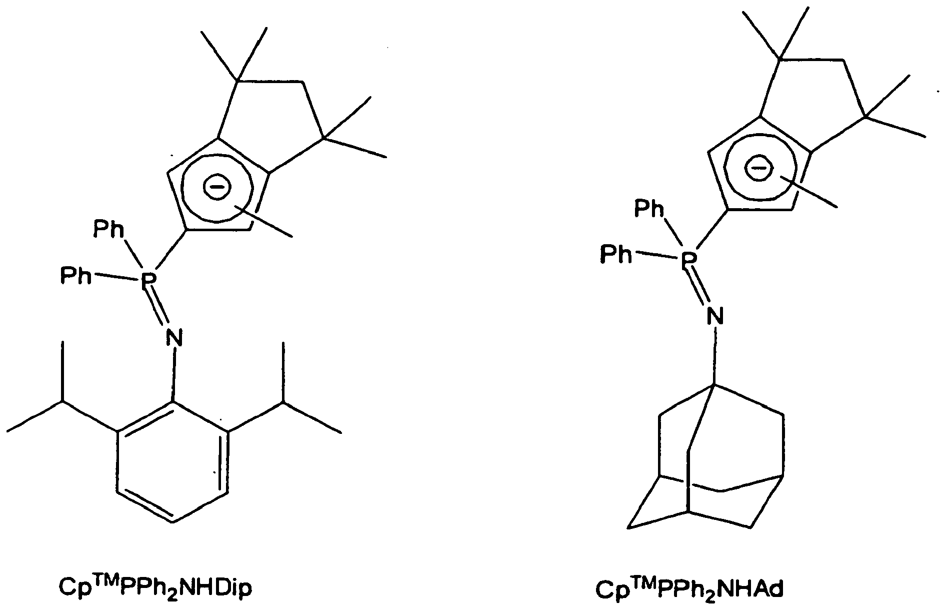

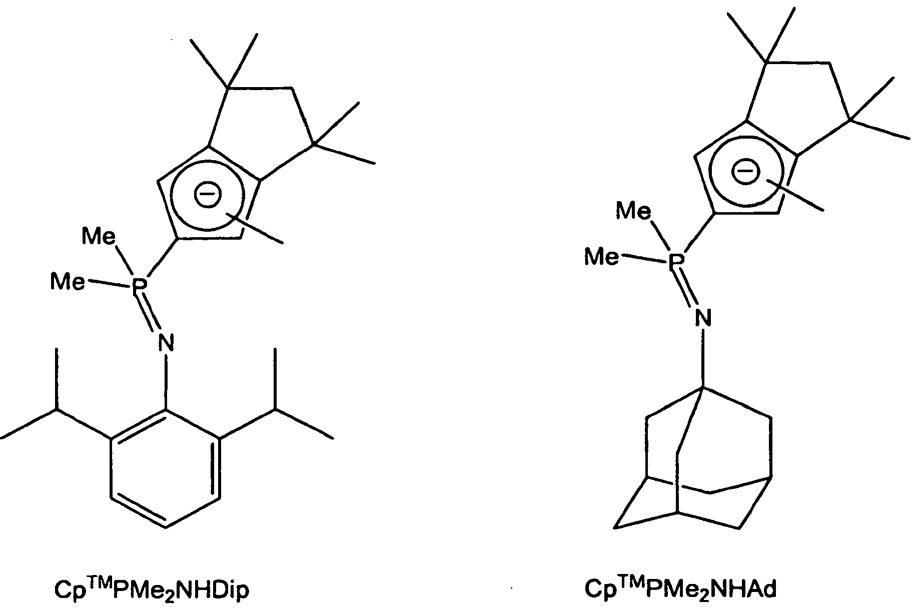

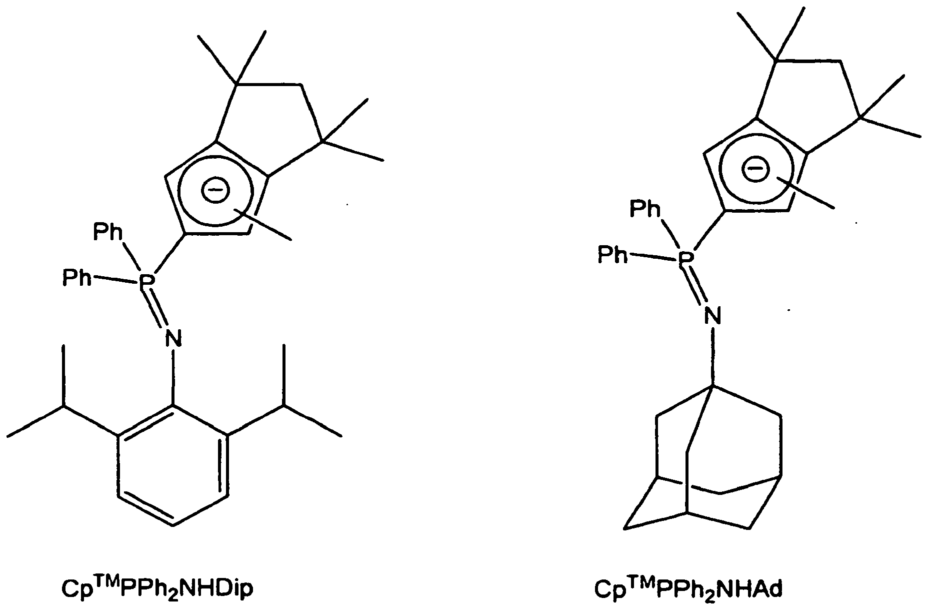

4. Cyclopentadienylphosphazen-Komplexe (CpPN-Komplexe) der Metalle der III. und IV. Guppe und der Lanthanoide gemäß einem der Ansprüche 1 bis 3, **dadurch gekennzeichnet, dass** es sich um einen Komplex gemäß Formel (IV)
[(CpPN)MR¹ₘ(L)ₚ] (IV)
handelt, worin
- M = Metall, ausgewählt aus der Gruppe Sc, Y, La, Ti, Zr, Hf, Ce, Pr, Nd, Pm, Sm, Eu, Gd, Tb, Dy, Ho, Er, Tm, Yb
- m = 3, falls das Metall ein Metall der IV. Gruppe ist und somit in der Oxidationsstufe +IV vorliegt,
- m = 2, falls das Metall ein Metall der III. Gruppe oder ein Lanthanoid ist und somit in der Oxidationsstufe +III vorliegt,
- p = 0 oder 1,
und
die R¹ anionische Liganden darstellen, die unabhängig voneinander ausgewählt sind aus
- Fluorid, Chlorid, Bromid, Iodid, Cyanid, Cyanat, Thiocyanat, Azid,
- -Me, -CH₂, CH₂CMe₂Ph, -CH₂CMe₃, -CH₂Ph, -CH₂SiMe₃,
- -O-Aryl, -OSiMe₃,
-OR⁵, -NR⁵₂
worin
R⁵ = eine verzweigte oder unverzweigte Alkylgruppe mit 1 bis 10 Kohlenstoffatomen oder eine Phenylgruppe darstellt,
und
L einen Neutralliganden darstellt, ausgewählt aus
- einem Ether (beispielsweise THF, Diethylether Et₂O, Dimethoxyethan DME), einem Thioether, einem tertiären Amin, Pyridin und R², R³, R⁴, und R^{4'} die in Anspruch 2 aufgeführten Bedeutungen haben.

5. Cyclopentadienylphosphazen-Komplexe (CpPN-Komplexe) der Metalle der **III.** und IV. Guppe und der Lanthanoide gemäß einem der Ansprüche 1 bis 4, **dadurch gekennzeichnet, dass** es sich um einen Komplex gemäß Formel (V) 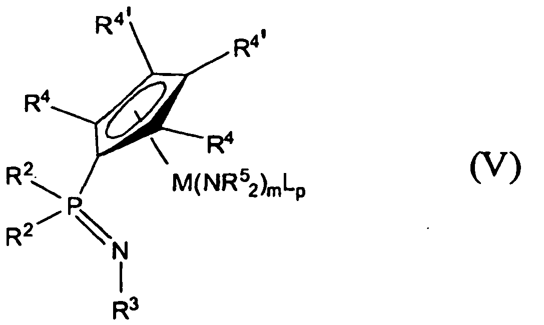 handelt, worin worin m, p, R², R³, R⁴, R^{4'} und R⁵ und L die in Anspruch 4 aufgeführten Bedeutungen haben.

6. Cyclopentadienylphosphazen-Komplexe (CpPN-Komplexe) der Metalle der III. und IV. Guppe und der Lanthanoide gemäß einem der Ansprüche 1 bis 5, **dadurch gekennzeichnet, dass** es sich um einen Komplex gemäß Formel (VI) 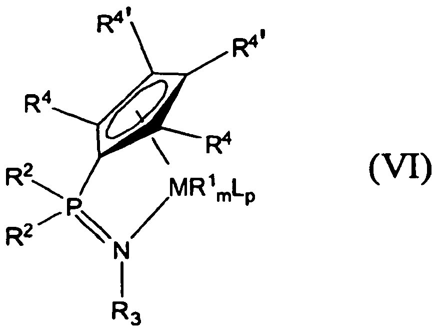 handelt, worin worin m, p, R², R³, R⁴, R^{4'} und R⁵ und L die in Anspruch 4 aufgeführten Bedeutungen haben.

7. Cyclopentadienylphosphazen-Komplexe (CpPN-Komplexe) der Metalle der III. und IV. Guppe und der Lanthanoide gemäß einem der Ansprüche 1 bis 6, **dadurch gekennzeichnet, dass** es sich um Komplexe gemäß Formel (VII)
[(CpPN)MXₘ(thf)ₜ] (VII)
handelt,
worin
- CpPN = Cyclopentadienylphosphazen,
- X = Fluorid, Chlorid, Bromid, Iodid,
- t = 0, 1, oder 2, falls das Metall ein Metall der IV. Gruppe ist,
- t = 0, 1, 2 oder 3, falls das Metall ein Metall der III. Gruppe oder ein Lanthanoid ist,
und M und m wie in Anspruch 4 definiert sind.

8. Cyclopentadienylphosphazen-Komplexe (CpPN-Komplexe) der Metalle der III. und IV. Guppe und der Lanthanoide gemäß einem der Ansprüche 1 bis 7, **dadurch gekennzeichnet, dass** es sich um Komplexe gemäß Formel (VIII)
[(CpPN)MR⁶ₘ₋₁(L)] ^{⊕} X^{⊝} (VIII),
handelt,
worin
- M = Metall, ausgewählt aus der Gruppe Sc, Y, La, Ti, Zr, Hf, Ce, Pr, Nd, Pm, Sm, Eu, Gd, Tb, Dy, Ho, Er, Tm, Yb,
- CpPN = Cyclopentadienylphosphazen
- m = 3, falls das Metall ein Metall der IV. Gruppe ist und somit in der Oxidationsstufe +IV vorliegt,
- m = 2, falls das Metall ein Metall der III. Gruppe oder ein Lanthanoid ist und somit in der Oxidationsstufe +III vorliegt,
und
die R⁶ anionische Liganden darstellen, die unabhängig voneinander ausgewählt sind aus
- Fluorid, Chlorid, Bromid, Iodid, Cyanid, Cyanat, Thiocyanat, Azid,
- -Me, -CH₂, CH₂CMe₂Ph, -CH₂CMe₃, -CH₂Ph, -CH₂SiMe₃,
- -O-Aryl, -OSiMe₃,
- -OR⁵, -NR⁵₂,
worin
R⁵ = eine verzweigte oder unverzweigte Alkylgruppe mit 1 bis 10 Kohlenstoffatomen oder eine Phenylgruppe darstellt,
und
L einen Neutralliganden darstellt, ausgewählt aus
- einem Ether (beispielsweise THF, Diethylether Et₂O, Dimethoxyethan DME), einem Thioether, einem tertiären Amin, Pyridin,
und
X⁻ ausgewählt ist aus Fluoroborat, Tetraphenylborat, Tetrakis-(3,5trifluormethylphenyl)-borat.

9. Cyclopentadienylphosphazen-Komplexe (CpPN-Komplexe) der Metalle der III. und IV. Guppe und der Lanthanoide gemäß einem der Ansprüche 1 bis 8, **dadurch gekennzeichnet, dass** das Metallatom homoleptisch koordiniert ist in Bezug auf diejenigen anionischen Liganden, die keine Cyclopentadienylphosphazen-Einheit darstellen, wobei diese anionischen Liganden ausgewählt sind aus der Gruppe -CH₂Ph, -CH₂SiMe₃ und NMe₂.

10. Verfahren zur Herstellung von Cyclopentadienylphosphazen-Komplexen (CpPN-Komplexen) der Metalle der III. und IV. Guppe und der Lanthanoide gemäß einem der Ansprüche 1 bis 9, **dadurch gekennzeichnet, dass** das Verfahren in situ durchgeführt wird und die Schritte umfasst:
a) Reaktion von einem Äquivalent eines Metallhalogenids MXq mit q Äquivalenten eines Alkali- oder Erdalkalisalzes des Liganden R¹ in einem Ether bei einer Temperatur kleiner -70°C, wobei
- X = F, Cl, Br, I und
- q = 3, falls M ein Metall der III. Gruppe oder ein Lanthanoid ist,
- q = 4, falls M ein Metall der IV. Gruppe ist,
- und R¹ wie in Anspruch 4 definiert ist,
b) anschließend Zugabe von einem Äquivalent eines protonierten Cyclopentadienylphosphazens [CpPN]H.

11. Verfahren zur Herstellung von Cyclopentadienylphosphazen-Komplexen (CpPN-Komplexen) der Metalle der III. und IV. Guppe und der Lanthanoide gemäß Anspruch 9, **dadurch gekennzeichnet, dass** ein Äquivalent des Metallhalogenids MX_{q} zuerst mit einem Äquivalent des protonierten Liganden [CpPN]H umgesetzt und danach q Äquivalente eines Alkali- oder Erdalkalisalzes des Liganden R¹ zugegeben werden.

12. Verfahren zur Herstellung von Cyclopentadienylphosphazen-Komplexen (CpPN-Komplexen) der Metalle der III. und IV. Guppe und der Lanthanoide gemäß Anspruch 9, **dadurch gekennzeichnet, dass** ein Äquivalent einer isolierten Verbindung MR⁷_{q} mit einem Äquivalent des protonierten Liganden [CpPN]H in einem Ether oder einem aliphatischen tertiären Amin bei Temperaturen kleiner-70°C umgesetzt wird, worin
worin R⁷ ausgewählt ist aus
- -Me, -CH₂, CH₂CMe₂Ph, -CH₂CMe₃, -CH₂Ph, -CH₂SiMe₃,
- -O-Aryl, -OSiMe₃.
- -OR⁵, -NR⁵₂,
worin
R⁵ = eine verzweigte oder unverzweigte Alkylgruppe mit 1 bis 10 Kohlenstoffatomen oder eine Phenylgruppe darstellt, und
q wie in Anspruch 10 definiert ist.

13. Verfahren zur Herstellung von kationischen CpPN-Komplexen gemäß Anspruch 7, **dadurch gekennzeichnet, dass** der entsprechende Komplex [(CpPN)MR⁶ₘ] mit einem kationgenerierenden Reagenz umgesetzt wird.

14. Verwendung von neutralen CpPN-Komplexen 1 bis 6 und 9 als Katalysatoren für die Polymerisation von Olefinen.

15. Verwendung von kationischen CpPN-Komplexen gemäß einem der Ansprüche 7 und 9 als Katalysatoren für die Hydroaminierung von Olefinen.

## Claims

1. Cyclopentadienylphosphazene complexes (CpPN complexes) of metals of the third and fourth group and of the lanthanides, wherein
- the metal is selected from the group Sc, Y, La, Ti, Zr, Hf, Ce, Pr, Nd, Pm, Sm, Eu, Gd, Tb, Dy, Ho, Er, Tm, Yb, in which the metal atom
- is in the oxidation state +III if it is a metal of the third group or a lanthanide, or
- is in oxidation stage +IV if it is a metal of the fourth group, and
- exactly one cyclopentadienylphosphazene unit is present in the complex, and
- the cyclopentadienylphosphazene unit is bound as a monoanionic ligand to the metal atom and
- the metal atom is also bound to further anionic ligands which do not belong to the cyclopentadienylphosphazene unit.

2. Cyclopentadienylphosphazene complexes (CpPN complexes) of the metals of the third and fourth group and the lanthanides according to claim 1, wherein the monoanionic cyclopentadienylphosphazene is a structure according to formula 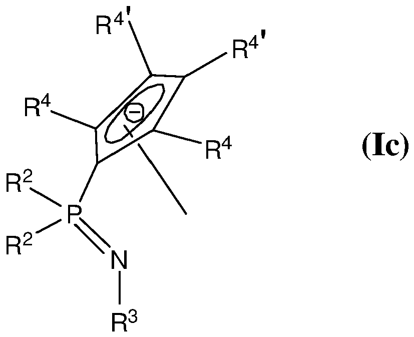 wherein
R² represents a branched or unbranched alkyl group with 1 to 10 carbon atoms or an aryl group,
R³ represents a branched or unbranched alkyl group with 1 to 10 carbon atoms, 1-adamantyl (Ad) or an aryl group, and
R⁴ and R^{4'} = H or methyl (Me) or
R⁴, R^{4'} and the cyclopentadienyl ring together form a 4,4,6,6-tetramethyl-5,6-dihydropentalene-2(4H)-ylidene unit.

3. Cyclopentadienylphosphazene complexes (CpPN complexes) of the metals of the third and fourth group and the lanthanides according to claim 2, wherein the monoanionic cyclopentadienylphosphazene is selected from

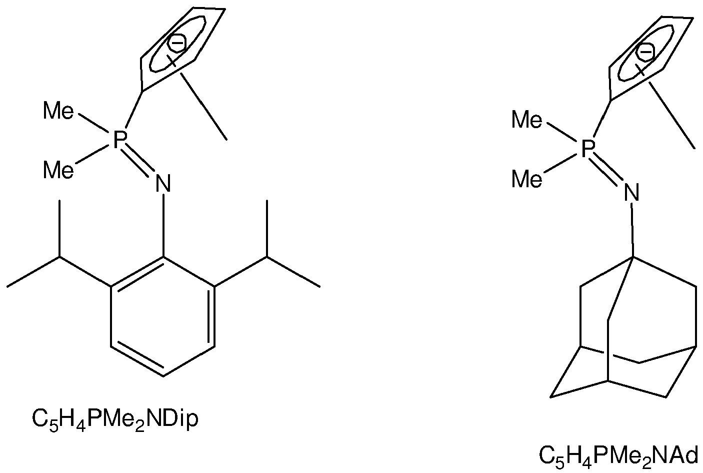

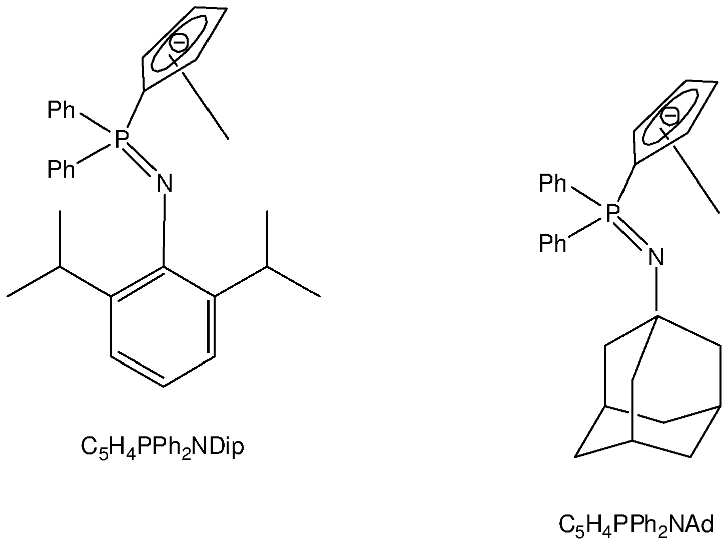

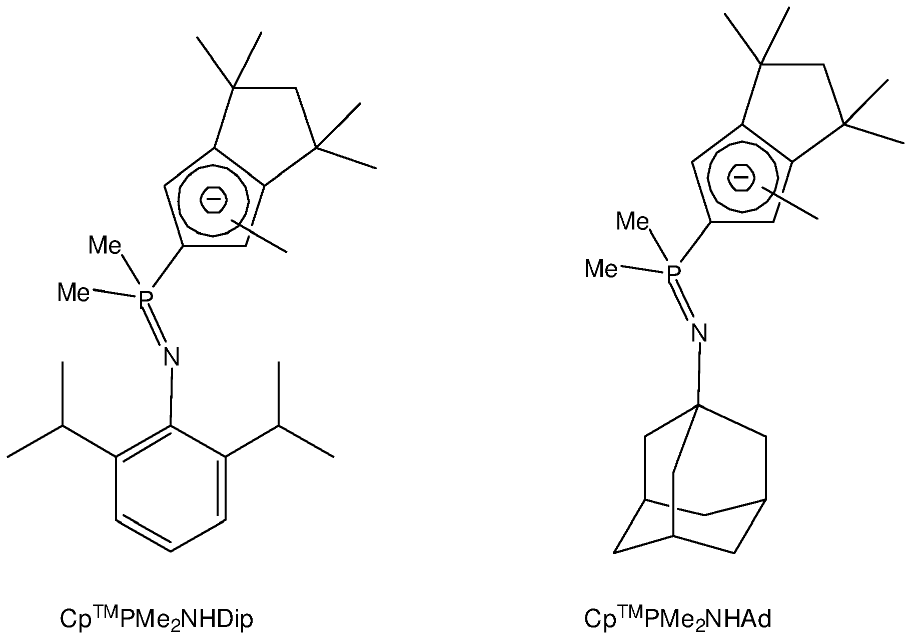

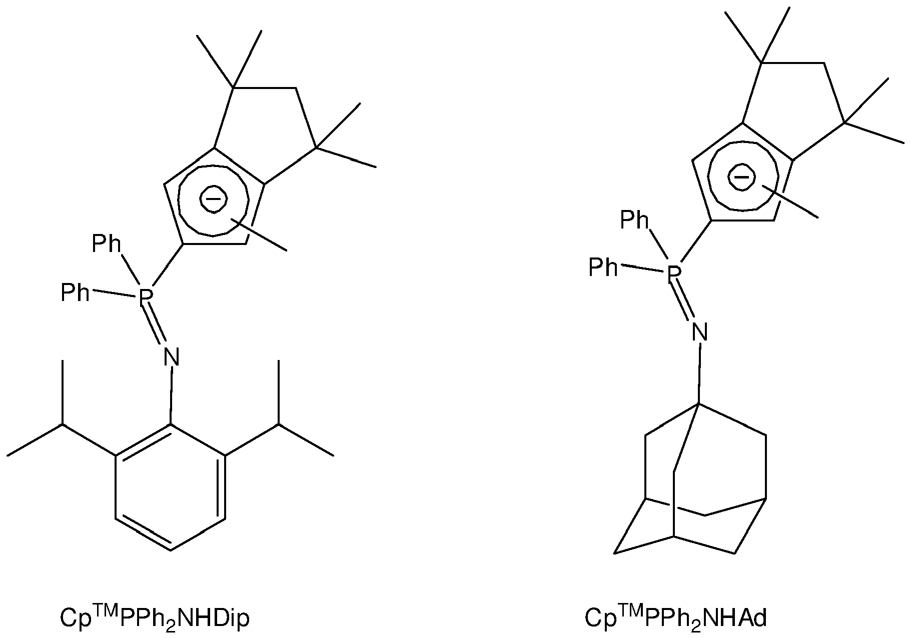

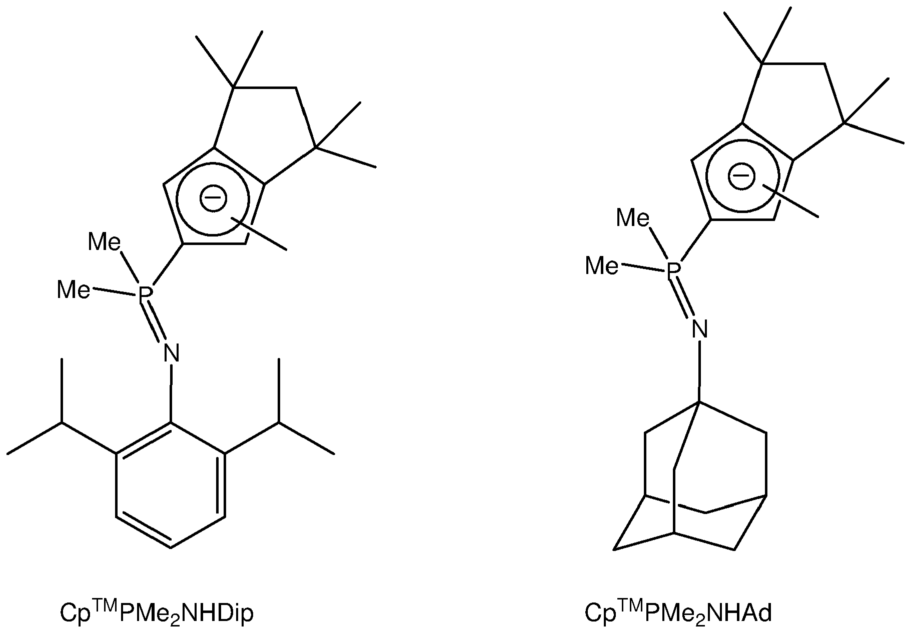

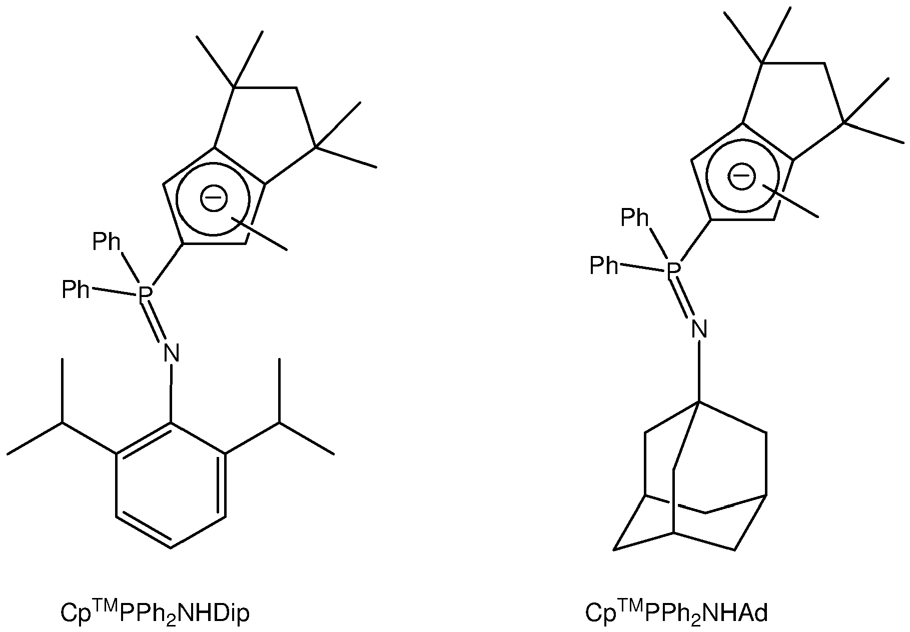

4. Cyclopentadienylphosphazene complexes (CpPN complexes) of the metals of the third and fourth group and the lanthanides according to one of the claims 1 to 3, wherein the complex is a complex according to formula (IV)
[(CpPN)MR¹ₘ(L)ₚ] (IV),
wherein
- M = metal selected from the group Sc, Y, La, Ti, Zr, Hf, Ce, Pr, Nd, Pm, Sm, Eu, Gd, Tb, Dy, Ho, Er, Tm, Yb
- m = 3 if the metal is a metal of the fourth group and is thus in oxidation stage +IV,
- m = 2 if the metal is a metal of the third group or a lanthanide and is thus in oxidation stage +III,
- p = 0 or 1,
and
R¹ represent anionic ligands which are selected independently from one another from
- fluoride, chloride, bromide, iodide, cyanide, cyanate, thiocyanate, azide,
- -Me, -CH₂, CH₂CMe₂Ph, -CH₂CMe₃, -CH₂Ph, -CH₂SiMe₃,
- -O-Aryl, -OSiMe₃,
-OR⁵, -NR⁵₂
wherein
R⁵ = a branched or unbranched alkyl group with 1 to 10 carbon atoms or a phenyl group,
and
L represents a neutral ligand, selected from
- an ether (for example THF, diethyl ether Et₂O, dimethoxyethane DME), a thioether, a tertiary amine, pyridine
and R², R³, R⁴ and R^{4'} have the meanings mentioned in claim 2.

5. Cyclopentadienylphosphazene complexes (CpPN complexes) of the metals of the third and fourth group and the lanthanides according to one of the claims 1 to 4, wherein the complex is a complex according to formula (V) 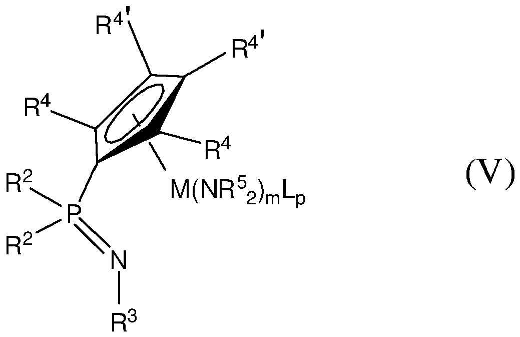 wherein m, p, R², R³, R⁴, R^{4'} and R⁵ and L have the meanings mentioned in claim 4.

6. Cyclopentadienylphosphazene complexes (CpPN complexes) of the metals of the third and fourth group and the lanthanides according to one of the claims 1 to 5, wherein the complex is a complex according to formula (VI) 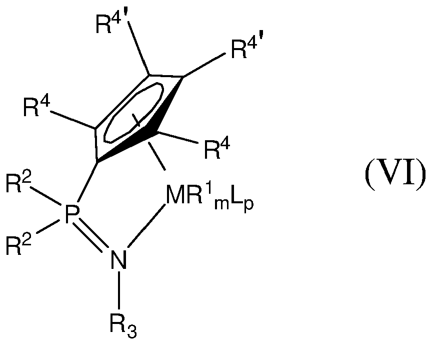 wherein m, p, R², R³, R⁴, R^{4'} and R⁵ and L have the meanings mentioned in claim 4.

7. Cyclopentadienylphosphazene complexes (CpPN complexes) of the metals of the third and fourth group and the lanthanides according to one of the claims 1 to 6, wherein the complexes are complexes according to formula (VII)
[(CpPN)MXₘ(thf)ₜ] (VII)
wherein
- CpPN = cyclopentadienylphosphazene,
- X = fluoride, chloride, bromide, iodide,
- t = 0, 1 or 2 if the metal is a metal of the fourth group,
- t = 0, 1, 2 or 3 if the metal is a metal of the third group or a lanthanide,
and M and m are defined as in claim 4.

8. Cyclopentadienylphosphazene complexes (CpPN complexes) of the metals of the third and fourth group and the lanthanides according to one of the claims 1 to 7, wherein the complexes are complexes according to formula (VIII)
[(CpPN)MR⁶ₘ₋₁(L)] ^{⊕} X^{⊝} (VIII),
wherein
- M = metal selected from the group Sc, Y, La, Ti, Zr, Hf, Ce, Pr, Nd, Pm, Sm, Eu, Gd, Tb, Dy, Ho, Er, Tm, Yb,
- CpPN = cyclopentadienylphosphazene,
- m = 3 if the metal is a metal of the fourth group and is thus in oxidation stage +IV,
- m = 2 if the metal is a metal of the third group or a lanthanide and is thus in oxidation stage +III,
and
R⁶ represent anionic ligands which are selected independently from one another from
- fluoride, chloride, bromide, iodide, cyanide, cyanate, thiocyanate, azide,
- -Me, -CH₂, CH₂CMe₂Ph, -CH₂CMe₃, -CH₂Ph, -CH₂SiMe₃,
- -O-Aryl, -OSiMe₃,
- -OR⁵ -NR⁵₂,
wherein
R⁵ = a branched or unbranched alkyl group with 1 to 10 carbon atoms or a phenyl group,
and
L represents a neutral ligand, selected from
- an ether (for example THF, diethyl ether Et₂O, dimethoxyethane DME), a thioether, a tertiary amine, pyridine
and
X⁻ is selected from fluoroborate, tetraphenylborate, tetrakis-(3,5-trifluoromethylphenyl)-borate.

9. Cyclopentadienylphosphazene complexes (CpPN complexes) of the metals of the third and fourth group and the lanthanides according to one of the claims 1 to 8, wherein the metal atom is homoleptically coordinated in relation to those anionic ligands which do not represent a cyclopentadienylphosphazene unit, wherein these anionic ligands are selected from the group -CH₂Ph, -CH₂SiMe₃ and NMe₂.

10. Method for the production of cyclopentadienylphosphazene complexes (CpPN complexes) of the metals of the third and fourth group and the lanthanides according to one of the claims 1 to 9, wherein the method is carried out in situ, and comprises the steps:
a) reaction of one equivalent of a metal halide MX_{q} with q equivalents of an alkali metal salt or alkaline earth metal salt of the ligand R¹ in an ether at a temperature lower than -70 °C, wherein
- X = F, Cl, Br, I and
- q = 3 if M is a metal of the third group or a lanthanide,
- q = 4 if M is metal of the fourth group,
- and R¹ is defined as in claim 4,
b) subsequently addition of one equivalent of a protonated cyclopentadienylphosphazene [CpPN]H.

11. Method for the production of cyclopentadienylphosphazene complexes (CpPN complexes) of the metals of the third and fourth group and the lanthanides according to claim 9, wherein one equivalent of the metal halide MX_{q} is firstly reacted with one equivalent of the protonated ligand [CpPN]H, and q equivalents of an alkali metal salt or alkaline earth metal salt of the ligand R¹ are subsequently added.

12. Method for the production of cyclopentadienylphosphazene complexes (CpPN complexes) of the metals of the third and fourth group and the lanthanides according to claim 9, wherein one equivalent of an isolated compound MR⁷_{q} is reacted with one equivalent of the protonated ligand [CpPN]H in an ether or in an aliphatic tertiary amine at temperatures lower than -70 °C, wherein R⁷ is selected from
- -Me, -CH₂, CH₂CMe₂Ph, -CH₂CMe₃, -CH₂Ph, -CH₂SiMe₃,
- -O-Aryl, -OSiMe₃,
- OR⁵, -NR⁵₂,
wherein
R⁵ = a branched or unbranched alkyl group with 1 to 10 carbon atoms or a phenyl group, and
q is defined as in claim 10.

13. Method for the production of cationic CpPN complexes according to claim 7, wherein the corresponding complex [(CpPN)MR⁶ₘ] is reacted with a cation-generating reagent.

14. Use of neutral CpPN complexes 1 to 6 and 9 as catalysts for the polymerization of olefins.

15. Use of cationic CpPN complexes according to one of the claims 7 and 9 as catalysts for the hydroamination of olefins.

## Revendications

1. Complexes de cyclopentadiénylphosphazène (complexes CpPN) de métaux du groupe III et IV et des lanthanides, **caractérisés en ce que**
- le métal est choisi parmi le groupe Sc, Y, La, Ti, Zr, Hf, Ce, Pr, Nd, Pm, Sm, Eu, Gd, Tb, Dy, Ho, Er, Tm, Yb, où l'atome de métal
- est présent au degré d'oxydation +III, si c'est un métal du groupe III ou un lanthanide, ou
- est présent au degré d'oxydation +IV, si c'est un métal du groupe IV, et
- il existe exactement une unité de cyclopentadiénylphosphazène dans le complexe, et
- l'unité de cyclopentadiénylphosphazène est lié à l'atome de métal en tant que ligand monoanionique à l'atome de métal et
- l'atome de métal est par ailleurs lié à d'autres ligands anioniques qui n'appartiennent pas à l'unité de cyclopentadiénylphosphazène.

2. Complexes de cyclopentadiénylphosphazène (complexes CpPN) de métaux du groupe III et IV et des lanthanides selon la revendication 1, **caractérisé en ce que** le cyclopentadiénylphosphazène monoanionique est une structure selon la formule 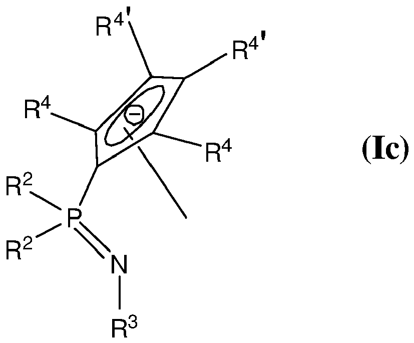 où
R² représente un groupe alkyle ramifié ou non ramifié avec 1 à 10 atomes de carbone ou un groupe aryle,
R³ représente un groupe alkyle ramifié ou non ramifié avec 1 à 10 atomes de carbone, 1-adamantyl (Ad) ou un groupe aryle ainsi que
R⁴ et R^{4'} = H ou méthyle (Me) ou
R⁴, R^{4'} et le cycle cyclopentadiényle forment conjointement une unité de 4,4,6,6-tétraméthyl-5,6-dihydropentalène-2(4H)-ylidene.

3. Complexes de cyclopentadiénylphosphazène (complexes CpPN) de métaux du groupe III et IV et des lanthanides selon la revendication 2, **caractérisés en ce que** le cyclopentadiénylphosphazène monoanionique est choisi parmi

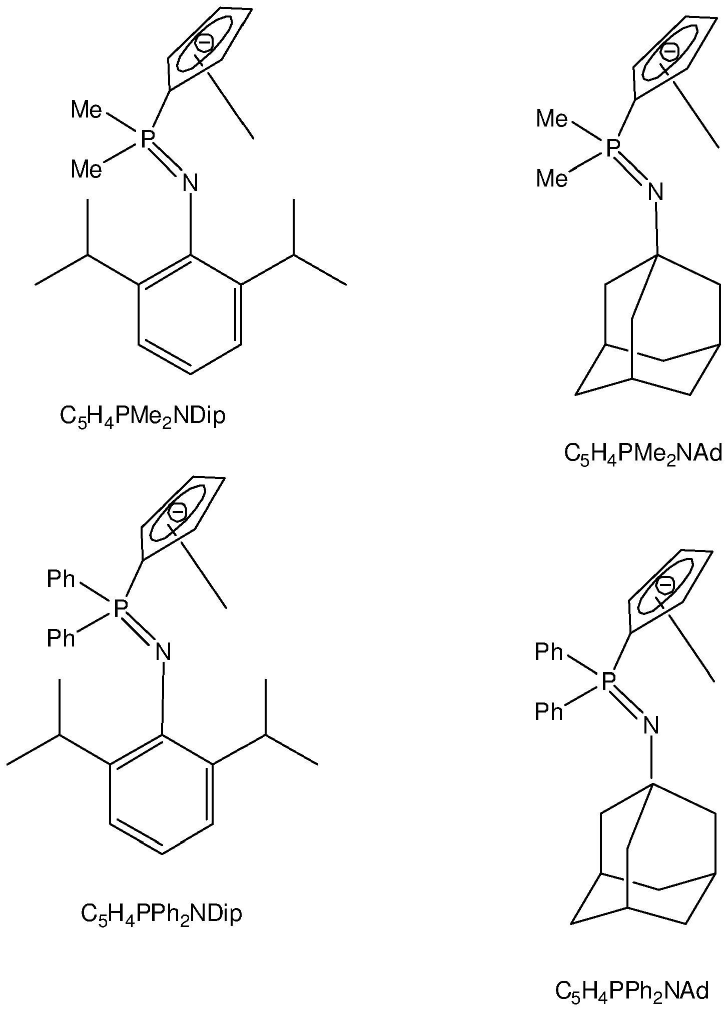

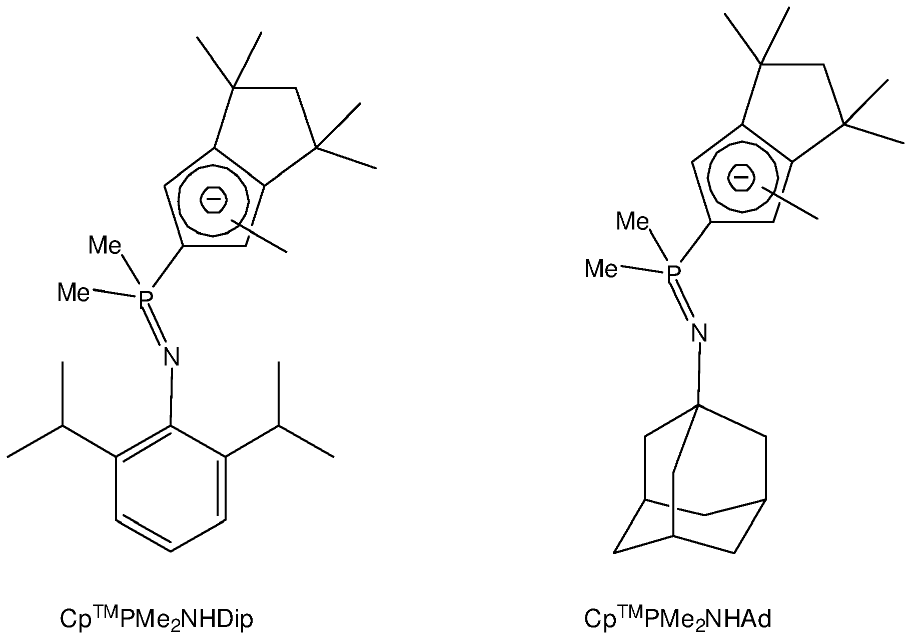

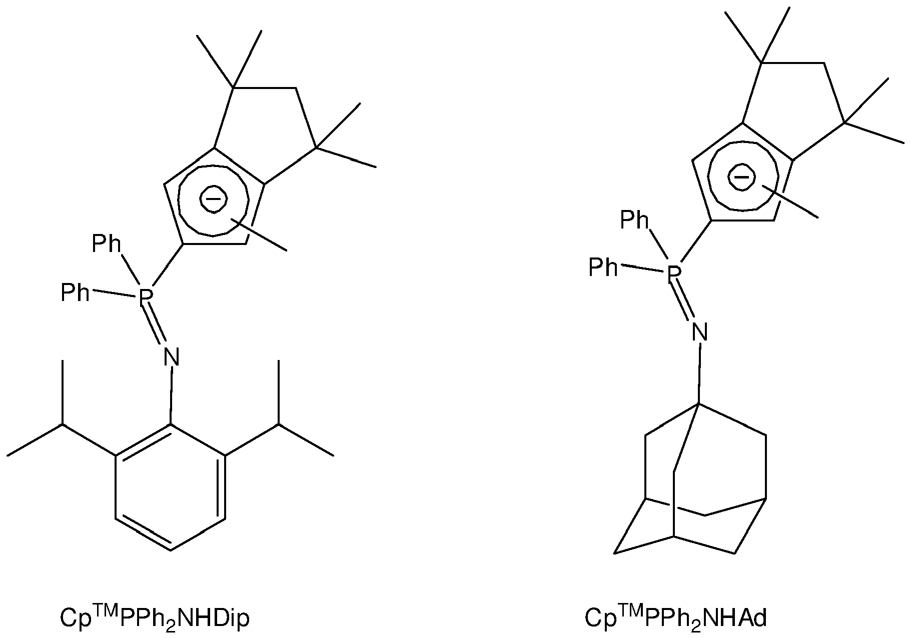

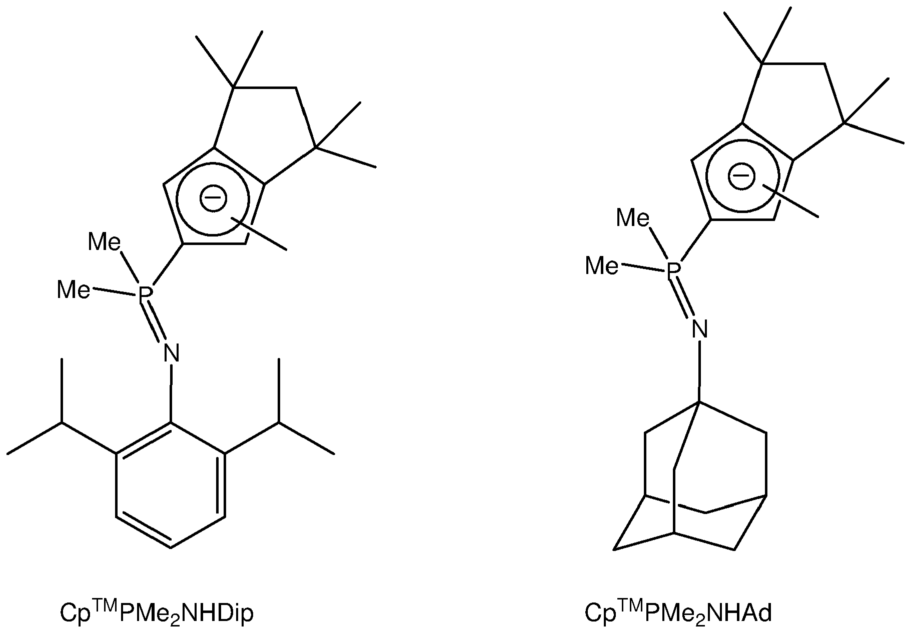

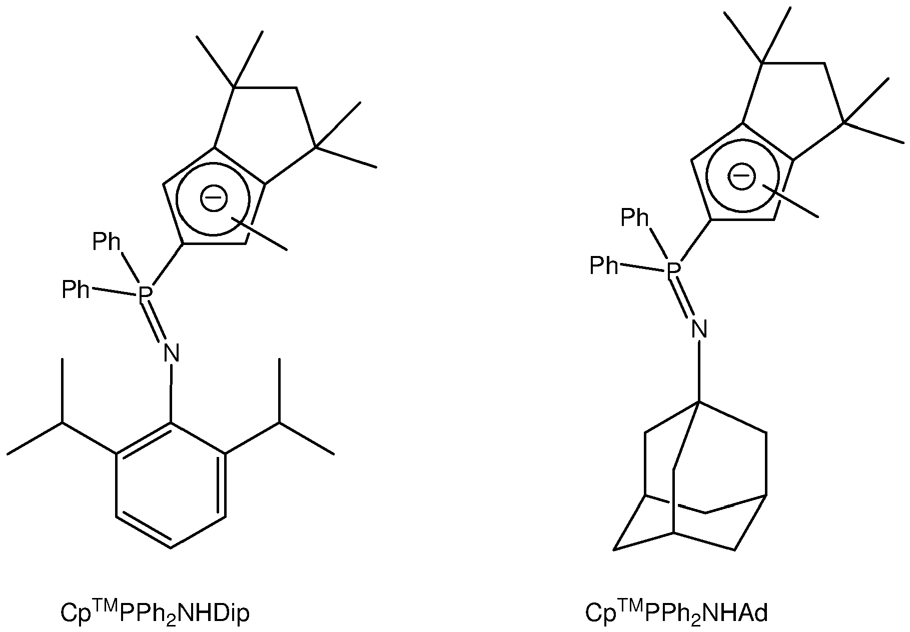

4. Complexes de cyclopentadiénylphosphazène (complexes CpPN) de métaux du groupe III et IV et des lanthanides selon l'une des revendications 1 à 3, **caractérisés en ce qu'**il s'agit d'un complexe selon la formule (IV)
[(CpPN)MR¹ₘ(L)ₚ] (IV),
où
- M = métal choisi parmi le groupe Sc, Y, La, Ti, Zr, Hf, Ce, Pr, Nd, Pm, Sm, Eu, Gd, Tb, Dy, Ho, Er, Tm, Yb
- m = 3, si le métal est un métal du groupe IV et par conséquent est présent au degré d'oxydation +IV,
- m = 2, si le métal est un métal du groupe III ou un lanthanide et par conséquent est présent au degré d'oxydation +III,
- p = 0 ou 1,
et
les R¹ représentent des ligands anioniques, qui sont choisis indépendamment les uns des autres parmi
- fluorure, chlorure, bromure, iodure, cyanure, cyanate, thiocyanate, azoture,
- -Me, -CH₂, CH₂CMe₂Ph, -CH₂CMe₃, -CH₂Ph, -CH₂SiMe₃,
- -O-aryle, -OSiMe₃,
-OR⁵, -NR⁵₂
où
R⁵ = un groupe alkyle ramifié ou non ramifié avec 1 à 10 atomes de carbone ou un groupe phényle,
et
L représente un ligand neutre, choisi parmi
- un éther (par exemple THF, éther diéthylique Et₂O, diméthoxyéthane DME), un thioéther, une amine tertiaire, pyridine
et R², R³, R⁴, et R^{4'} ont les significations indiquées en la revendication 2.

5. Complexes de cyclopentadiénylphosphazène (complexes CpPN) de métaux du groupe III et IV et des lanthanides selon l'une des revendications 1 à 4, **caractérisés en ce qu'**il s'agit d'un complexe selon la formule (V) 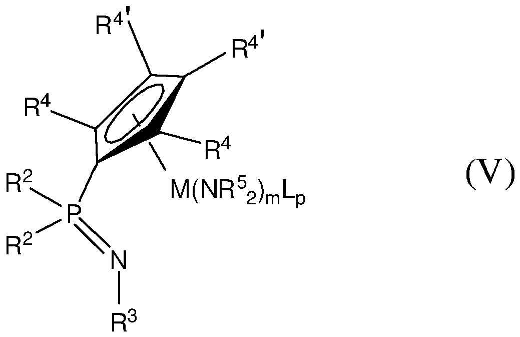 où m, p, R², R³, R⁴, R^{4'} et R⁵ et L ont les significations indiquées en la revendication 4.

6. Complexes de cyclopentadiénylphosphazène (complexes CpPN) de métaux du groupe III et IV et des lanthanides selon l'une des revendications 1 à 5, **caractérisés en ce qu'**il s'agit d'un complexe selon la formule (VI) 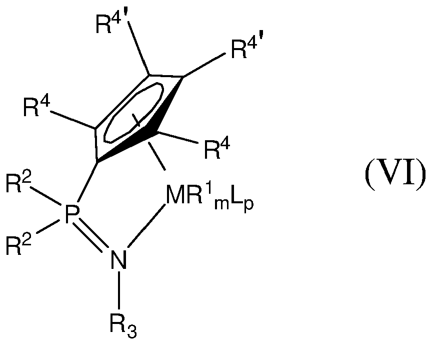 où m, p, R², R³, R⁴, R^{4'} et R⁵ et L ont les significations indiquées en la revendication 4.

7. Complexes de cyclopentadiénylphosphazène (complexes CpPN) de métaux du groupe III et IV et des lanthanides selon l'une des revendications 1 à 6, **caractérisés en ce qu'**il s'agit des complexes selon la formule (VII)
[(CpPN)MXₘ(thf)ₜ] (VII),
où
- CpPN = cyclopentadiénylphosphazène,
- X = fluorure, chlorure, bromure, iodure,
- t = 0, 1 ou 2, si le métal est un métal du groupe IV,
- t = 0, 1, 2 ou 3, si le métal est un métal du groupe III ou un lanthanide,
et M et m sont définis comme en la revendication 4.

8. Complexes de cyclopentadiénylphosphazène (complexes CpPN) de métaux du groupe III et IV et des lanthanides selon l'une des revendications 1 à 7, **caractérisés en ce qu'**il s'agit des complexes selon la formule (VIII),
[(CpPN)MR⁶ₘ₋₁(L)] ^{⊕} X^{⊝} (VIII),
où
- M = métal est choisi parmi le groupe Sc, Y, La, Ti, Zr, Hf, Ce, Pr, Nd, Pm, Sm, Eu, Gd, Tb, Dy, Ho, Er, Tm, Yb,
- CpPN = cyclopentadiénylphosphazène
- m = 3, si le métal est un métal du groupe IV et par conséquent est présent au degré d'oxydation +IV,
- m = 2, si le métal est un métal du groupe III ou un lanthanide et par conséquent est présent au degré d'oxydation +III,
et
les R⁶ représentent des ligands anioniques, qui sont choisis indépendamment les uns des autres parmi
- fluorure, chlorure, bromure, iodure, cyanure, cyanate, thiocyanate, azoture,
- -Me, -CH₂, CH₂CMe₂Ph, -CH₂CMe₃, -CH₂Ph, -CH₂SiMe₃,
- -O-aryle, -OSiMe₃,
- -OR⁵, -NR⁵₂,
où
R⁵ = représente un groupe alkyle ramifié ou non ramifié avec 1 à 10 atomes de carbone ou un groupe phényle,
et
L représente un ligand neutre, choisi parmi
- un éther (par exemple THF, éther diéthylique Et₂O, diméthoxyéthane DME), un thioéther, une amine tertiaire, pyridine
et
X⁻ est choisi parmi fluoroborate, tétraphénylborate, tétrakis-(3,5trifluorométhylphényl)-borate.

9. Complexes de cyclopentadiénylphosphazène (complexes CpPN) de métaux du groupe III et IV et des lanthanides selon l'une des revendications 1 à 8, **caractérisé en ce que** l'atome de métal est coordonné de manière homoléptique par rapport à ceux des ligands anioniques, qui ne représentent pas une unité de cyclopentadiénylphosphazène, où ces ligands anioniques sont choisis parmi le groupe -CH₂Ph, -CH₂SiMe₃ et NMe₂.

10. Procédé de production de complexes de cyclopentadiénylphosphazène (complexes CpPN) de métaux du groupe III et IV et des lanthanides selon l'une des revendications 1 à 9, **caractérisé en ce que** le procédé est réalisé in situ et comprend les étapes :
a) réaction d'un équivalent d'un halogénure métallique MX_{q} avec q équivalents d'un sel alcalin ou alcalino-terreux du ligand R¹ dans un éther à une température inférieure à -70°C, où
- X = F, Cl, Br, I est
- q = 3, si M est un métal du groupe III ou un lanthanide,
- q = 4, si M est un métal du groupe IV,
- et R¹ est défini comme en la revendication 4,
b) ensuite addition d'un équivalent cyclopentadiénylphosphazène protoné [CpPN]H.

11. Procédé de production de complexes de cyclopentadiénylphosphazène (complexes CpPN) de métaux du groupe III et IV et des lanthanides selon la revendication 9, **caractérisé en ce qu'**un équivalent de l'halogénure métallique MX_{q} est d'abord réagi avec un équivalent du ligand protoné [CpPN]H et qu'ensuite q équivalents d'un sel alcalin ou alcalino-terreux du ligand R¹ sont ajoutés.

12. Procédé de production de complexes de cyclopentadiénylphosphazène (complexes CpPN) de métaux du groupe III et IV et des lanthanides selon la revendication 9, **caractérisé en ce qu'**un équivalent d'un composé isolé MR⁷_{q} est réagi avec un équivalent du ligand protoné [CpPN]H dans un éther ou une amine aliphatique tertiaire à des températures inférieures à -70°C,
où R⁷ est choisi parmi
- -Me, -CH₂, CH₂CMe₂Ph, -CH₂CMe₃, -CH₂Ph, -CH₂SiMe₃,
- -O-aryle, -OSiMe₃,
- -OR⁵, -NR⁵₂,
où
R⁵ = un groupe alkyle ramifié ou non ramifié avec 1 à 10 atomes de carbone ou un groupe phényle, et
q est défini comme en la revendication 10.

13. Procédé de production de complexes CpPN cationiques selon la revendication 7, **caractérisé en ce que** le complexe correspondant [(CpPN)MR⁶ₘ] est réagi avec un réactif générant des cations.

14. Utilisation de complexes CpPN neutres 1 à 6 et 9 comme catalyseurs pour la polymérisation d'oléfines.

15. Utilisation de complexes CpPN cationiques selon l'une des revendications 7 et 9 en tant que catalyseurs pour l'hydroamination d'oléfines.
